# EUROPEAN PATENT SPECIFICATION

(11) **EP 3 757 192 B1**
(45) Date of publication and mention of the grant of the patent: **04.11.2026**
(21) Application number: 20181815.0
(22) Date of filing: 24.06.2020
(51) Int. Cl.: C09K 19/02, C09K 19/30, C09K 19/20, C09K 19/34

(54) **LIQUID CRYSTALLINE MEDIUM**
FLÜSSIGKRISTALLINES MEDIUM
MATIÈRE À BASE DE CRISTAUX LIQUIDES

(30) Priority: 28.06.2019 EP 19183112
(43) Date of publication of application: 30.12.2020
(73) Proprietor: Merck Patent GmbH, 64293 Darmstadt (DE)
(72) Inventor: Han, Yeon-Jeong, GUNPO-SI, GYEONGGI-DO 15866 (KR); Kim, Dong-Hyun, PYEONGTAEK 459-822 (KR); Jin, Heui-Seok, YONGIN-SI, GYEONGGI-DO 16811 (KR); Choi, Chang-Suk, ASAN-SI, CHUNGCHEONGNAM-DO 31575 (KR)
(74) Representative: Merck Patent Association

(56) References cited:
- EP-A1- 3 127 989
- EP-A1- 3 127 991
- EP-A1- 3 275 973
- EP-A1- 3 375 842
- EP-A2- 2 628 779
- EP-A2- 3 246 374
- WO-A1-2015/169425
- WO-A1-2016/008568
- WO-A1-2016/177445
- WO-A1-2016/206772
- WO-A1-2016/206774
- WO-A1-2018/001919
- WO-A1-2019/110458
- WO-A1-2019/110459
- DE-A1- 102011 106 314
- US-A1- 2012 256 124
- US-A1- 2013 327 984
- US-A1- 2014 306 158
- US-A1- 2018 223 187

## Description

The present invention relates to LC (LC) media and to LC displays (LCDs) containing these media, especially to LCDs addressed by an active matrix and in particular to LCDs of the IPS, PS-IPS, FFS, PS-FFS, HB-FFS, U-IPS, TN, PS-TN, STN or TN-TFT mode.

LCDs are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is substantially perpendicular to the substrates or the LC layer. Besides these modes, there are also electro-optical modes that utilise an electric field which is substantially parallel to the substrates or the LC layer, such as, for example, the in-plane switching (IPS) mode (as disclosed, for example, in DE 40 00 451 and EP 0 588 568) and the fringe field switching (FFS) mode, in which a strong "fringe field" is present, i.e. a strong electric field close to the edge of the electrodes and, throughout the cell, an electric field which has both a strong vertical component and a strong horizontal component. These latter two electro-optical modes in particular are used for LCDs in modern desktop monitors and displays for TV sets and multimedia applications. The liquid crystals according to the present invention are preferably used in displays of this type. In general, dielectrically positive LC media having rather lower values of the dielectric anisotropy are used in FFS displays, but in some cases LC media having a dielectric anisotropy of only about 3 or even less are also used in IPS displays. LC media having positive dielectric anisotropy are known from WO 2015/169425 A1, WO 2019/110458 A1, WO 2016/008568 A1, WO 2019/110459 A1, DE 10 2011 106314 A1, for instance.

A further development are displays of the so-called PS ("polymer sustained") or PSA ("polymer sustained alignment") type, for which the term "polymer stabilised" is also occasionally used. In these, a small amount (for example 0.3% by weight, typically < 1% by weight) of one or more polymerisable, compound(s), preferably polymerisable monomeric compound(s), is added to the LC medium and, after filling the LC medium into the display, is polymerised or crosslinked in situ, usually by UV photopolymerisation, optionally while a voltage is applied to the electrodes of the display. The polymerisation is carried out at a temperature where the LC medium exhibits an LC phase, usually at room temperature. The addition of polymerisable mesogenic or LC compounds, also known as reactive mesogens or "RMs", to the LC mixture has proven particularly suitable.

For these displays, novel LC media having improved properties are required. The addressing times in particular have to be improved for many types of application. Thus, LC media having lower viscosities (η), especially having lower rotational viscosities (γ₁), are required. Besides these viscosity parameters, the media must have a nematic phase range of suitable width and position and an appropriate birefringence (Δn), and the dielectric anisotropy (Δε) should be sufficiently high to allow a reasonably low operating voltage.

The displays according to the present invention are preferably addressed by an active matrix (active matrix LCDs, AMDs for short), preferably by a matrix of thin film transistors (TFTs). However, the liquid crystals according to the invention can also advantageously be used in displays having other known addressing means.

LC media which are suitable for LCDs and especially for IPS displays are known, for example, from JP 07-181 439 (A), EP 0 667 555, EP 0 673 986, DE 195 09 410, DE 195 28 106, DE 195 28 107, WO 96/23 851 and WO 96/28 521. However, these LC media have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

Especially in case of LC media for use in the expanding market of public information displays (PIDs) and automotive displays a high reliability and a wide operating range are highly important factors. For these applications LC media with high clearing temperature (Tni), good LTS (Low Temperature Stability) and high reliability are therefore desired.

The invention has the object of providing media, in particular for FFS, IPS, TN or STN displays of this type, in particular for active matrix displays like those of the TFT (thin film transistor) type, which do not exhibit the disadvantages indicated above or only do so to a lesser extent and preferably exhibit one or more of a wide operating range, a high clearing temperature, a high reliability, a low threshold voltage, a high dielectric anisotropy, a good low temperature stability (LTS), a low rotational viscosity and fast response times.

This object was achieved by providing an LC medium as described and claimed hereinafter.

The invention relates to an LC medium with positive dielectric anisotropy, characterised in that it contains one or more compounds of formula I in a concentration of >0 and ≤10% 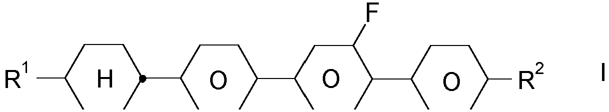 in which R¹ and R² independently of each other denote alkyl having 1 to 6 C atoms,
and at least one compound of formula XII,
and further characterised in that it does not contain any compounds of the following formulae Xllla, Xlllb and XIV as in claim 1 and defined below.

Preferably the LC medium has a birefringence <0.15, more preferably from 0.8 to 0.15.

The invention further relates to the use of an LC medium as described above and below for electro-optical purposes, in particular for the use in shutter glasses, for 3D applications, in IPS, PS-IPS, FFS, PS-FFS, HB-FFS, U-IPS, TN, PS-TN, STN or TN-TFT displays.

The invention further relates to an electro-optical LC display containing an LC medium as described above and below, in particular an IPS, PS-IPS, FFS, PS-FFS, HB-FFS, U-IPS, TN, PS-TN, STN or TN-TFT display.

The invention furthermore relates to a process for preparing an LC medium as described above and below, comprising the steps of mixing one or more compounds of formula I with one or more further LC compounds and optionally one or more additives.

In the present application, all atoms also include their isotopes. In particular, one or more hydrogen atoms (H) may be replaced by deuterium (D), which is particularly preferred in some embodiments; a high degree of deuteration enables or simplifies analytical determination of compounds, in particular in the case of low concentrations.

If R⁰ denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy. R⁰ preferably denotes straight-chain alkyl having 2-6 C atoms.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxa-decyl.

If R⁰ denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, - 2-, -3-, -4- or -5-enyl, hept-1-, -2-, -3-, -4-, -5- or -6-enyl, oct-1-, -2-, -3-, -4-, - 5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If R⁰ denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In the formulae above and below, X⁰ is preferably F, Cl or a mono- or polyfluorinated alkyl or alkoxy radical having 1, 2 or 3 C atoms or a mono- or polyfluorinated alkenyl radical having 2 or 3 C atoms. X⁰ is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCCIFCF₂CF₃, OCH=CF₂ or CH=CF₂, very particularly preferably F or OCF₃, furthermore CF₃, OCF=CF₂, OCHF₂ or OCH=CF₂.

Particular preference is given to compounds in which X⁰ denotes F or OCF₃, preferably F.

In the compounds of formulae I R' and R² are preferably selected from ethyl, propyl, butyl and pentyl, all of which are straight-chain.

Preferred compounds of the formula I are selected from the following subformulae.

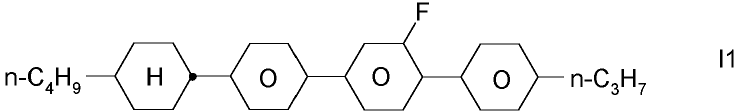

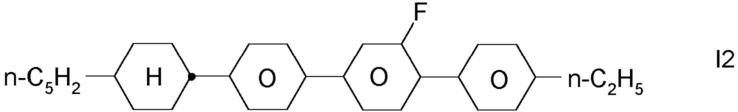

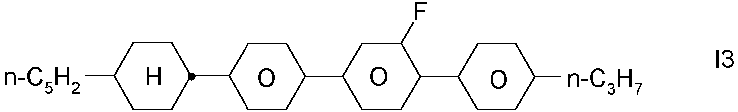

Very preferred are compounds of formula I2.

The concentration of the compounds of formula I and its subformulae in the LC medium is preferably from 0.2 to 10%, more preferably from 1.0 to 10%, very preferably from 1.0 to 8%.

Preferably the LC medium contains 1, 2 or 3 compounds of formula I or its subformulae.

Further preferred embodiments of an LC medium according to the present invention are indicated below, including any combination thereof:
- The medium additionally comprises one or more compounds selected from the following formulae 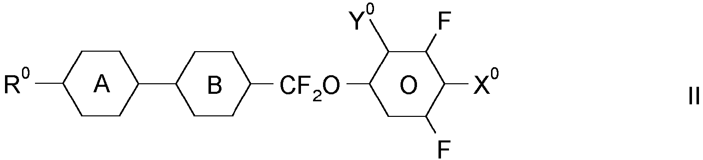 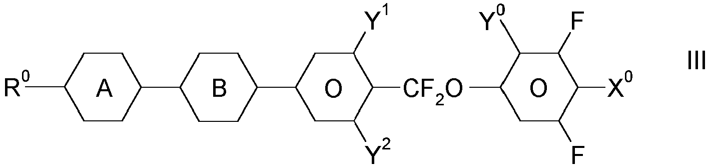 wherein the individual radicals, independently of each other and on each occurrence identically or differently, have the following meanings 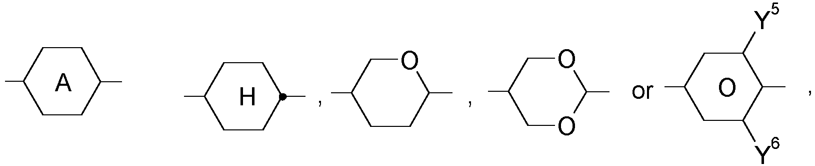 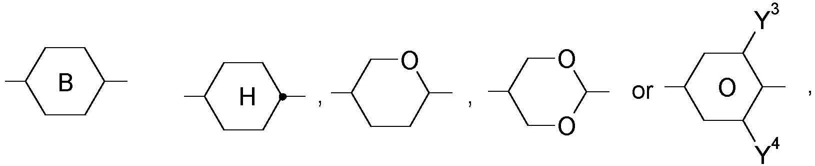
   - R⁰: an unsubstituted or halogenated alkyl or alkoxy radical having 1 to 15 C atoms, where, in addition, one or more CH₂ groups in these radicals may each be replaced, independently of one another, by -C≡C-, -CF₂O-, -CH=CH-, 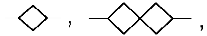 -O-, - CO-O- or -O-CO- in such a way that O atoms are not linked directly to one another, or denotes 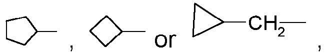
   - X⁰: F, Cl, CN, SF₅, SCN, NCS, a halogenated alkyl radical, a halogenated alkenyl radical, a halogenated alkoxy radical or a halogenated alkenyloxy radical having up to 6 C atoms, and
   - Y⁰: H or CH₃,
   - Y¹⁻⁶: H or F.
   In the compounds of formulae II and III and their subformulae R⁰ preferably denotes straight-chain alkyl having 1 to 6 C atoms, in particular methyl, ethyl or propyl, furthermore alkenyl having 2 to 6 C atoms, in particular vinyl, 1E-propenyl, 1E-butenyl, 3-butenyl, 1E-pentenyl, 3E-pentenyl or 4-pentenyl.
- The LC medium comprises one or more compounds of formula II wherein Y⁰ is H, preferably selected from the group consisting of the following subformulae 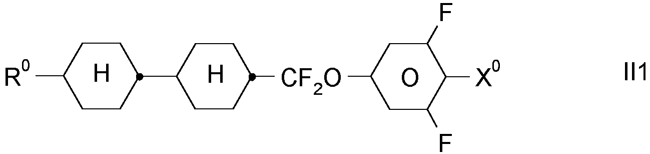 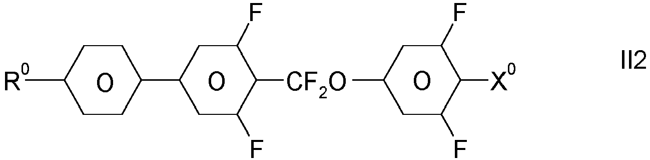 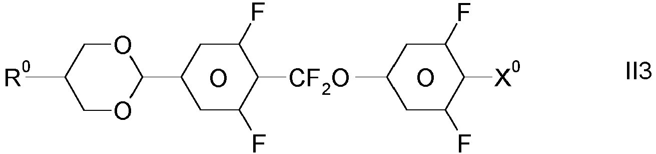 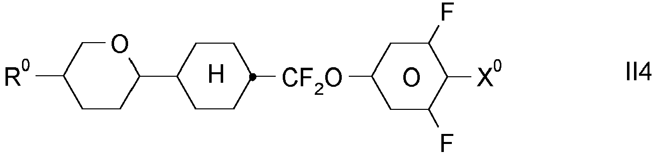 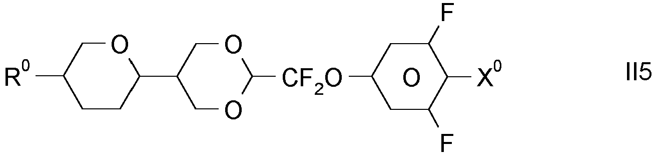 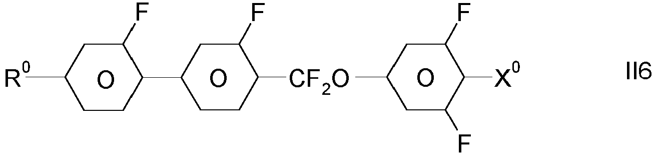 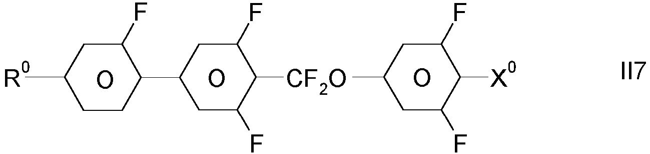 in which R⁰ and X⁰ have the meanings given above.
   Preferred compounds are those of formula II1, II2 and II3, very preferred those of formula II1 and II2.
   In the compounds of formulae II1 to II7 R⁰ preferably denotes alkyl having 1 to 6 C atoms, very preferably ethyl or propyl, and X⁰ preferably denotes F or OCF₃, very preferably F.
- The medium comprises one or more compounds of formula II wherein Y⁰ is CH₃, preferably selected from the group consisting of the following subformulae 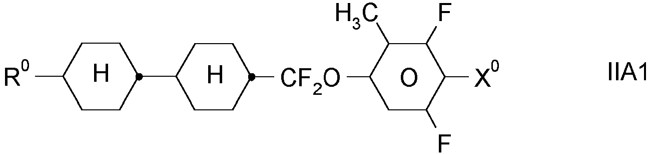 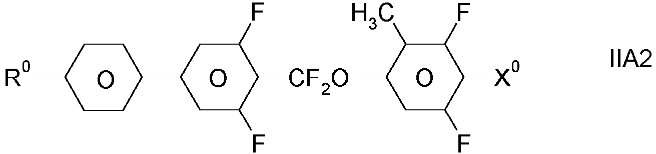 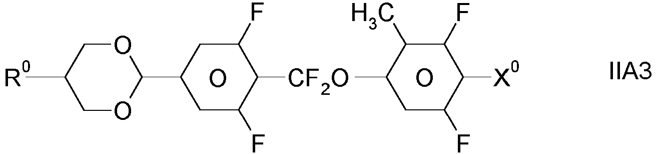 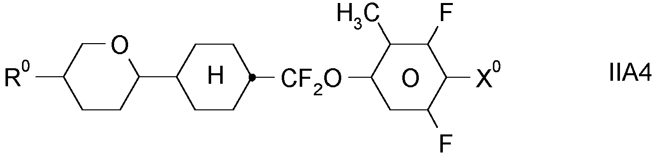 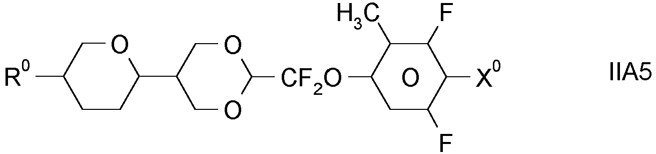 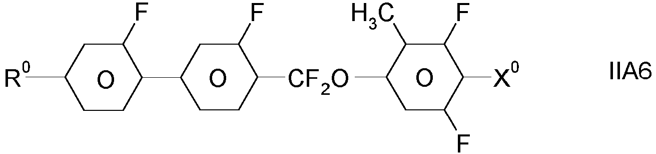 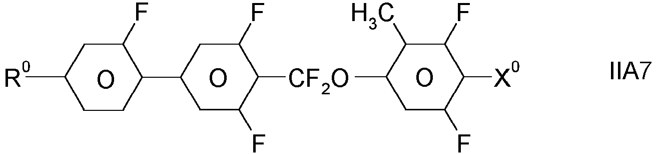 in which R⁰ and X⁰ have the meanings given above.
   Preferred compounds are those of formula IIA1, IIA2 and IIA3, very preferred those of formula IIA1 and IIA2.
   In the compounds of formulae IIA1 to IIA7 R⁰ preferably denotes alkyl having 1 to 6 C atoms, very preferably ethyl or propyl, and X⁰ preferably denotes F or OCF₃, very preferably F.
- The medium comprises one or more compounds of formula III wherein Y⁰ is H, preferably selected from the group consisting of the following subformulae 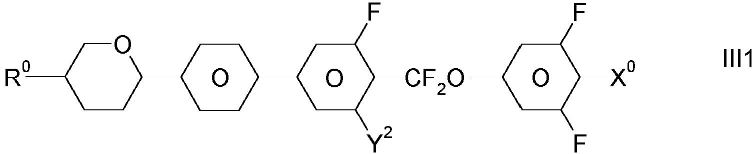 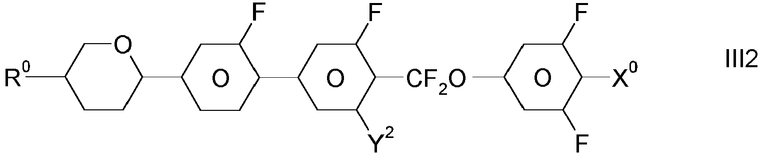 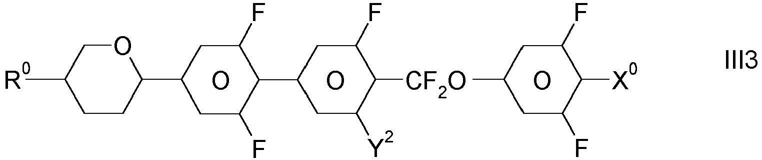 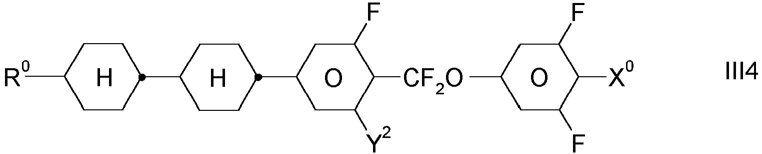 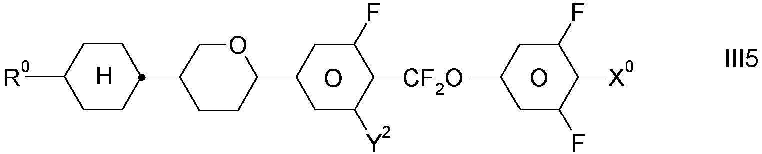 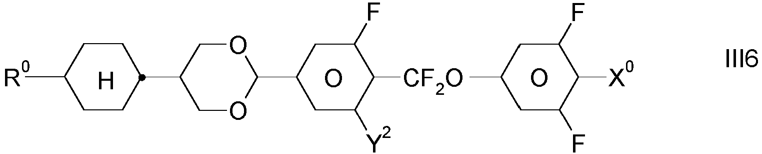 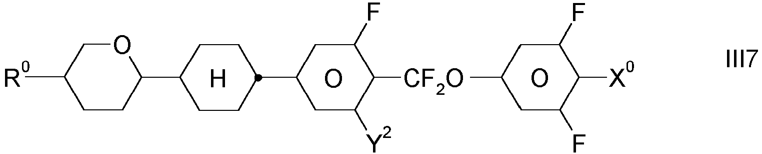 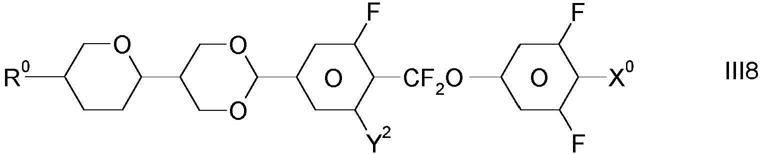 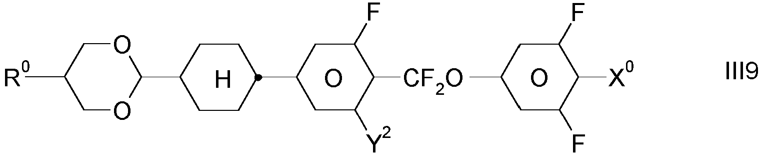 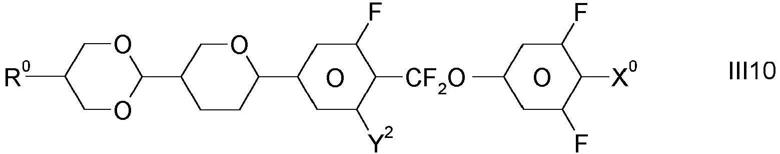 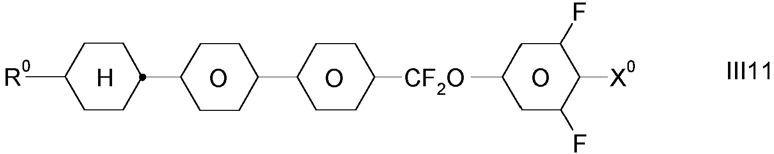 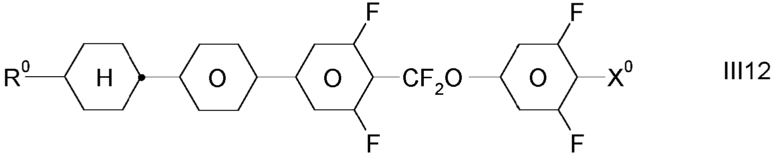 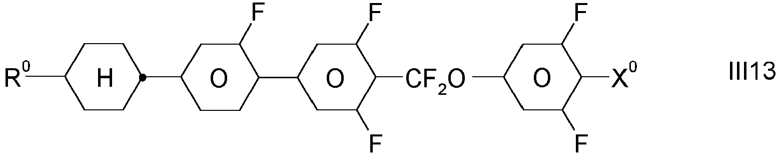 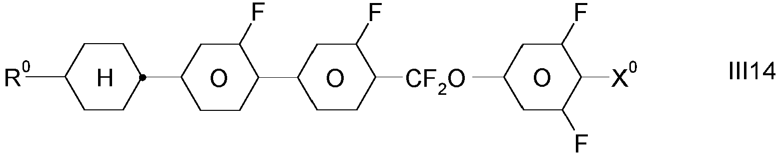 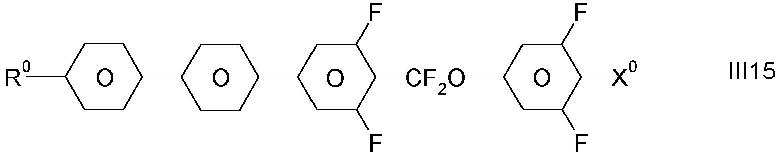 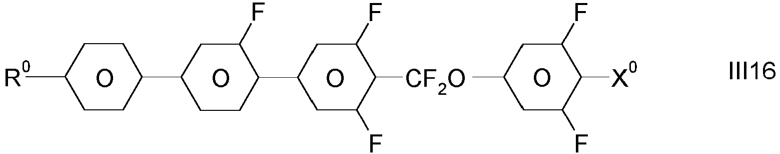 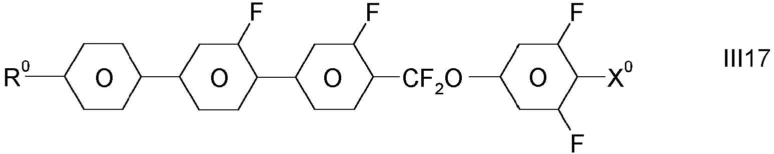 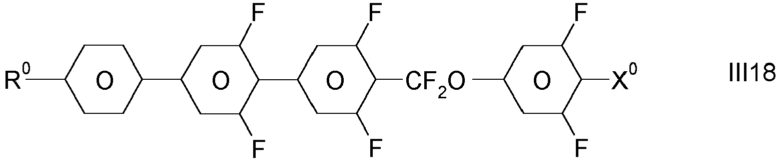 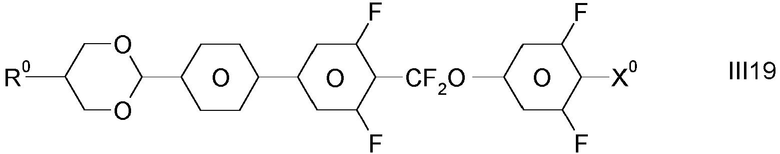 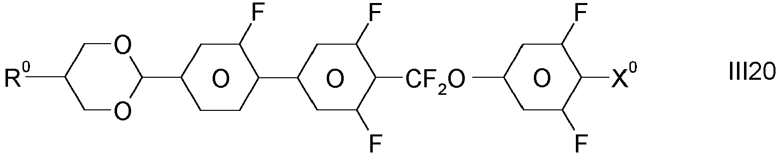 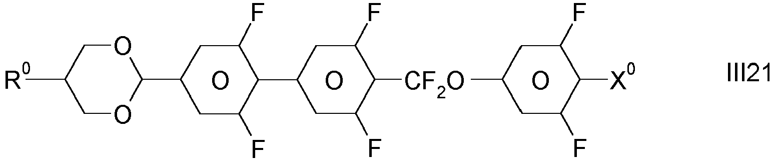 in which R⁰ and X⁰ have the meanings given above.
   Preferred compounds are those of formula III1, III4, III6, III16, III19 and III20.
   In the compounds of formulae III1 to III21 R⁰ preferably denotes alkyl having 1 to 6 C atoms, very preferably ethyl or propyl, X⁰ preferably denotes F or OCF₃, very preferably F, and Y² preferably denotes F.
- The medium comprises one or more compounds of formula III wherein Y⁰ is CH₃, preferably selected from the group consisting of the following subformulae 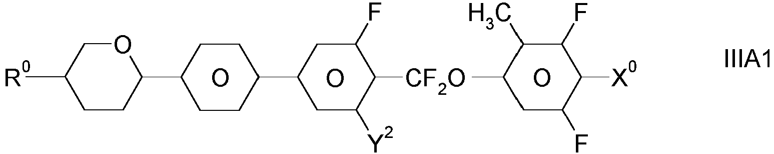 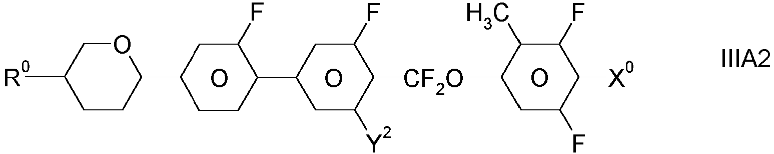 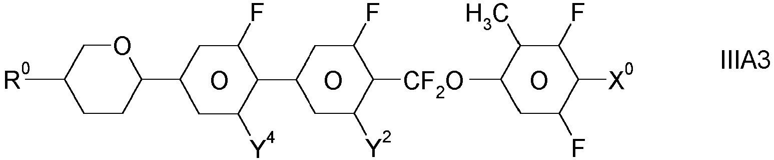 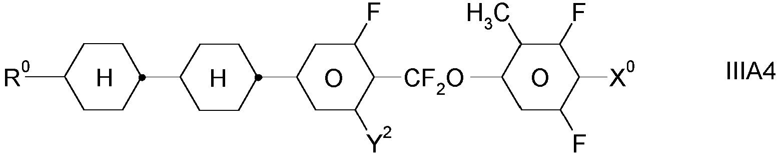 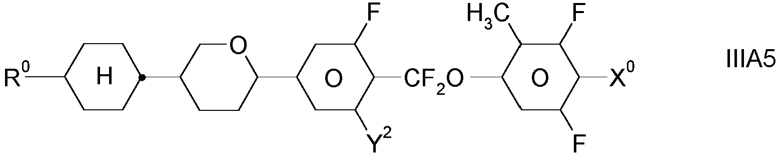 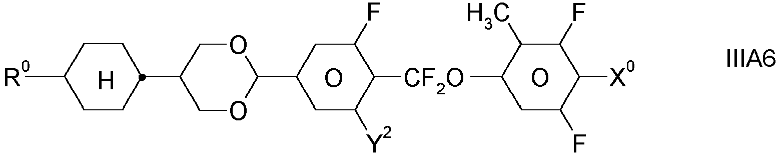 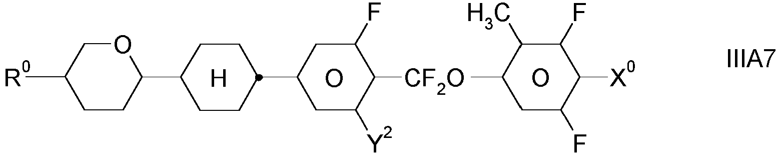 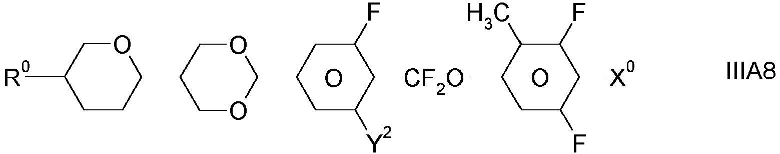 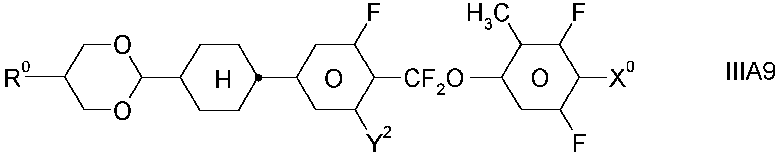 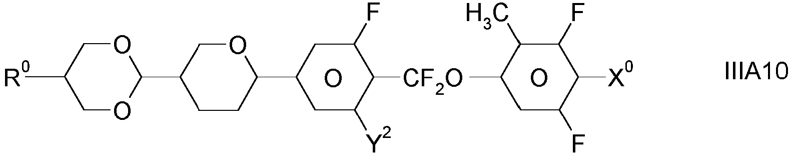 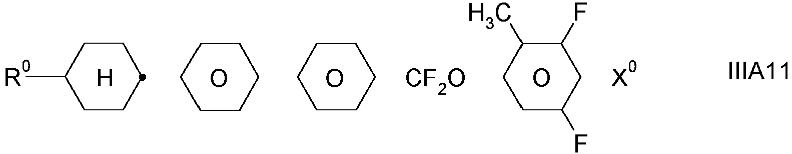 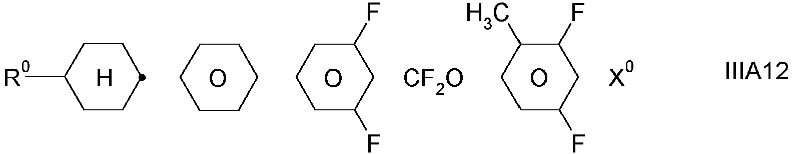 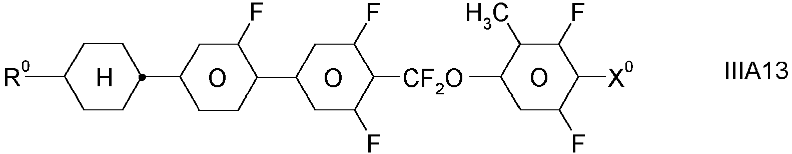 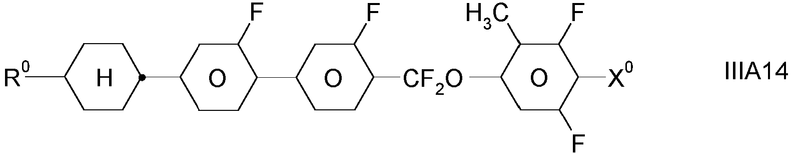 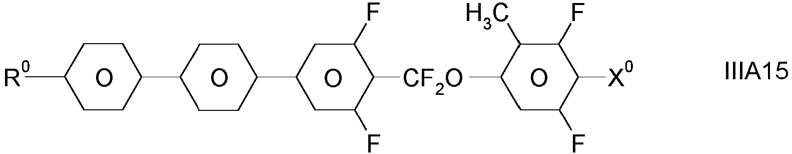 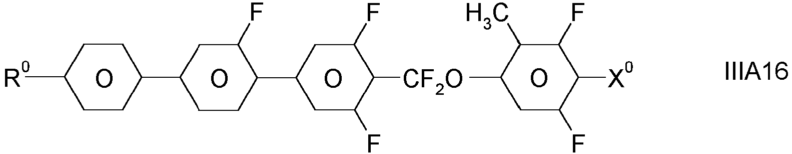 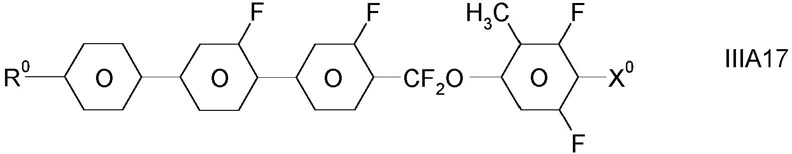 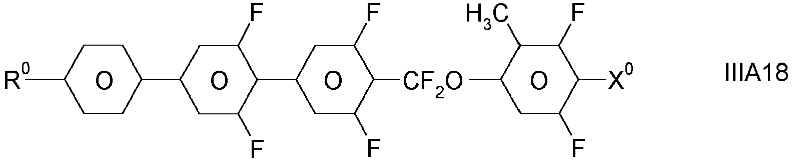 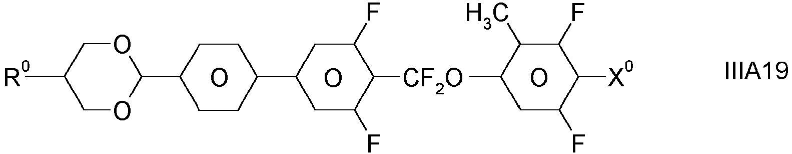 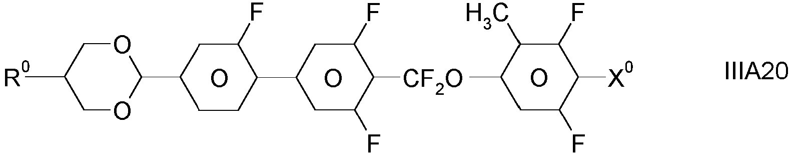 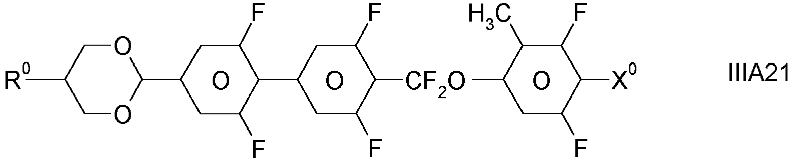 in which R⁰ and X⁰ have the meanings given above.
   Preferred compounds are those of formula IIIA1, IIIA4, IIIA6, IIIA16, IIIA19 and IIIA20.
   In the compounds of formulae IIIA1 to IIIA21 R⁰ preferably denotes alkyl having 1 to 6 C atoms, very preferably ethyl or propyl, X⁰ preferably denotes F or OCF₃, very preferably F, and Y² preferably denotes F.
- The medium additionally comprises one or more compounds selected from the following formulae: 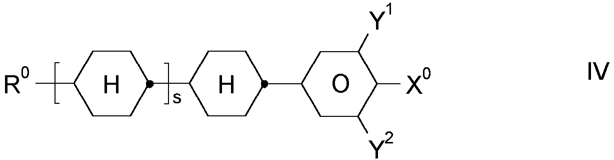 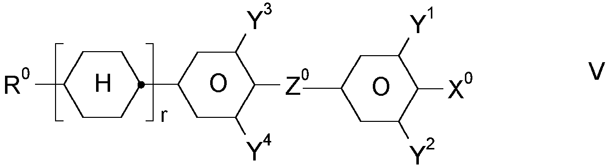 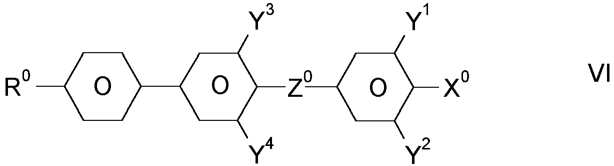 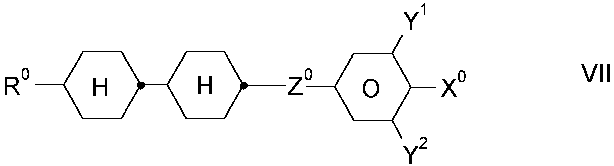 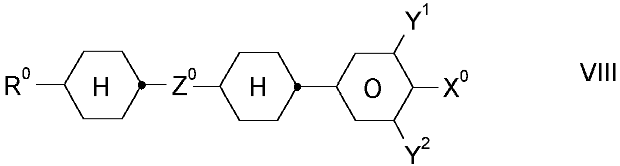 in which
   - R⁰, X⁰ and Y¹⁻⁴: have the meanings indicated above, and
   - Z⁰: denotes -C₂H₄-, -(CH₂)₄-, -CH=CH-, -CF=CF-, -C₂F₄-, -CH₂CF₂-, - CF₂CH₂-, -CH₂O-, -OCH₂-, -COO- or -OCF₂-, in formulae V and VI also a single bond, in formulae V and VIII also -CF₂O-,
   - r: denotes 0 or 1, and
   - s: denotes 0 or 1;
- The medium comprises one or more compounds of the formula IV selected from the following subformulae: 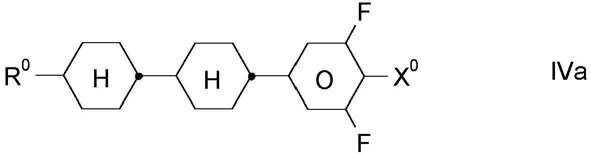 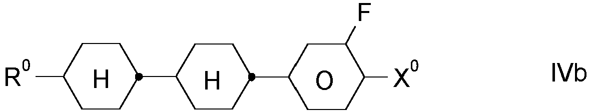 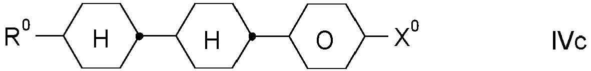 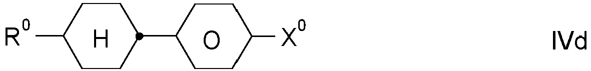 in which R⁰ and X⁰ have the meanings indicated above.
   R⁰ preferably denotes alkyl having 1 to 6 C atoms. X⁰ preferably denotes F or OCF₃, furthermore OCF=CF₂ or Cl;
- The medium comprises one or more compounds of the formula IVa selected from the following subformula: 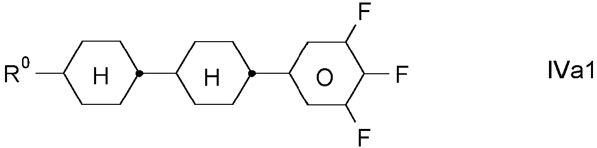 in which R⁰ has the meanings indicated above and is preferably propyl or pentyl.
- The medium comprises one or more compounds of the formula IVc selected from the following subformula: 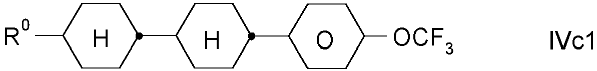 in which R⁰ has the meanings indicated above and is preferably propyl or pentyl.
- The medium comprises one or more compounds of the formula V selected from the following subformulae: 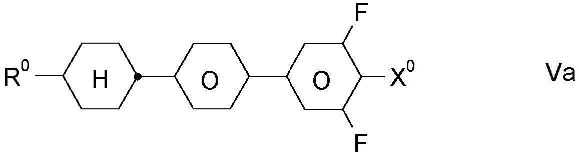 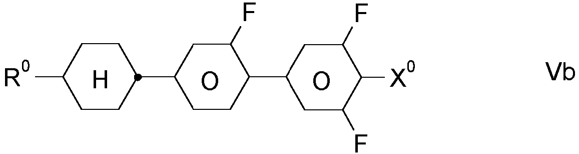 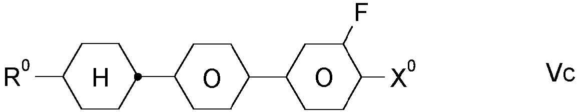 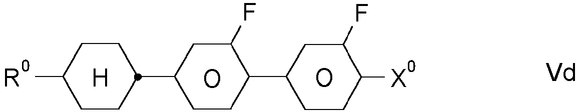 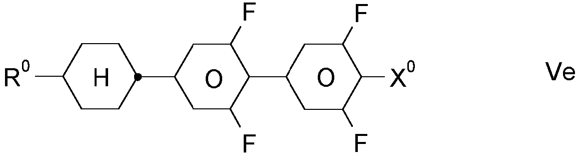 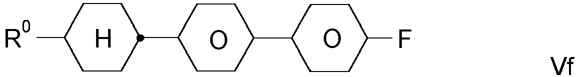 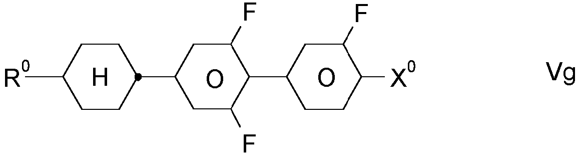 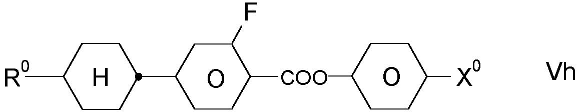 in which R⁰ and X⁰ have the meanings indicated above.
   R⁰ preferably denotes alkyl having 1 to 6 C atoms. X⁰ preferably denotes F and OCF₃, furthermore OCHF₂, CF₃, OCF=CF₂ and OCH=CF₂;
- The medium comprises one or more compounds of the formula VI selected from the following subformulae: 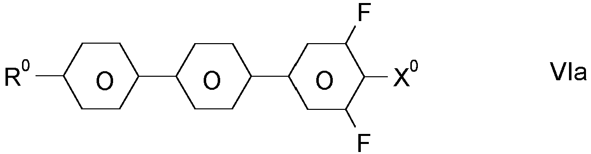 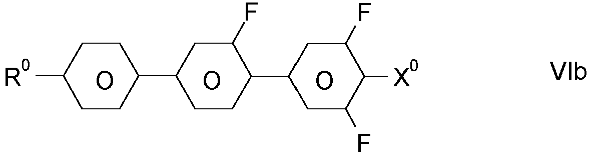 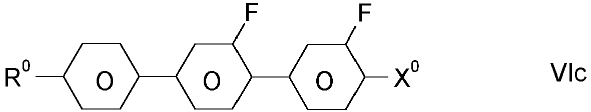 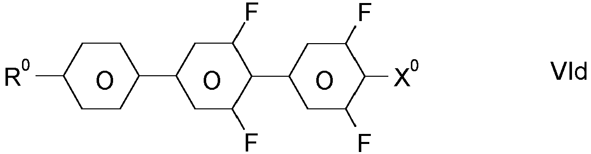 in which R⁰ and X⁰ have the meanings indicated above.
   R⁰ preferably denotes alkyl having 1 to 6 C atoms. X⁰ preferably denotes F, furthermore OCF₃, CF₃, CF=CF₂, OCHF₂ and OCH=CF₂;
- The medium comprises one or more compounds of the formula VII selected from the following subformulae: 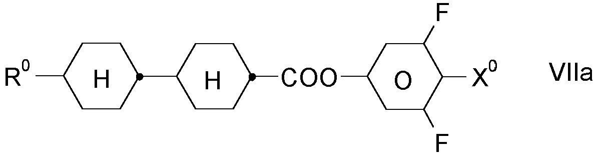 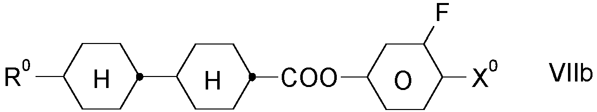 in which R⁰ and X⁰ have the meanings indicated above.
   R⁰ preferably denotes alkyl having 1 to 6 C atoms. X⁰ preferably denotes F, furthermore OCF₃, OCHF₂ and OCH=CF₂.
- The medium additionally comprises one or more compounds selected from the following formulae: 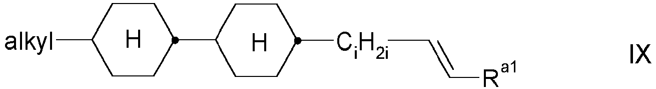 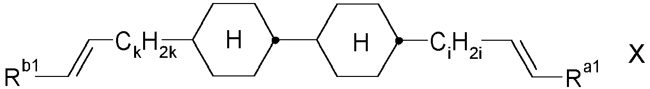 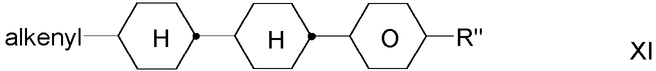 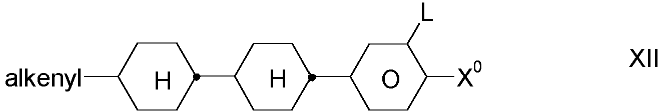 in which X⁰ has the meanings indicated above, and
   - "alkyl": denotes C₁₋₆-alkyl,
   - "alkenyl": denote C₂₋₆-alkenyl,
   - L: denotes H or F,
   - R": denotes C₁₋₆-alkyl, C₁₋₆-alkoxy or C₂₋₆-alkenyl,
   - R^{a1}, R^{b1}: denote independently of each other CH₃ or C₂H₅,
   - i, k: are independently of each other 0, 1, 2 or 3,
- The medium comprises one or more compounds of the formulae IX-XII selected from the following subformulae: 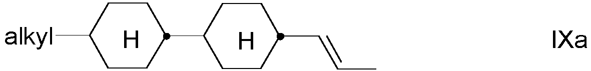 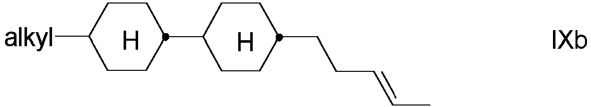 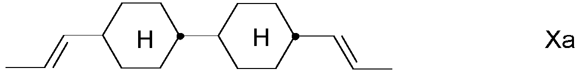 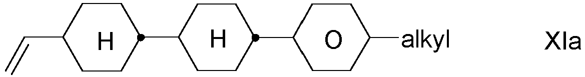 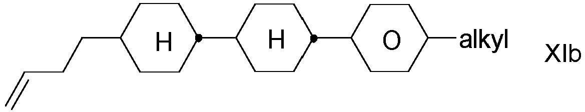 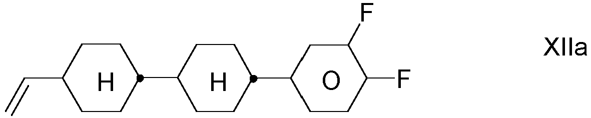 wherein "alkyl" has the meaning given in formula IX.
   In formula IX, IXa and IXb "alkyl" preferably denotes C₂H₅, n-C₃H₇, n-C₄H₉ or n-C₅H₁₁, in particular n-C₃H₇.
   In formula IXa and IXb "alkyl" preferably denotes CH₃ or C₂H₅, in particular CH₃.
- The medium comprises one or more compounds of formulae IX-XII selected from the following subformulae; 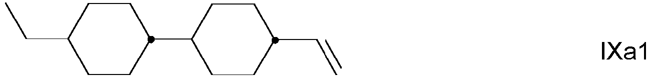 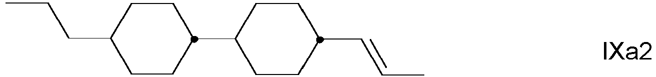 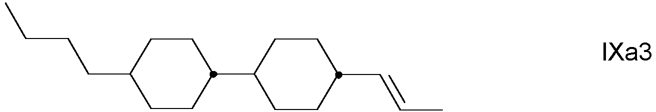 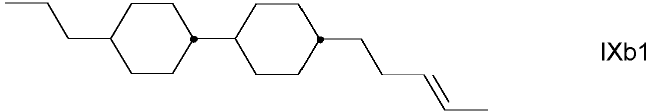 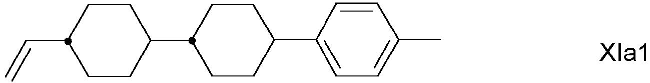 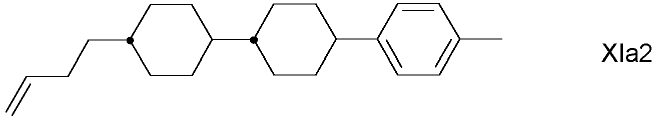 Very preferred are compounds of formula IXa2, IXb1, XIa1 and XIa2.
- The medium, according to the invention, does not contain any compounds of the following formulae: 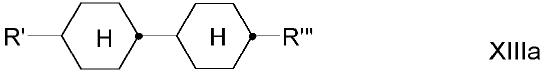 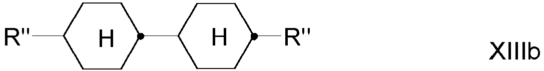 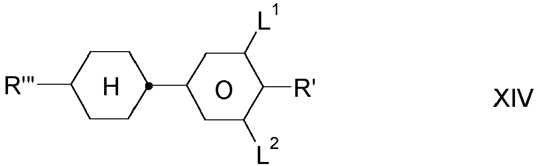 in which L¹ and L² denote independently of one another H or F, R' denotes on each occurrence identically or differently alkyl,or alkoxy with 1 to 12 C atoms, R" denotes on each occurrence identically or differently alkenyl with 2 to 7 C atoms which contains a terminal vinyl group, and R‴ denotes R' or R".
- The medium additionally comprises one or more compounds selected from the following formula: 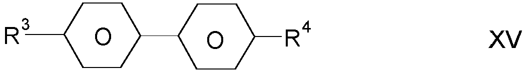 in which R³ and R⁴ each, independently of one another, denote n-alkyl, alkoxy, oxaalkyl, fluoroalkyl or alkenyl, each having up to 6 C atoms, and preferably each, independently of one another, denote alkyl having 1 to 6 C atoms or alkenyl having 2 to 6 C atoms.
- The medium comprises one or more compounds of the formula XV selected from the following subformulae: 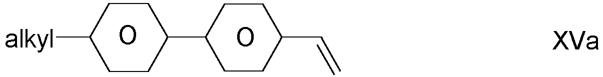 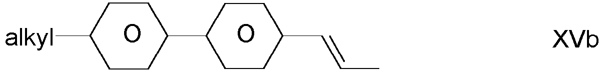 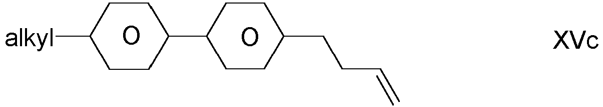 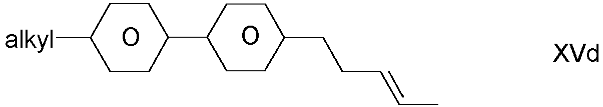 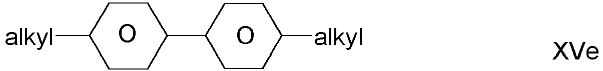 in which "alkyl" has the meaning indicated above, and preferably denotes methyl, ethyl or propyl.
- The medium comprises one or more compounds of the formula XV selected from the following subformulae: 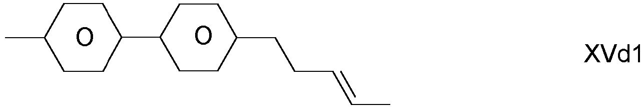 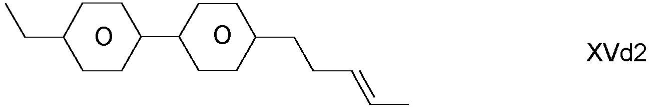 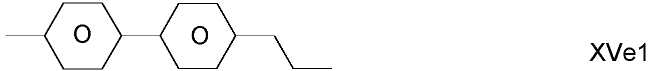 Very preferred are compounds of formula XVd1 and XVe1.
- The medium comprises one or more compounds of the formula XVI, 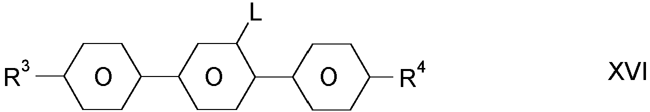 in which L, R³ and R⁴ have the meanings indicated above and preferably each, independently of one another, denote alkyl having 1 to 6 C atoms.
   Particularly preferred compounds of the formula XVI are those of the sub-formulae 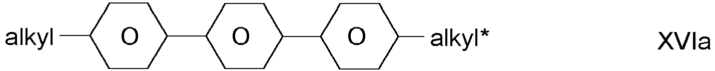 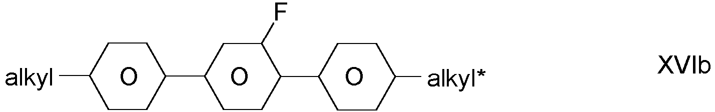 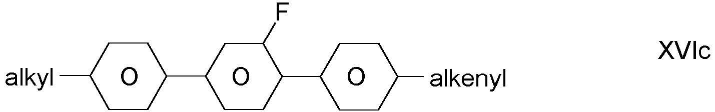 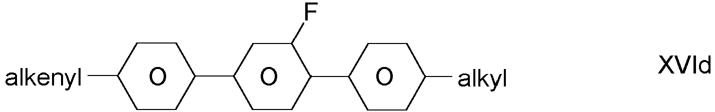 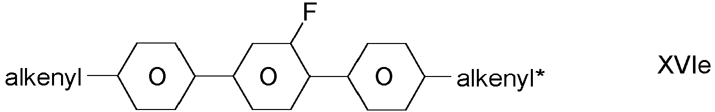 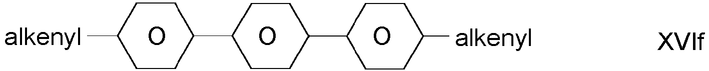 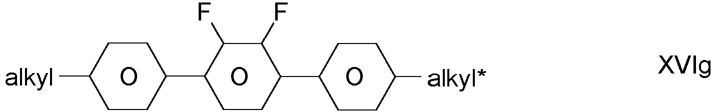 in which
   - alkyl and alkyl*: each, independently of one another, denote a straight-chain alkyl radical having 1-6 C atoms, in particular ethyl, propyl or pentyl,
   - alkenyl and alkenyl*: each, independently of one another, denote a straight-chain alkenyl radical having 2-6 C atoms, in particular CH₂=CHC₂H₄, CH₃CH=CHC₂H₄, CH₂=CH and CH₃CH=CH.
   Particular preference is given to the compounds of the formulae XVIb, XVIc and XVIg. Very particular preference is given to the compounds of the formulae 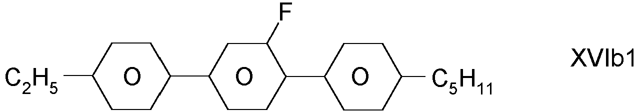 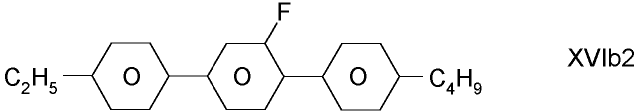 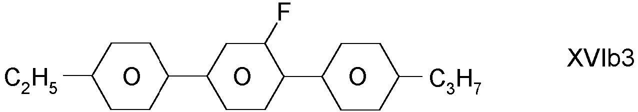 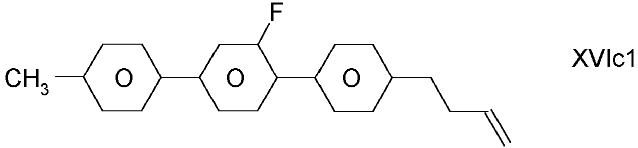 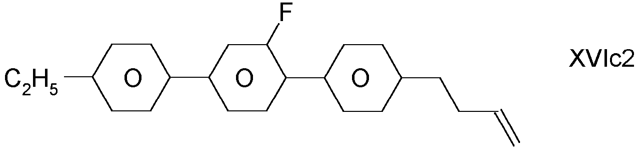 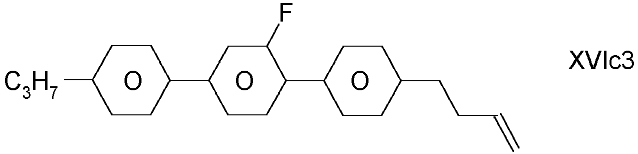 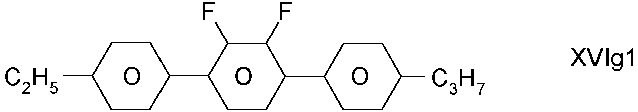 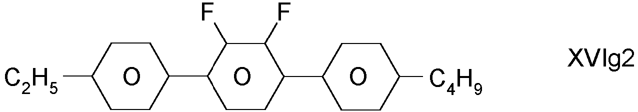 Very preferred are compounds of formula XVIc2, XVIg1 and XVIg2;
- The medium comprises one or more compounds of the following formula: 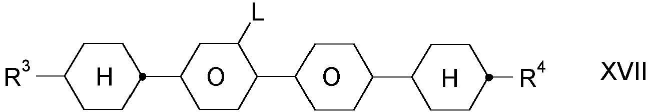 in which R³ and R⁴ have the meanings indicated above and preferably each, independently of one another, denote alkyl having 1 to 6 C atoms. L denotes H or F;
- The medium additionally comprises one or more compounds selected from the following formulae: 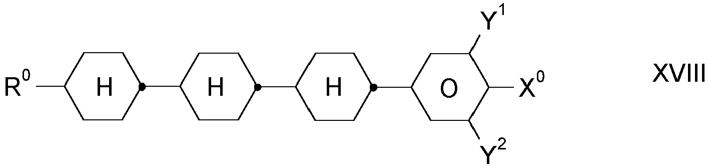 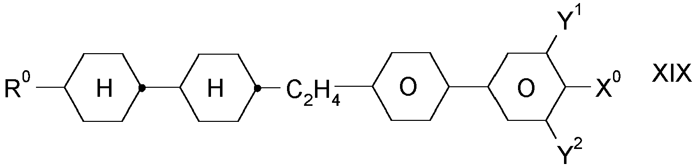 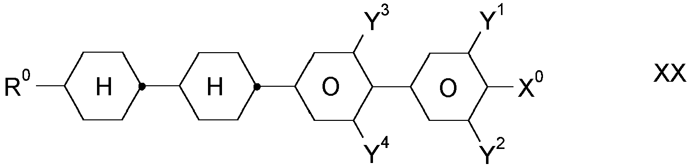 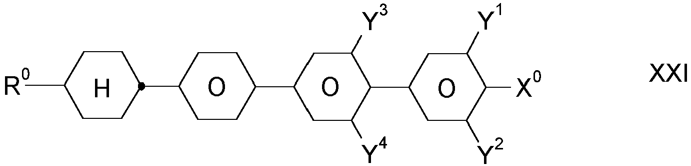 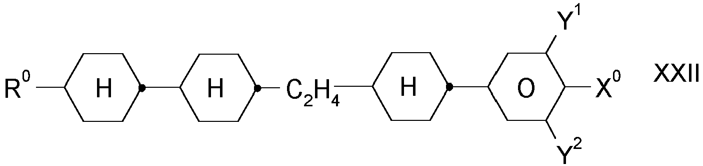 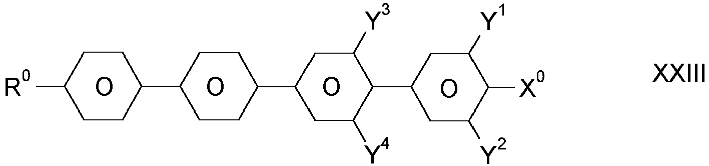 in which R⁰ and X⁰ each, independently of one another, have one of the meanings indicated above, and Y¹⁻⁴ each, independently of one another, denote H or F. X⁰ is preferably F, Cl, CF₃, OCF₃ or OCHF₂. R⁰ preferably denotes alkyl, alkoxy, oxaalkyl, fluoroalkyl or alkenyl, each having up to 6 C atoms.
   Very preferably the mixture according to the invention comprises one or more compounds of the formula XXIa, 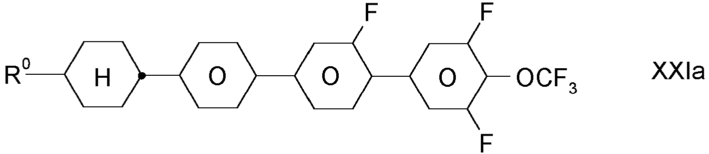 in which R⁰ has the meanings indicated above. R⁰ preferably denotes straight-chain alkyl, in particular ethyl, n-propyl, n-butyl and n-pentyl and very particularly preferably n-propyl. The compound(s) of the formula XXI, in particular of the formula XXIa, is (are) preferably employed in the mixtures according to the invention in amounts of 1-15% by weight, particularly preferably 2-10% by weight.
   Further preferably the mixture according to the invention comprises one or more compounds of the formula XXIIIa, 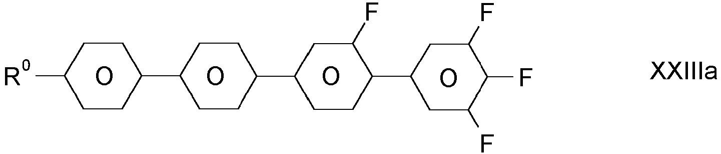 in which R⁰ has the meanings indicated above. R⁰ preferably denotes straight-chain alkyl, in particular ethyl, n-propyl, n-butyl and n-pentyl and very particularly preferably n-propyl. The compound(s) of the formula XXIII, in particular of the formula XXIIIa, is (are) preferably employed in the mixtures according to the invention in amounts of 0.5-10% by weight, particularly preferably 0.5-5% by weight.
- The medium additionally comprises one or more compounds of the formula XXIV, 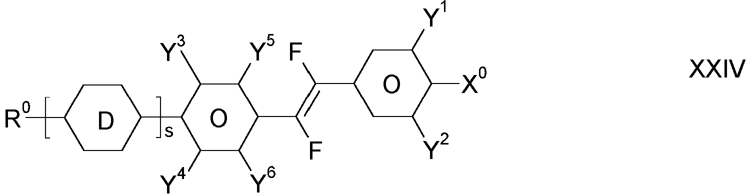 in which R⁰, X⁰ and Y¹⁻⁶ have the meanings indicated in formula I, s denotes 0 or 1, and 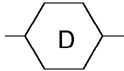 denotes 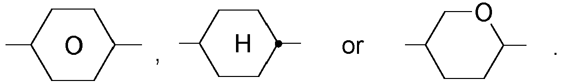 In the formula XXIV, X⁰ may also denote an alkyl radical having 1-6 C atoms or an alkoxy radical having 1-6 C atoms. The alkyl or alkoxy radical is preferably straight-chain.
   R⁰ preferably denotes alkyl having 1 to 6 C atoms. X⁰ preferably denotes F;
- The compounds of the formula XXIV are preferably selected from the following formulae: 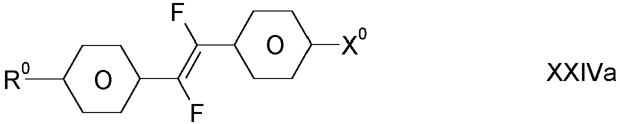 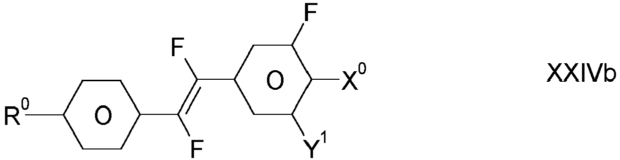 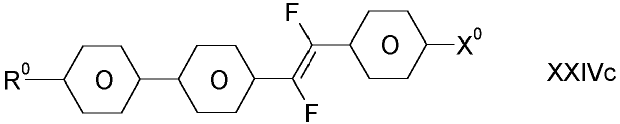 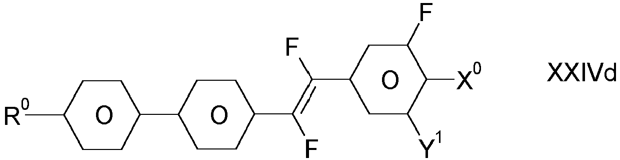 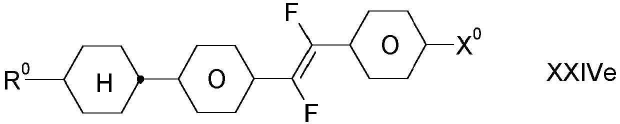 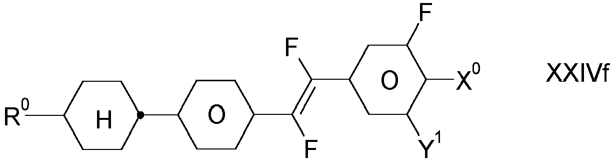 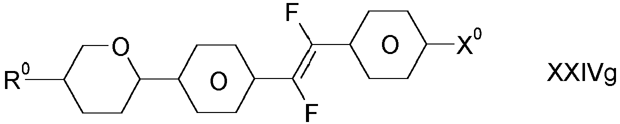 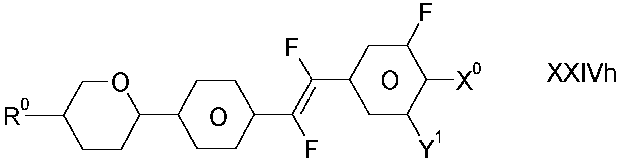 in which R⁰, X⁰ and Y¹ have the meanings indicated above. R⁰ preferably denotes alkyl having 1 to 6 C atoms. X⁰ preferably denotes F, and Y' is preferably F; 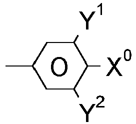 is preferably 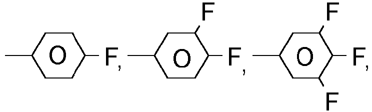 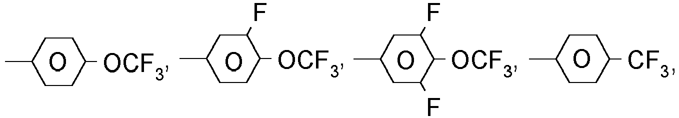 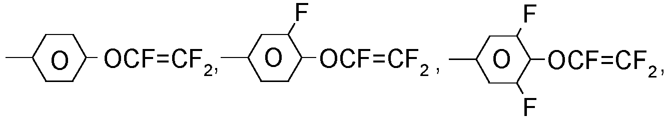 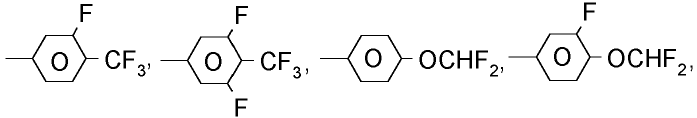 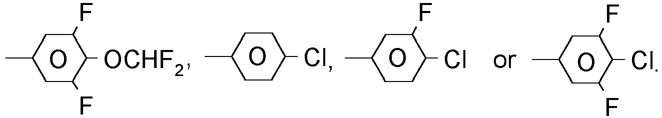
- R⁰ is straight-chain alkyl or alkenyl having 2 to 6 C atoms;
- The medium comprises one or more compounds of the following formulae: 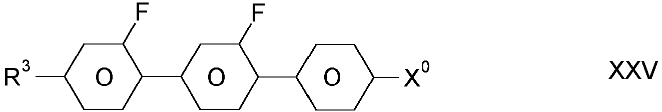 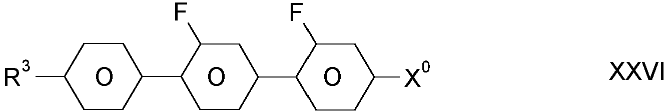 in which R³ and X⁰ have the meanings indicated above. R³ preferably denotes alkyl having 1 to 6 C atoms. X⁰ preferably denotes F or Cl. In the formula XXIV, X⁰ very particularly preferably denotes Cl.
- The medium comprises one or more compounds of the following formulae: 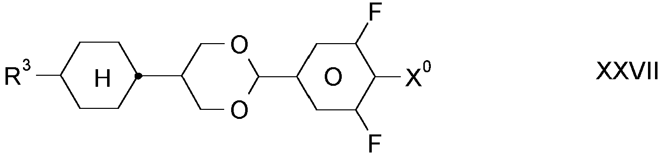 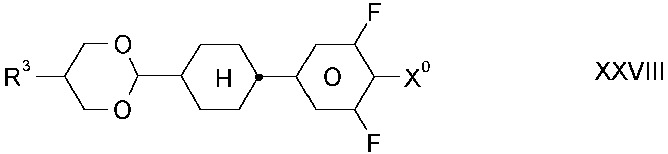 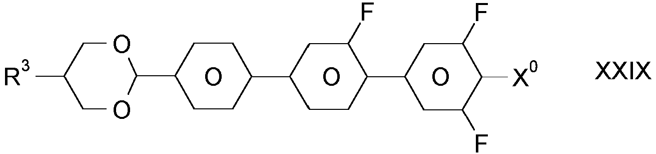 in which R³ and X⁰ have the meanings indicated above. R³ preferably denotes alkyl having 1 to 6 C atoms. X⁰ preferably denotes F. The medium according to the invention particularly preferably comprises one or more compounds of the formula XXIX in which X⁰ preferably denotes F. The compound(s) of the formulae XXVI - XXIX is (are) preferably employed in the mixtures according to the invention in amounts of 1-20% by weight, particularly preferably 1-15% by weight. Particularly preferred mixtures comprise at least one compound of the formula XXIX.
   Very preferably the mixture according to the invention comprises one or more compounds of the formula XXIXa, 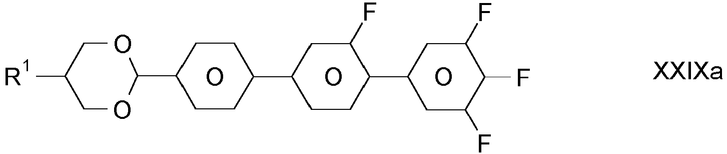 in which R³ has the meanings indicated above, and preferably denotes straight-chain alkyl, in particular ethyl, n-propyl, n-butyl and n-pentyl and very particularly preferably n-propyl. The compound(s) of the formula XXIXa is (are) preferably employed in the mixtures according to the invention in amounts of 1-15% by weight, particularly preferably 2-10% by weight.
- The medium comprises one or more compounds of the following formula 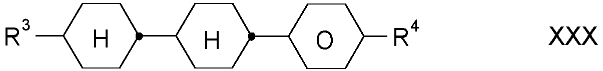 in which R³ and R⁴ have the meanings indicated above, and preferably denote, independently of one another, alkyl having 1 to 6 C atoms, very preferably methyl, ethyl or n-propyl.
   Preferred compounds of formula XXX are those of formula XXXa

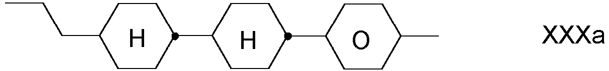

Further preferred LC media are selected from the following preferred embodiments, including any combination thereof:
- The medium comprises one or more compounds of the formula II, preferably selected from formulae II1, II2 and II3, very preferably from formulae II1 and II2. The individual concentration of each of these compounds is preferably from 1 to 15% by weight. The total concentration of these compounds is preferably from 5 to 25% by weight
- The medium comprises one or more compounds of the formula III, preferably selected from formulae III1, III4, III6, III16, III19 and III20, very preferably from formulae III16 and III20. The individual concentration of each of these compounds is preferably from 1 to 15% by weight. The total concentration of these compounds is preferably from 2 to 25% by weight
- The medium comprises one or more compounds of the formula IV, preferably selected from formulae IVa or IVc, very preferably from formula IVa1 or IVc1. The individual concentration of each of these compounds is preferably from 1 to 15% by weight. The total concentration of these compounds is preferably from 5 to 25% by weight.
- The medium comprises one or more compounds of the formula IX, preferably selected from formulae IXa and IXb, very preferably from formulae IXa2 and Xb1. The individual concentration of each of these compounds is preferably from 1 to 15% by weight. The total concentration of these compounds is preferably from 5 to 25% by weight.
- The medium comprises one or more compounds of the formula XI, preferably selected from formulae XIa and XIb. The individual concentration of each of these compounds is preferably from 1 to 20% by weight. The total concentration of these compounds is preferably from 5 to 25% by weight.
- The medium, according to the invention, comprises one or more compounds of the formula XII preferably of formula XIIa. The total concentration of these compounds is preferably from 3 to 20% by weight.
- The medium comprises one or more compounds of the formula XV, preferably selected from formulae formulae XVd and XVe, very preferably from formulae XVd1 and XVe1. The individual concentration of each of these compounds is preferably from 1 to 10% by weight. The total concentration of these compounds is preferably from 2 to 15% by weight.
- The medium comprises one or more compounds of the formula XVIc, preferably of formula XVIc2. The concentration of these compounds is preferably from 1 to 15% by weight.
- The medium comprises one or more compounds of the formula XVIg, preferably of the formula XVIg1 and/or XVIg2. The concentration of these compounds is preferably from 5 to 25% by weight.
- The medium comprises one or more compounds of the formula XVIIa or XVIIb. The concentration of these compounds is preferably from 0.5 to 5% by weight.
- The medium comprises one or more compounds of the formula XXI, preferably of the formula XXIa. The concentration of these compounds is preferably from 0.5 to 8% by weight.
- The medium comprises one or more compounds of the formula XXIII, preferably of the formula XXIIIa. The concentration of these compounds is preferably from 0.5 to 5% by weight.
- The medium comprises one or more compounds of the formula XXIX, preferably of the formula XXIXa. The concentration of these compounds is preferably from 2 to 10% by weight.
- The medium comprises one or more compounds of the formula XXX, preferably of the formula XXXa. The concentration of these compounds is preferably from 2 to 10% by weight.
- The medium comprises one or more compounds of formula I and one or more compounds selected from the group consisting of the formulae II, III, IV, IX, XI, XII, XV, XVI, XXI, XXIX and XXX.
- The medium comprises one or more compounds of formula I and one or more compounds selected from the group consisting of the formulae II1, II2, II3, III1, III4, III6, III16, III19, III20, IVa, IVc, IXa, IXb, XIa, XIb, XIIa, XVd, XVe, XVIc, XXIa, XXIXa and XXXa.
- The proportion of compounds of the formulae II, III, IV, IX, XI, XII, XV, XVI, XXI, XXIX and XXX in the mixture as a whole is 90 to 99% by weight.
- The proportion of compounds of the formulae II1, II2, II3, III1, III4, III6, III16, III19, III20, IVa, IVc, IXa, IXb, XIa, XIb, XIIa, XVd, XVe, XVIc, XXIa, XXIXa and XXXa in the mixture as a whole is 90 to 99% by weight.

The term "alkyl" or "alkyl*" in this application encompasses straight-chain and branched alkyl groups having 1-6 carbon atoms, in particular the straight-chain groups methyl, ethyl, propyl, butyl, pentyl and hexyl. Groups having 2-5 carbon atoms are generally preferred.

The term "alkenyl" or "alkenyl*" encompasses straight-chain and branched alkenyl groups having 2-6 carbon atoms, in particular the straight-chain groups. Preferred alkenyl groups are C₂-C₇-1E-alkenyl, C₄-C₆-3E-alkenyl, in particular C₂-C₆-1E-alkenyl. Examples of particularly preferred alkenyl groups are vinyl, 1E-propenyl, 1E-butenyl, 1E-pentenyl, 1E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" preferably encompasses straight-chain radicals of the formula CₙH₂ₙ₊₁-O-(CH₂)ₘ, in which n and m each, independently of one another, denote 1 to 6. m may also denote 0. Preferably, n = 1 and m = 1-6 or m = 0 and n = 1-3.

Through a suitable choice of the meanings of R⁰ and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the LC media according to the invention is not crucial. The mixtures can therefore comprise one or more further components for the purposes of optimisation of various properties. However, the observed effect on the desired improvement in the properties of the medium is generally greater, the higher the total concentration of compounds of the above-mentioned formulae.

In a particularly preferred embodiment, the LC media according to the invention comprise compounds of the formulae IV to VIII (preferably IV and V) in which X⁰ denotes F, OCF₃, OCHF₂, OCH=CF₂, OCF=CF₂ or OCF₂-CF₂H. A favourable synergistic action with the compounds of the formulae IA, IIA, IB and IIB results in particularly advantageous properties. In particular, mixtures comprising compounds of the formulae IA or IIA and IB or IIB are distinguished by their low threshold voltage.

The individual compounds of the above-mentioned formulae and the sub-formulae thereof which can be used in the LC media according to the invention are either known or can be prepared analogously to the known compounds.

In another preferred embodiment of the present invention the LC medium additionally comprises one or more polymerisable compounds. The polymerisable compounds are preferably selected from formula M

**R^{a}-B¹-(Z^{b}-B²)ₘ-R^{b}** M

in which the individual radicals, on each occurrence identically or differently, and each, independently of one another, have the following meaning:
- R^{a} and R^{b}: P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P or P-Sp-,
- P: a polymerisable group,
- Sp: a spacer group or a single bond,
- B¹ and B²: an aromatic, heteroaromatic, alicyclic or heterocyclic group, preferably having 4 to 25 ring atoms, which may also contain fused rings, and which is unsubstituted, or mono- or polysubstituted by L,
- Z^{b}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
- R⁰ and R⁰⁰: each, independently of one another, denote H or alkyl having 1 to 12 C atoms,
- m: denotes 0, 1, 2, 3 or 4,
- n1: denotes 1, 2, 3 or 4,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
- P and Sp: have the meanings indicated above,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, - CO-,
-CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Particularly preferred compounds of the formula I are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by **N,** cyclohexane-1,4-diyl, in which, in addition, one or more non-adjacent CH₂ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Particularly preferred compounds of the formula M are those in which B¹ and B² each, independently of one another, denote 1,4-phenylene, 1,3-phenylene, naphthalene-1,4-diyl or naphthalene-2,6-diyl,

Very preferred compounds of formula M are selected from the following formulae: 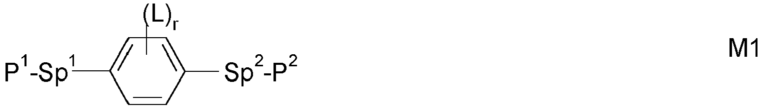 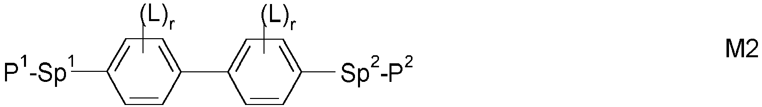 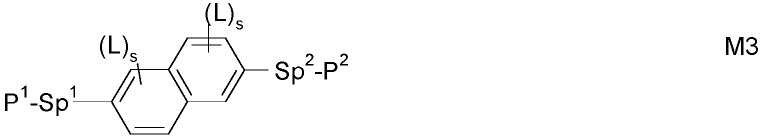 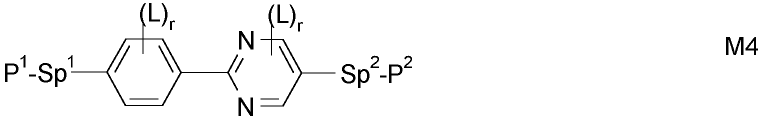 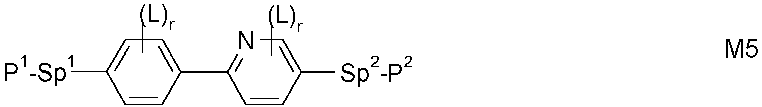 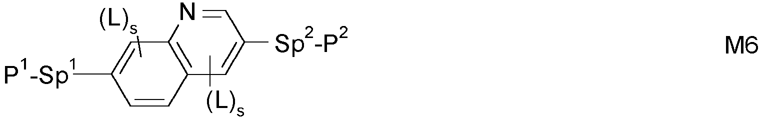 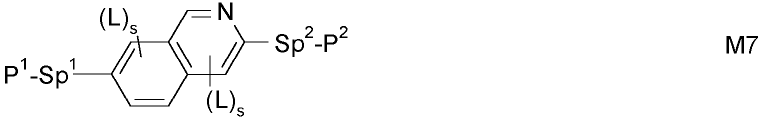 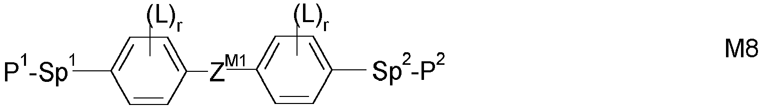 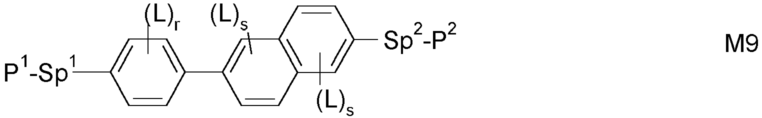 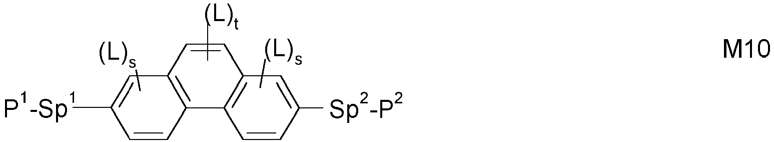 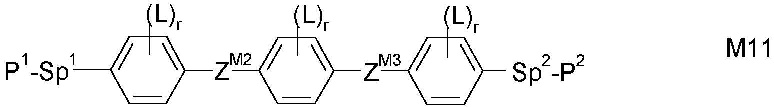 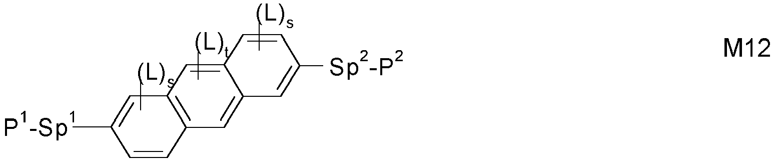 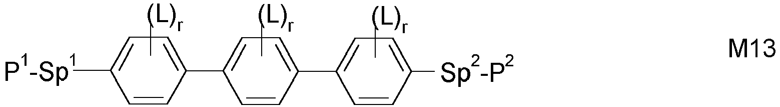 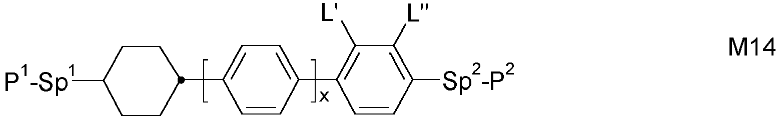 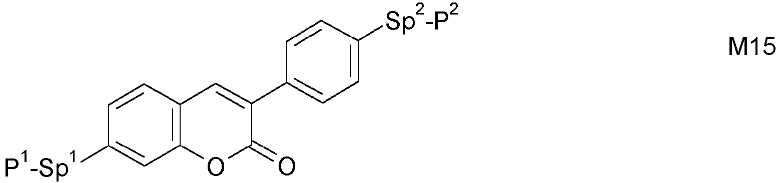 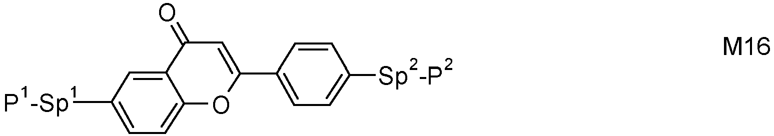 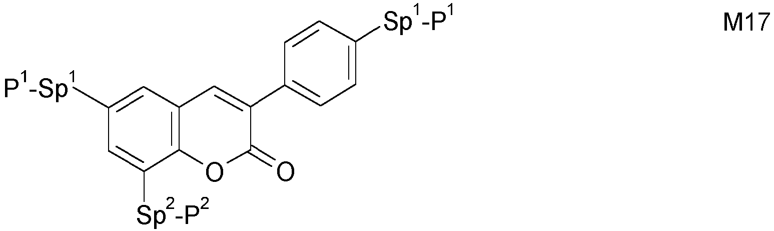 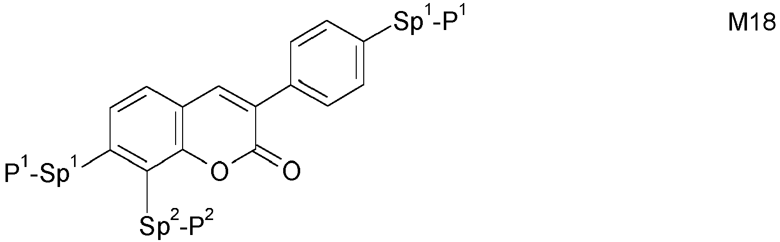 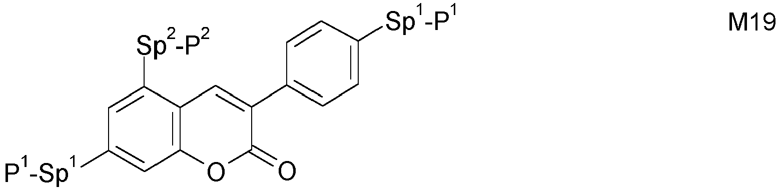 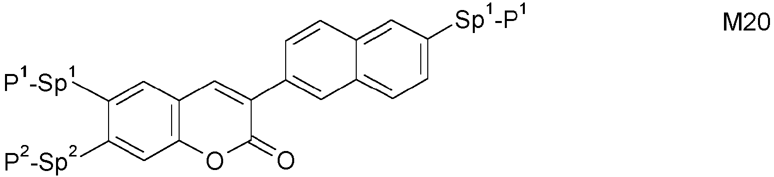 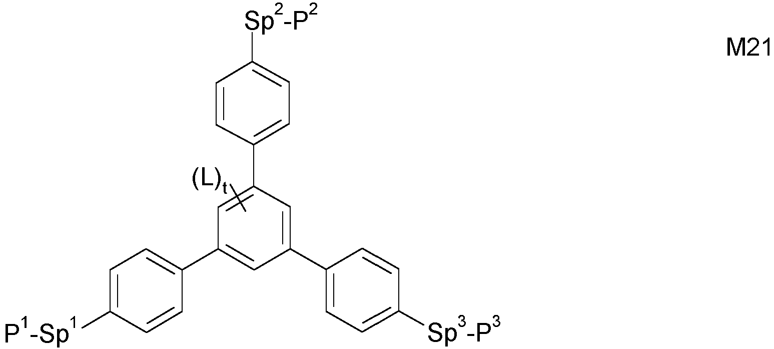 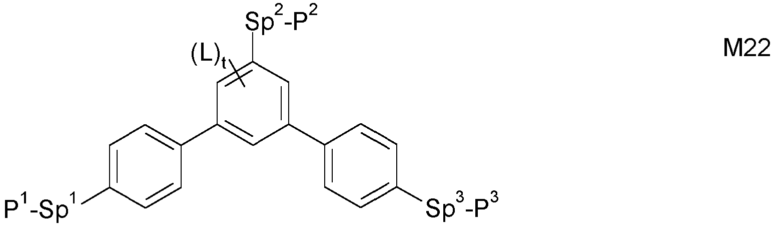 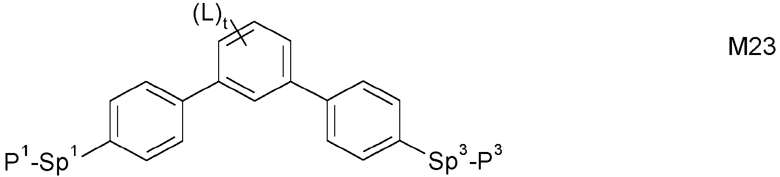 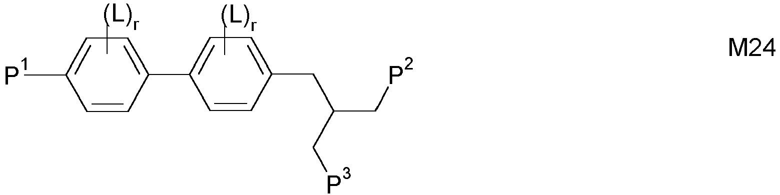 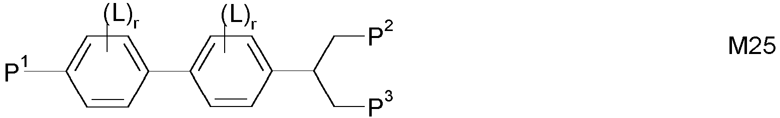 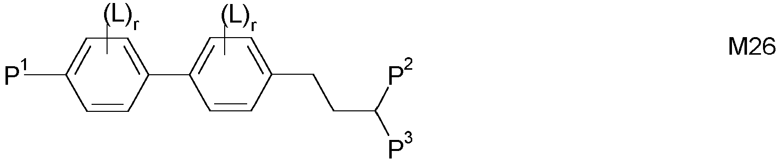 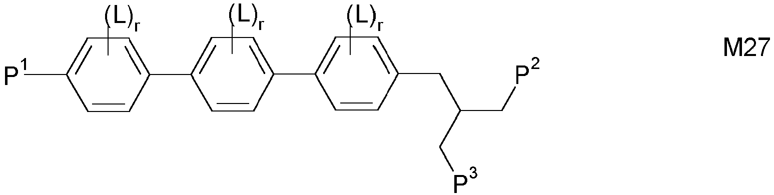 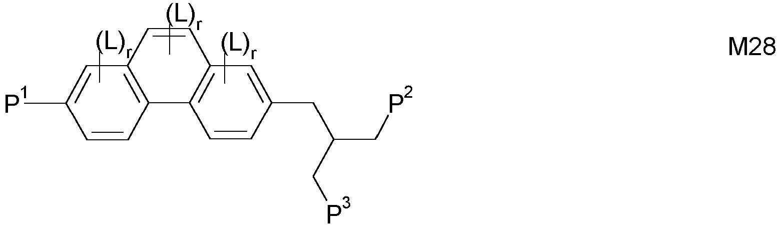 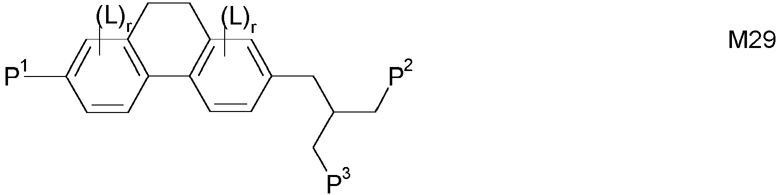 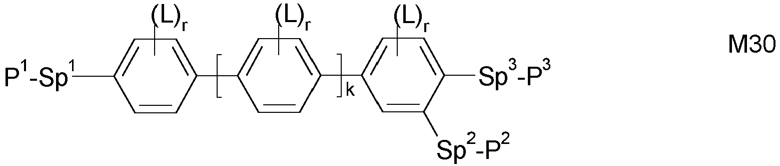 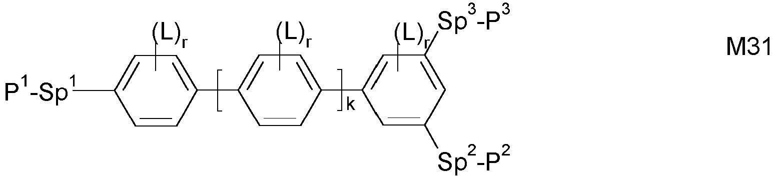 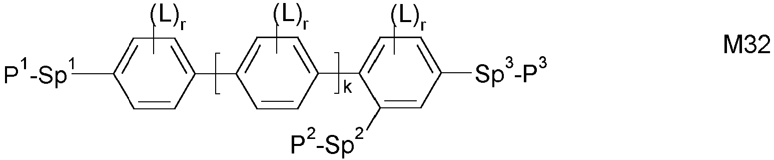 in which the individual radicals, on each occurrence identically or differently, and each, independently of one another, have the following meaning:
- P¹, P², P³: a polymerisable group, preferably selected from vinyloxy, acrylate, methacrylate, fluoroacrylate, chloroacrylate, oxetane and epoxy,
- Sp¹, Sp², Sp³: a single bond or a spacer group where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa}, preferably -(CH₂)ₚ₁-, -(CH₂)ₚ₁-O-, -(CH₂)ₚ₁-CO-O- or - (CH₂)ₚ₁-O-CO-O- bedeuten, wherein p1 is an integer from 1 to 12,
- R^{aa}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: H or alkyl having 1 to 12 C atoms,
- R^{y} and R^{z}: H, F, CH₃ or CF₃,
- X¹, X², X³: -CO-O-, -O-CO- or a single bond,
- Z^{M1}: -O-, -CO-, -C(R^{y}R^{z})- or -CF₂CF₂-,
- Z^{M2}, Z^{M3}: -CO-O-, -O-CO-, -CH₂O-, -OCH₂-, -CF₂O-, -OCF₂- or -(CH₂)ₙ-, where n is 2, 3 or 4,
- L: F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
- L', L": H, F or Cl,
- k: 0 or 1,
- r: 0, 1, 2, 3 or 4,
- s: 0, 1, 2 or 3,
- t: 0, 1 or 2,
- x: 0 or 1 .

Especially preferred are compounds of formulae M2 and M13.

Further preferred are trireactive compounds M15 to M31, in particular M17, M18, M19, M22, M23, M24, M25, M30, M31 and M32.

In the compounds of formulae M1 to M32 the group 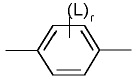 is preferably 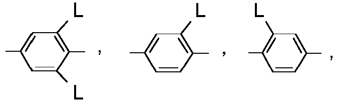 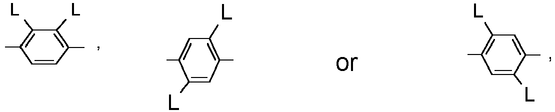 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ oder OCF₃ , especially F or CH₃.

Preferred compounds of formulae M1 to M32 are those wherein P¹, P² and P³ denote an acrylate, methacrylate, oxetane or epoxy group, very preferably an acrylate or methacrylate group.

Further preferred compounds of formulae M1 to M32 are those wherein Sp¹, Sp² and Sp³ are a single bond.

Further preferred compounds of formulae M1 to M32 are those wherein one of Sp¹, Sp² and Sp³ is a single bond and another one of Sp¹, Sp² and Sp³ is different from a single bond.

Further preferred compounds of formulae M1 to M32 are those wherein those groups Sp¹, Sp² and Sp³ that are different from a single bond denote -(CH₂)ₛ₁-X"-, wherein s1 is an integer from 1 to 6, preferably 2, 3, 4 or 5, and X" is X" is the linkage to the benzene ring and is -O-, -O-CO-, -CO-O-, -O-CO-O- or a single bond.

Further preferred polymerisable compounds of formulae M1 to M32 are those selected from Table D below.

Particular preference is given to LC media comprising one, two or three polymerisable compounds of formula M, preferably selected from formulae M1 to M32.

Preferably the proportion of polymerisable compounds, including those of formula M and its subformulae, in the LC medium is from 0.01 to 5%, very preferably from 0.05 to 1%, most preferably from 0.1 to 0.5%.

It was observed that the addition of one or more polymerisable compounds of formula M to the LC medium leads to advantageous properties like fast response times. Such an LC medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the LC medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of CH₂=CW¹-COO-, CH₂=CW¹-CO-, 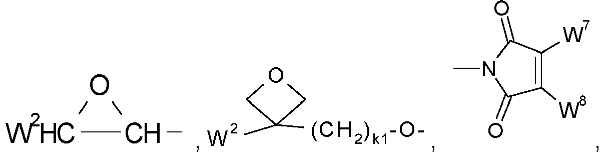 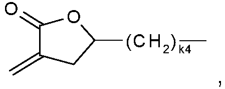 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 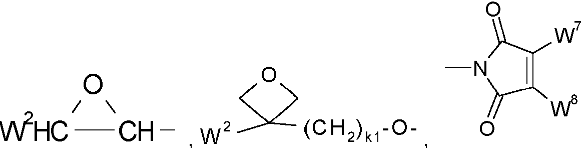 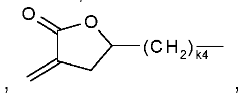 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-,

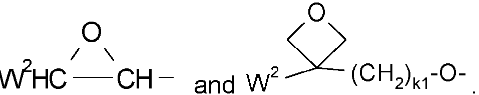

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the formula Sp"-X", so that the respective radical P-Sp- conforms to the formula P-Sp"-X"-, wherein
Sp" denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, - Si(R⁰R⁰⁰)-,
   -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
X" denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
R⁰ and R⁰⁰ each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰- , -NR⁰-CO-, -NR⁰-CO-NR⁰⁰- or a single bond.

Typical spacer groups Sp and -Sp"-X"- are, for example, -(CH₂)ₚ₁-, - (CH₂CH₂O)_{q1}-CH₂CH₂-, -CH₂CH₂-S-CH₂CH₂-, -CH₂CH₂-NH-CH₂CH₂- or - (SiR⁰R⁰⁰-O)ₚ₁-, in which p1 is an integer from 1 to 12, q1 is an integer from 1 tc 3, and R⁰ and R⁰⁰ have the meanings indicated above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

For the production of PSA displays, the polymerisable compounds contained in the LC medium are polymerised or crosslinked (if one compound contains two or more polymerisable groups) by in-situ polymerisation in the LC medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the LC media according to the invention at the same time as constantly high clearing points and high VHR values.

The use of LC media containing polymerisable compounds allows the rapid establishment of a particularly low pretilt angle in PSA displays. In particular, the LC media exhibit significantly shortened response times, in particular also the grey-shade response times, in PSA displays compared with the media from the prior art.

Preference is generally given to LC media which have a nematic LC phase, and preferably have no chiral liquid crystal phase.

The invention also relates to the use of an LC medium according to the present invention as described above and below for electro-optical purposes, in particular for the use is in shutter glasses, for 3D applications, in IPS, PS-IPS, FFS, PS-FFS, HB-FFS, U-IPS, TN, PS-TN, STN or TN-TFT displays, and to electro-optical displays, in particular of the aforementioned types, containing an LC medium according to the present invention as described above and below, in particular an IPS, PS-IPS, FFS, PS-FFS, HB-FFS, U-IPS, TN, PS-TN, STN or TN-TFT display.

The invention also relates to electro-optical displays, such as, for example, STN or MLC displays, having two plane-parallel outer plates, which, together with a frame, form a cell, integrated non-linear elements for switching individual pixels on the outer plates, and a nematic LC mixture having positive dielectric anisotropy and high specific resistance located in the cell, wherein the a nematic LC mixture is an LC medium according to the present invention as described above and below.

The LC media according to the invention enable a significant broadening of the available parameter latitude. The achievable combinations of clearing point, viscosity at low temperature, thermal and UV stability and high optical anisotropy are far superior to previous materials from the prior art.

The LC media according to the invention are suitable for mobile applications and TFT applications, such as, for example, mobile telephones and PDAs. Furthermore, the LC media according to the invention are particularly suitably for use in FFS and IPS displays.

The LC media according to the invention preferably retain the nematic phase down to -20°C very preferably down to -30°C, most preferably down to -40°C. The LC media according to the invention preferably have a clearing point ≥ 85°C, very preferably ≥ 95°C, most preferably ≥105°C.

The LC media according to the invention preferably have a rotational viscosity γ₁ of ≤ 130 mPa·s, very preferably ≤ 115 mPa·s, enabling excellent MLC displays having fast response times to be achieved. The rotational viscosities are determined at 20°C.

In a preferred embodiment, the dielectric anisotropy Δε of the LC media according to the invention at 20°C is preferably ≥ +4, very preferably ≥ +6, most preferably ≥ +8.

The birefringence Δn of the LC media according to the invention at 20°C is preferably in the range of from 0.080 to 0.150, more preferably from 0.090 to 0.140, particularly preferably 0.100 to 0.130.

The nematic phase range of the LC media according to the invention preferably has a width of at least 100°, more preferably of at least 110°C, in particular at least 130°. This range preferably extends at least from -25° to +105°C.

It goes without saying that, through a suitable choice of the components of the LC media according to the invention, it is also possible for higher clearing points (for example above 100°C) to be achieved at higher threshold voltages or lower clearing points to be achieved at lower threshold voltages with retention of the other advantageous properties. At viscosities correspondingly increased only slightly, it is likewise possible to obtain LC media having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of LC media comprising cyano compounds. Through a suitable choice of the individual components and their proportions by weight, the person skilled in the art is able to set the birefringence necessary for a pre-specified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Fran-cisco, June 1984, p. 304 (1984); G. Weber et al., Liquid Crystals 5, 1381 (1989)] have shown that LC media according to the invention comprising compounds of the formulae ST-1, ST-2, RV, IA and IB exhibit a significantly smaller decrease in the HR on UV exposure than analogous mixtures comprising cyanophenylcyclohexanes of the formula 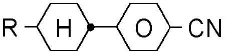 or esters of the formula 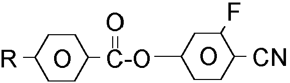 instead of the compounds of the formulae I ST-1, ST-2, RV, IA and IB.

The light stability and UV stability of the LC media according to the invention are considerably better, i.e. they exhibit a significantly smaller decrease in the HR on exposure to light, heat or UV.

The construction of the MLC display according to the invention from polaris-ers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the LC parameters of the LC layer.

The LC media which can be used in accordance with the invention are prepared in a manner conventional per se, for example by mixing one or more compounds of Claim 1 with one or more compounds of the formulae IV-XXX or with further LC compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The LC media may also comprise further additives known to the person skilled in the art and described in the literature, such as, for example, polymerisation initiators, inhibitors, surface-active substances, light stabilisers, antioxidants, e.g. BHT, TEMPOL, microparticles, free-radical scavengers, nanoparticles, etc. For example, 0-15% of pleochroic dyes or chiral dopants or initiators like Irgacure651^{®} or Irgacure907^{®} can be added. Suitable stabilisers and dopants are mentioned below in Tables C and D.

In a preferred embodiment the LC media contain one or more chiral dopants, preferably in a concentration from 0.01 to 1% by weight, very preferably from 0.05 to 0.5% by weight. The chiral dopants are preferably selected from the group consisting of compounds from Table B below, very preferably from the group consisting of R- or S-1011, R- or S-2011, R- or S-3011, R- or S-4011, and R- or S-5011.

In another preferred embodiment the LC media contain a racemate of one or more chiral dopants, which are preferably selected from the chiral dopants mentioned in the previous paragraph.

In another preferred embodiment of the present invention the LC media contain one or more further stabilisers, preferably selected from the the group consisting of the following formulae 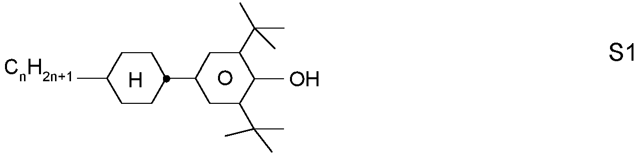 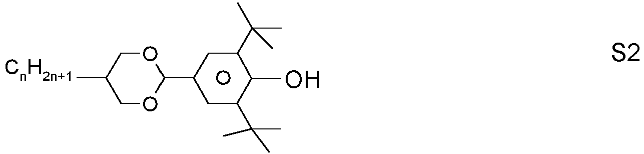 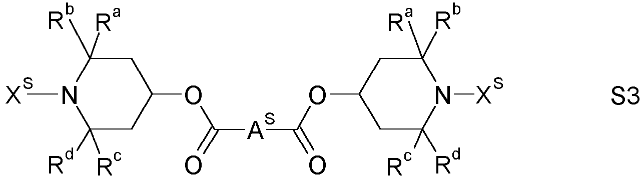 wherein the individual radicals, independently of each other and on each occurrence identically or differently, have the following meanings
- R^{a-d}: straight-chain or branched alkyl with 1 to 10, preferably 1 to 6, very preferably 1 to 4 C atoms, most preferably methyl,
- X^{S}: H, CH₃, OH or O•,
- A^{S}: straight-chain, branched or cyclic alkylene with 1 to 20 C atoms which is optionally substituted,
- n: an integer from 1 to 6, preferably 3.
Preferred stabilisers of formula S3 are selected from formulaS3A 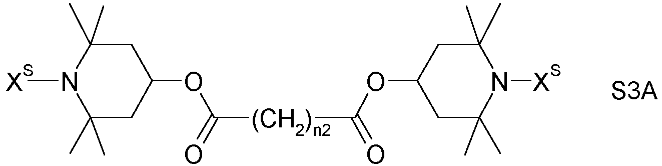 wherein n2 is an integer from 1 to 12, and wherein one or more H atoms in the group (CH₂)ₙ₂ are optionally replaced by methyl, ethyl, propyl, butyl, pentyl or hexyl.

Very preferred stabilisers are selected from the group consisting of the following formulae

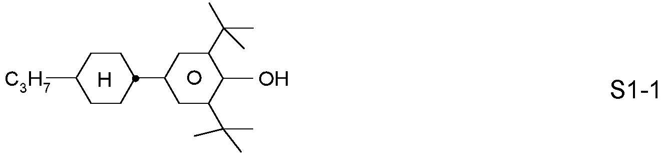

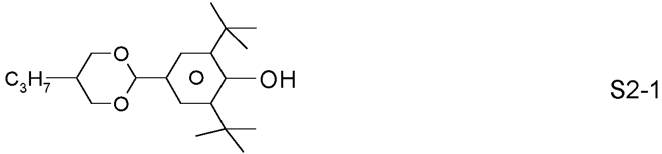

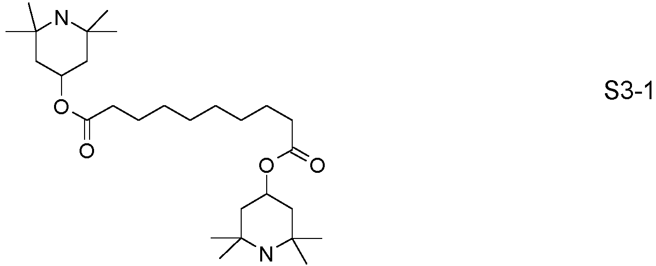

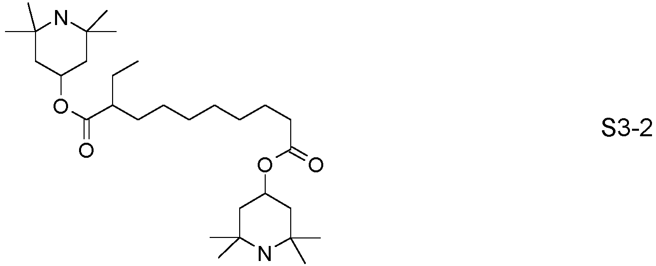

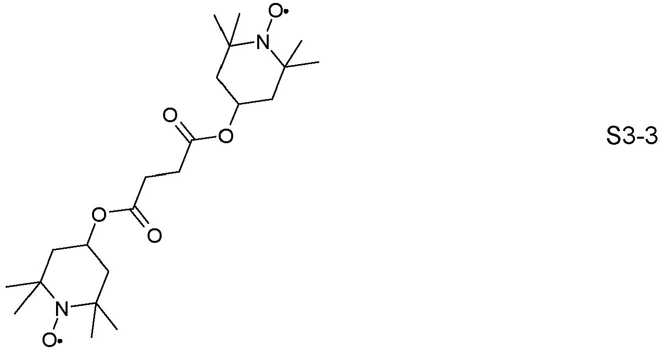

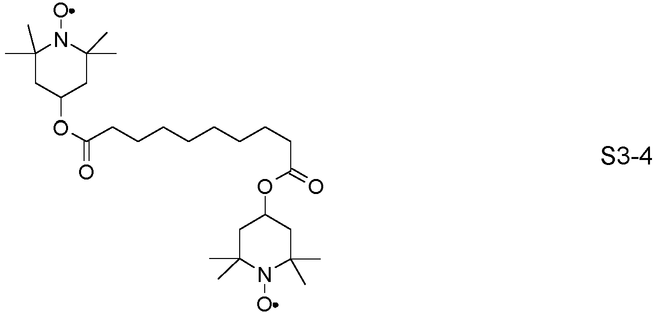

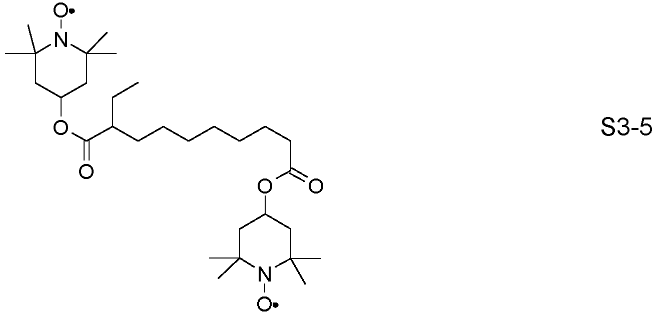

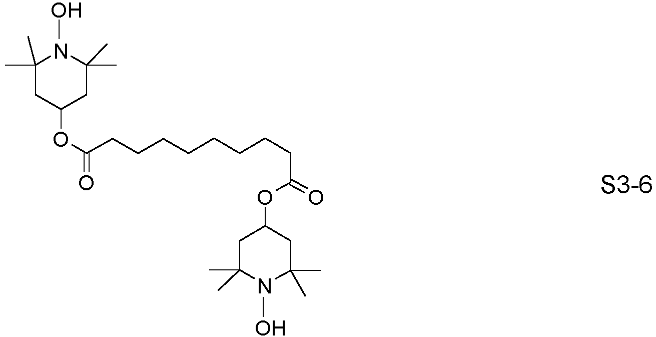

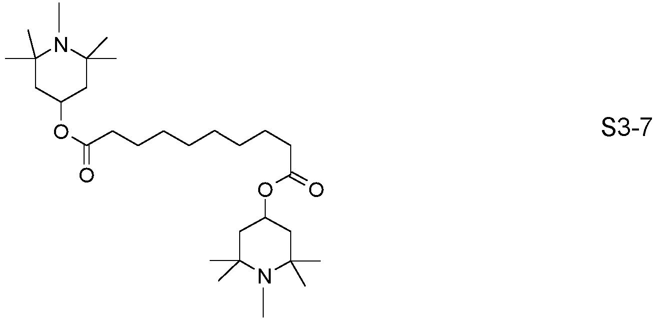

In a preferred embodiment the LC medium comprises one or more stabilisers selected from the group consisting of formulae S1-1, S2-1, S3-1, S3-1 and S3-3.

In a preferred embodiment the LC medium comprises one or more stabilisers selected from Table D.

Preferably the proportion of stabilisers, like those of formula S1-S3, in the LC medium is from 10 to 500 ppm,very preferably from 20 to 100 ppm.

In another preferred embodiment the LC medium according to the present invention contains a self-aligning (SA) additive, preferably in a concentration of 0.1 to 2.5 %.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerisable groups which are attached, optionally via spacer groups, to the mesogenic group. These polymerisable SA additives can be polymerised in the LC medium under similar conditions as applied for the RMs in the PSA process.

Suitable SA additives are disclosed for example in US 2013/0182202 A1, US 2014/0838581 A1, US 2015/0166890 A1 and US 2015/0252265 A1.

In another preferred embodiment an LC medium or a polymer stabilised display according to the present invention contains one or more self-aligning additives selected from Table E below.

In a preferred embodiment the display according to the present invention does not contain an alignment layer.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

In the present application and in the examples below, the structures of the LC compounds are indicated by means of acronyms, the transformation into chemical formulae taking place in accordance with Table A. All radicals CₙH₂ₙ₊₁ and CₘH₂ₘ₊₁ are straight-chain alkyl radicals having n and m C atoms respectively; n, m and k are integers and preferably denote 0, 1, 2, 3, 4, 5, 6, 7, 8, 9, 10, 11 or 12. The coding in Table B is self-evident. In Table A, only the acronym for the parent structure is indicated. In individual cases, the acronym for the parent structure is followed, separated by a dash, by a code for the substituents R^{1*}, R^{2*}, L^{1*} and L^{2*}:

| Code for R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCnH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Preferred mixture components are shown in Tables A and B.

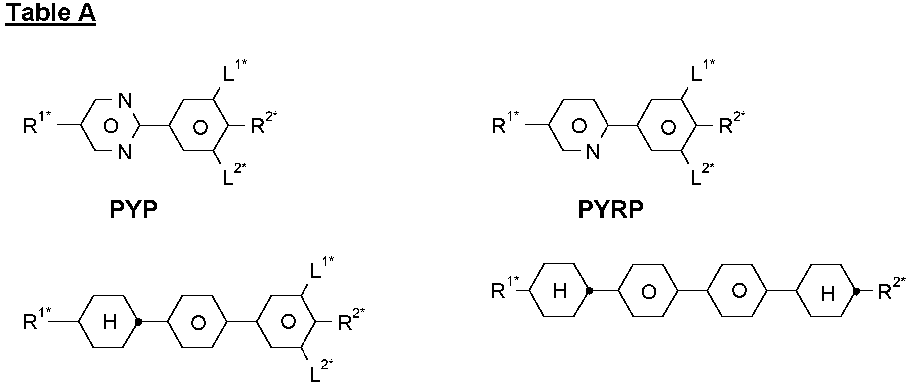

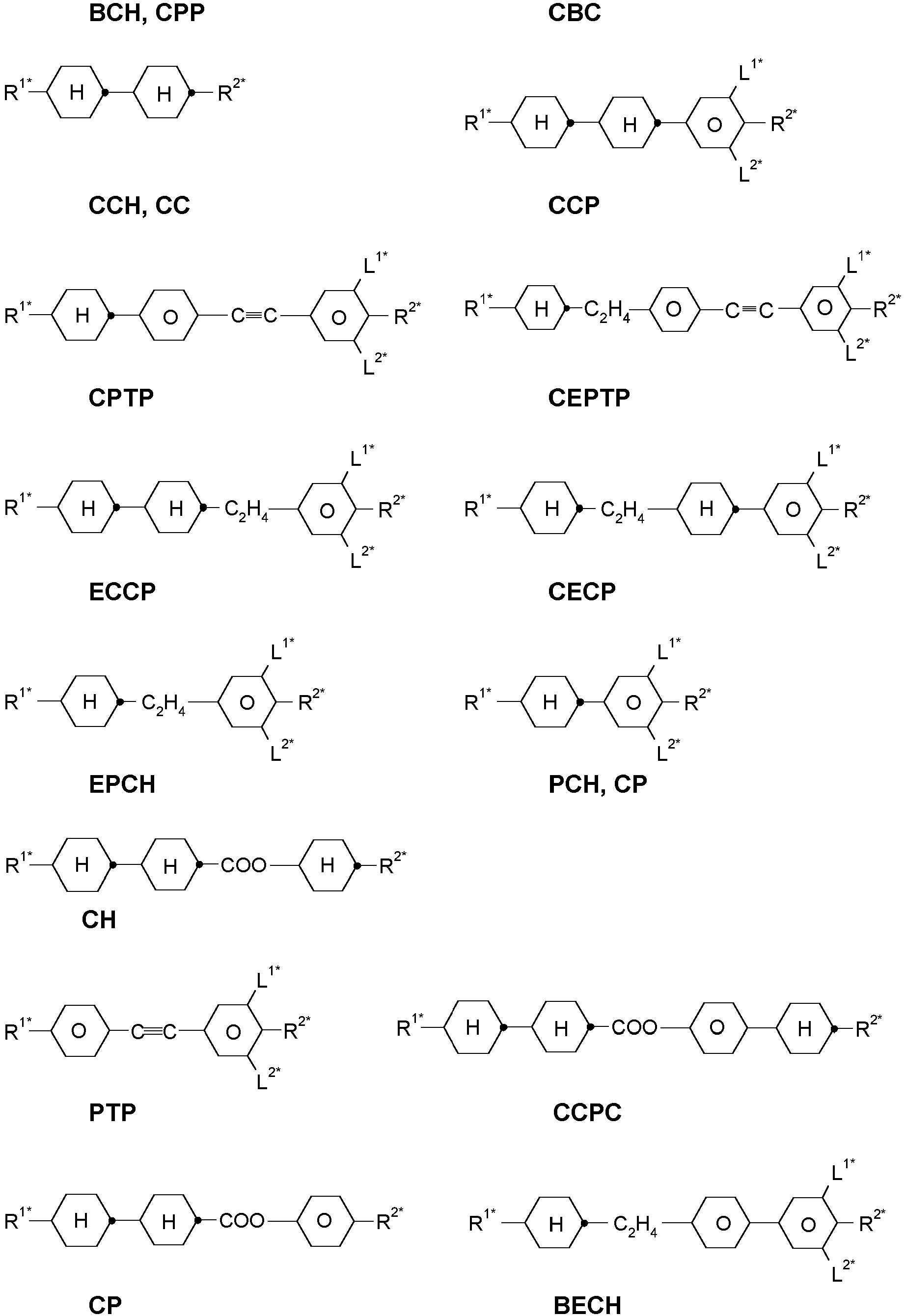

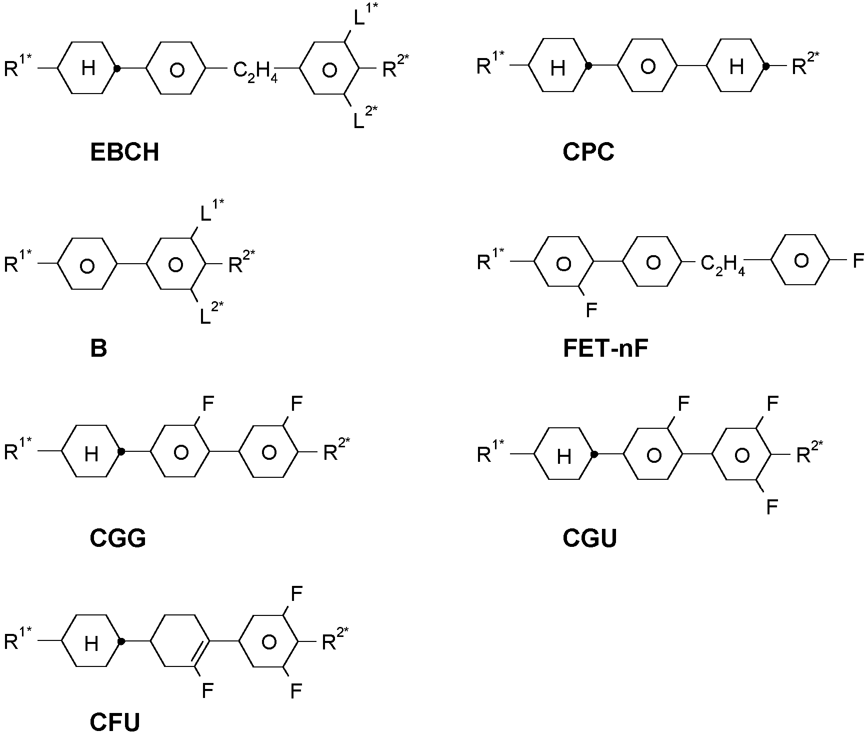

**Table B**

| In the following formulae, n and m each, independently of one another, denote 0, 1, 2, 3, 4, 5, 6, 7, 8, 9, 10, 11 or 12, in particular 2, 3, 5, furthermore 0, 4, 6. | |
|---|---|
| 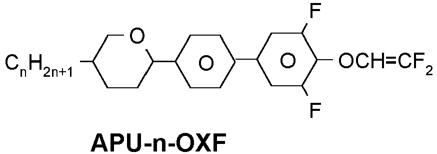 | |
| 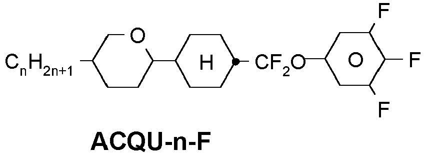 | |
| 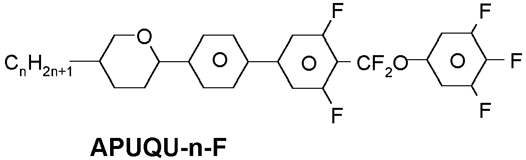 | |
| 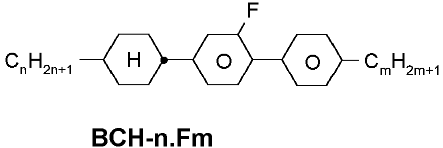 | 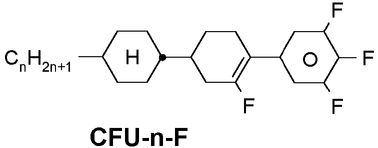 |
| 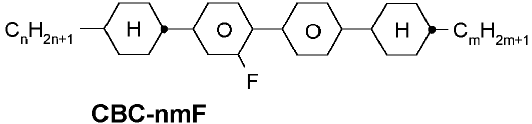 | |
| 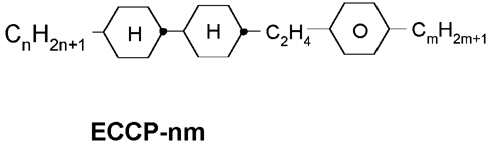 | 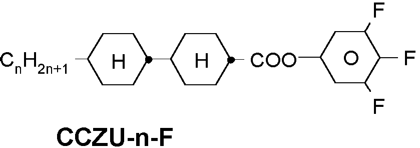 |
| 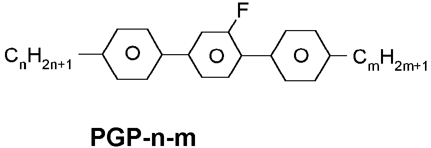 | 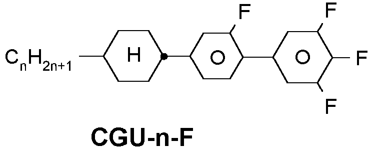 |
| 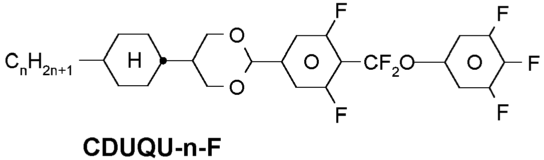 | |
| 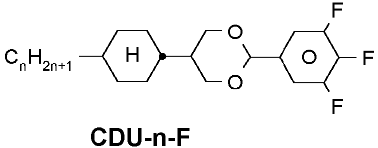 | 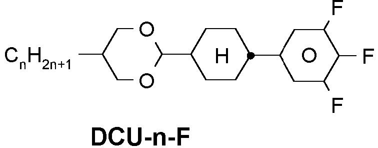 |
| 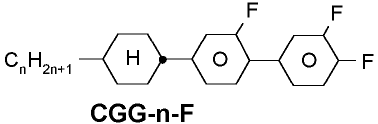 | 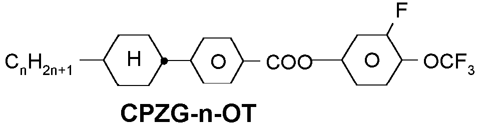 |
| 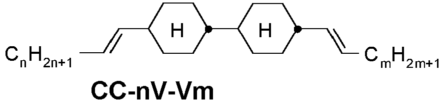 | |
| 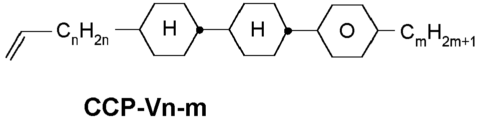 | 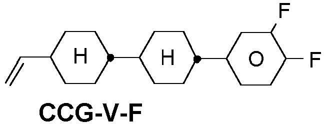 |
| 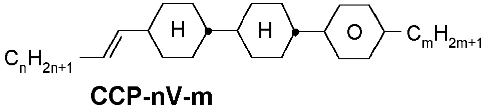 | 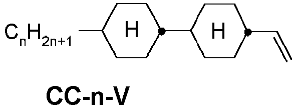 |
| 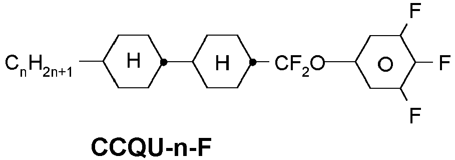 | 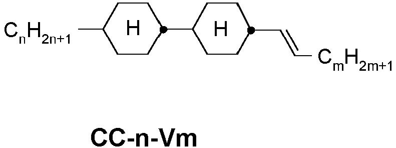 |
| 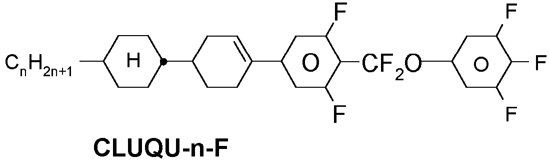 | |
| 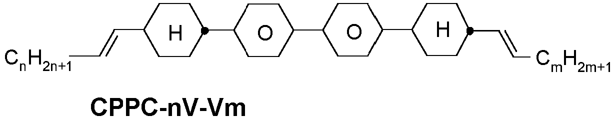 | |
| 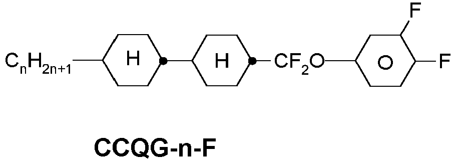 | 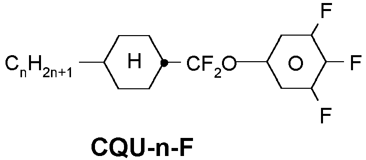 |
| 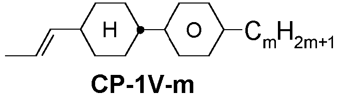 | |
| 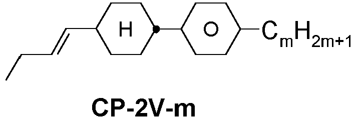 | 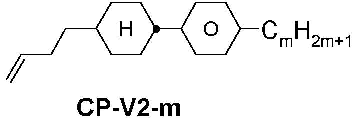 |
| 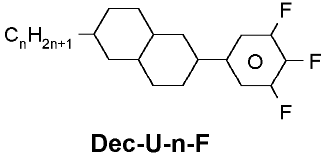 | 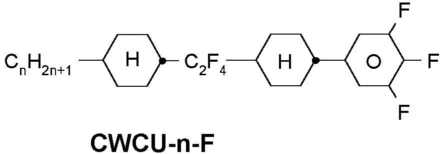 |
| 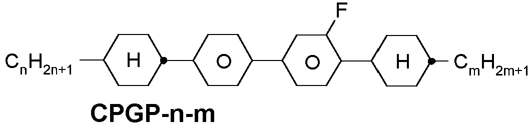 | |
| 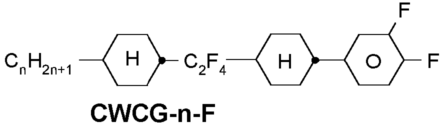 | |
| 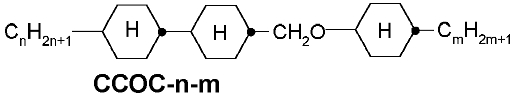 | |
| 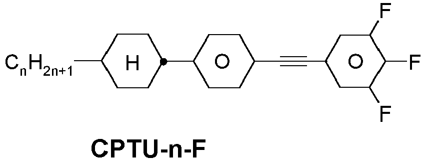 | 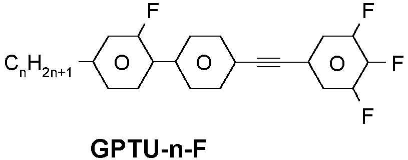 |
| 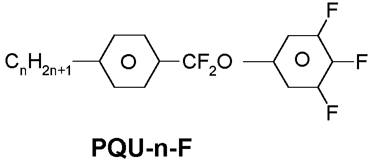 | 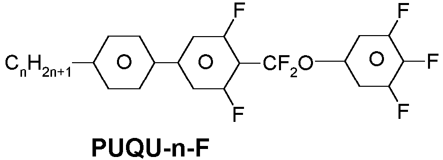 |
| 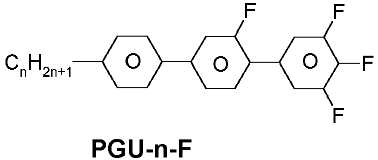 | 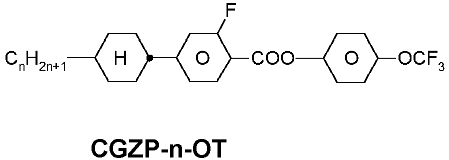 |
| 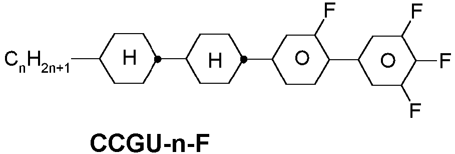 | 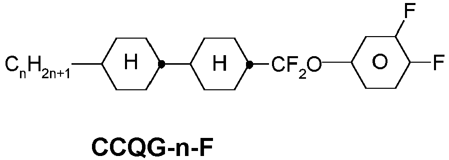 |
| 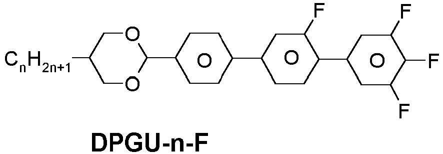 | 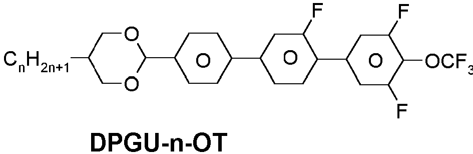 |
| 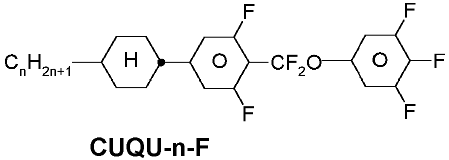 | |
| 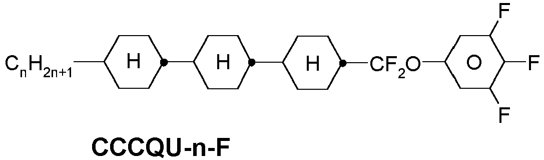 | |
| 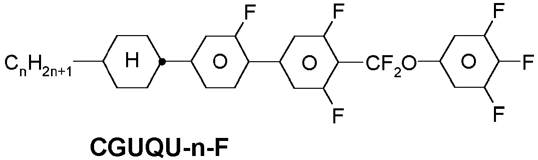 | |
| 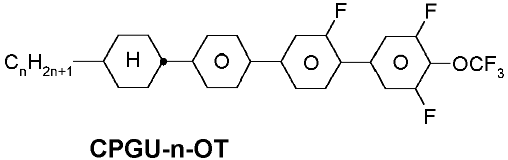 | |
| 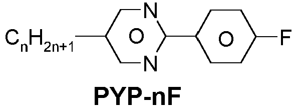 | |
| 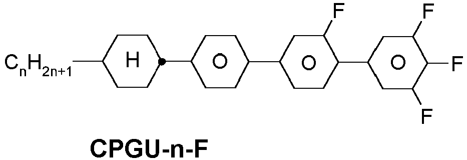 | |
| 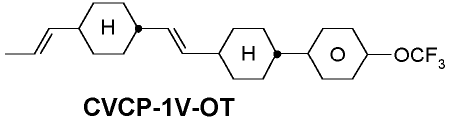 | 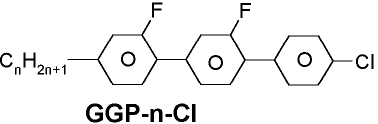 |
| 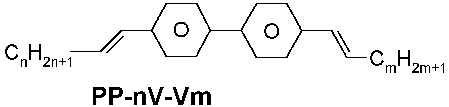 | 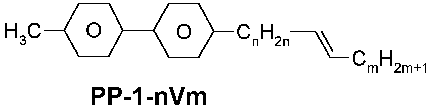 |
| 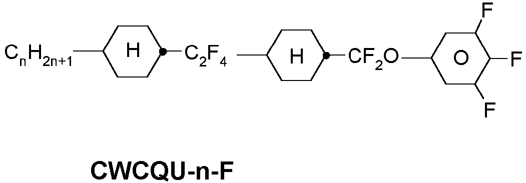 | |
| 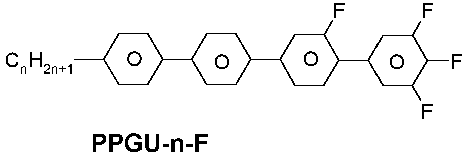 | |
| 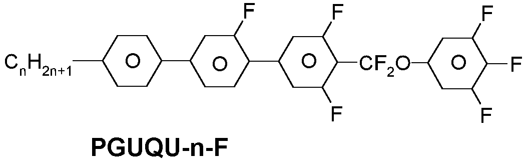 | |
| 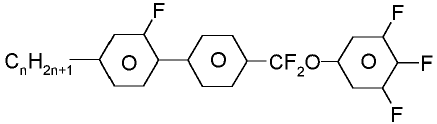 | 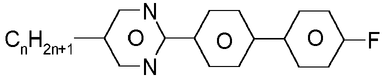 |
| 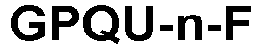 | 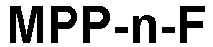 |
| 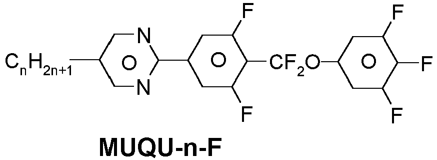 | 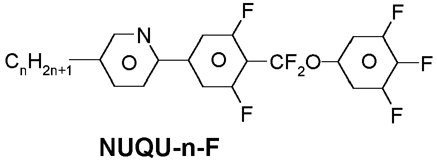 |
| 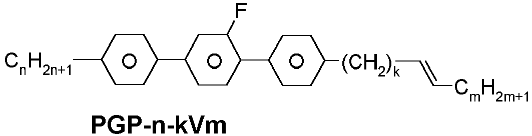 | |
| 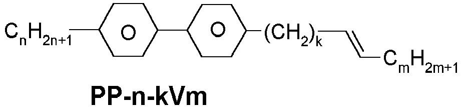 | |
| 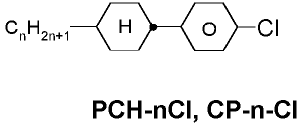 | 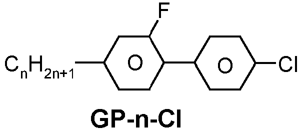 |
| 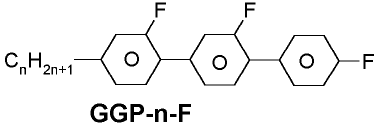 | 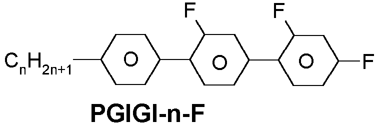 |
| 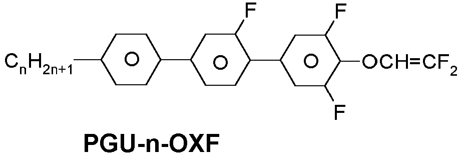 | 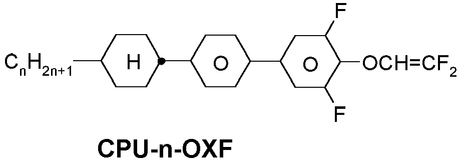 |
| 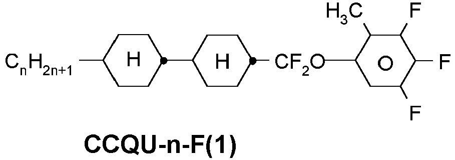 | 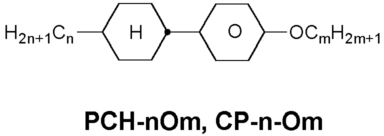 |
| 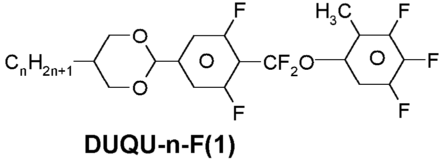 | |
| 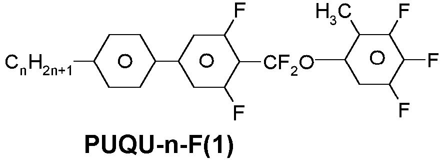 | |
| 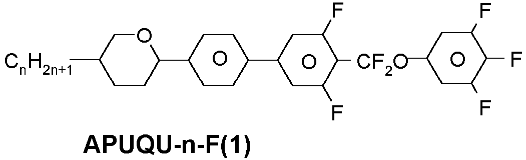 | |
| 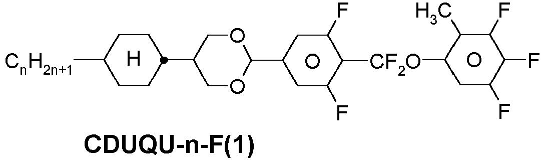 | |
| 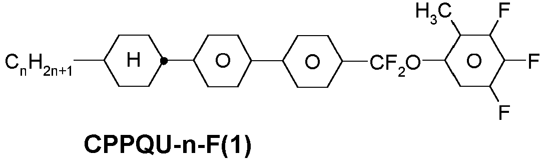 | |
| 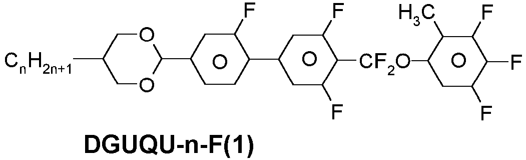 | |
| 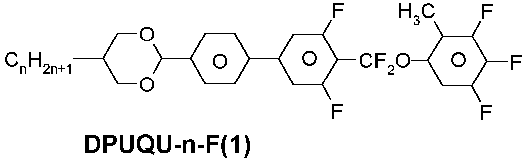 | |
| 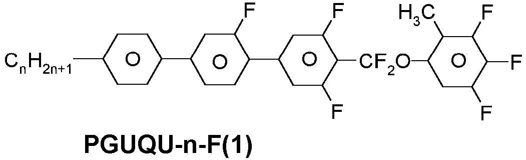 | |
| 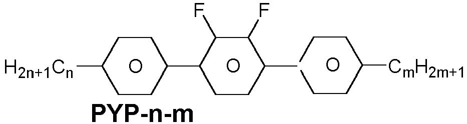 | |

Particular preference is given to LC media which, besides the compounds of the formula I, comprise at least one, two, three, four or more compounds from Table B.

**Table C**

| Table C indicates possible dopants which are generally added to the LC media according to the invention. The LC media preferably comprise 0-10% by weight, in particular 0.01-5% by weight and particularly preferably 0.01-3% by weight of dopants. | |
|---|---|
| 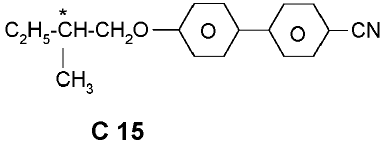 | 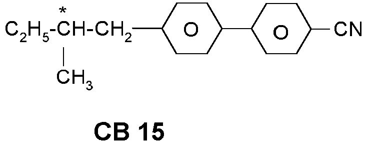 |
| 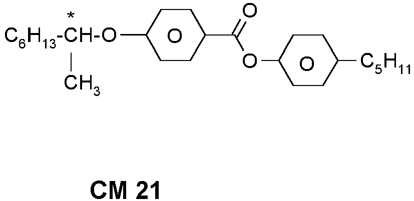 | 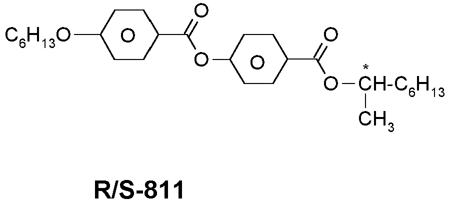 |
| 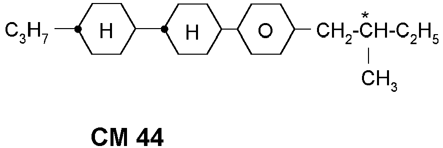 | 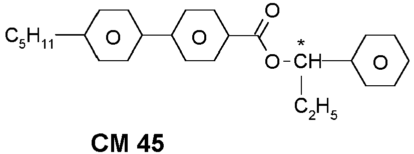 |
| 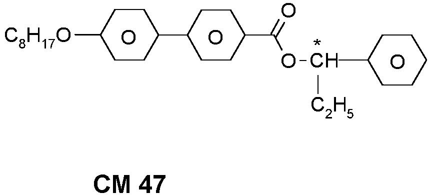 | 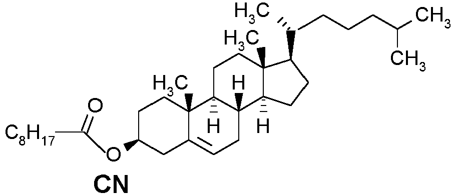 |
| 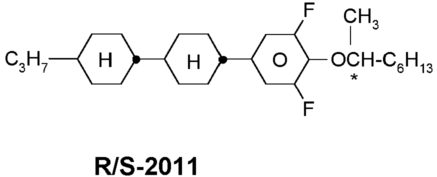 | 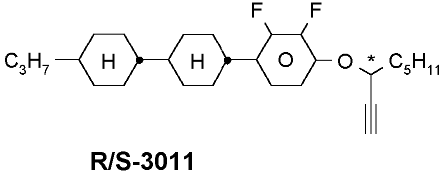 |
| 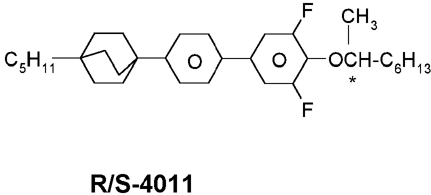 | 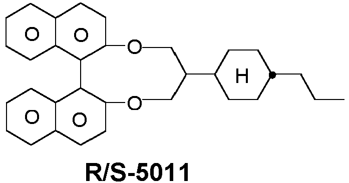 |
| 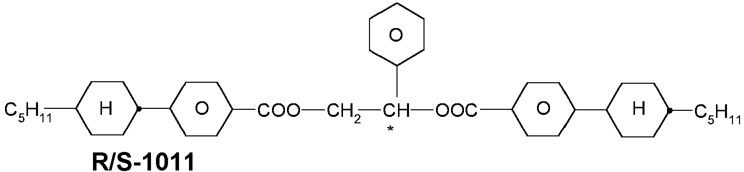 | |

**Table D**

| Stabilisers, which can additionally be added, for example, to the LC media according to the invention in amounts of 0-10% by weight, are mentioned below. | |
|---|---|
| 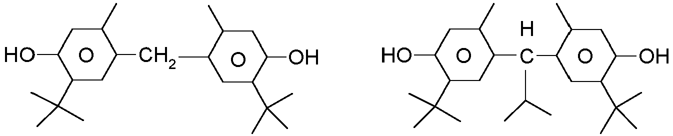 | |
| 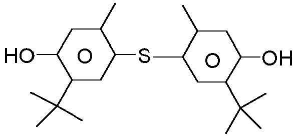 | 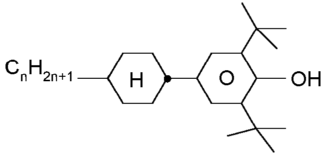 |
| | n = 1, 2, 3, 4, 5, 6 or 7 |
| 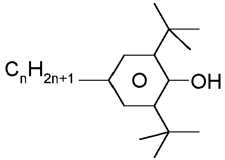 | 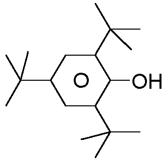 |
| n = 1, 2, 3, 4, 5, 6 or 7 | |
| 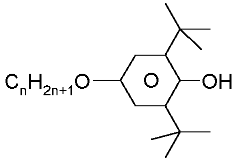 | 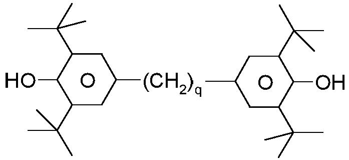 |
| n = 1, 2, 3, 4, 5, 6 or 7 | q = 1,2,3,4,5,6 or 7 |
| 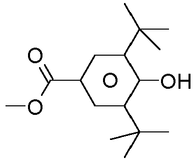 | 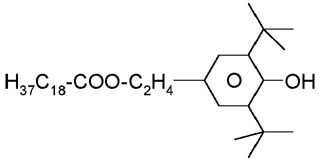 |
| 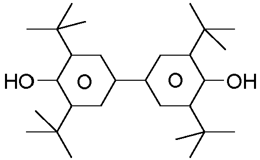 | 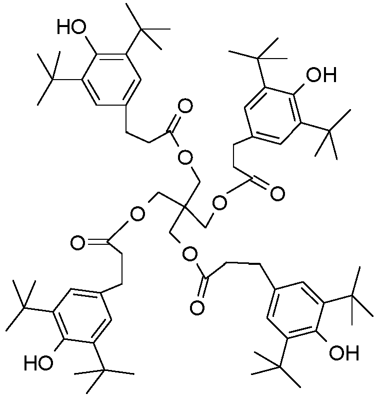 |
| 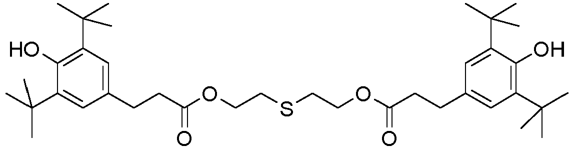 | |
| 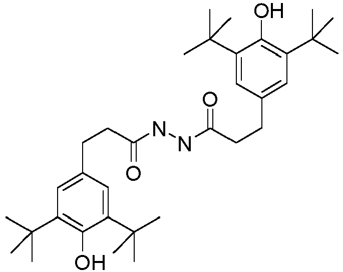 | 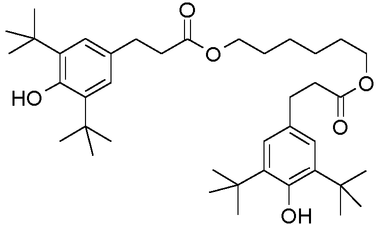 |
| 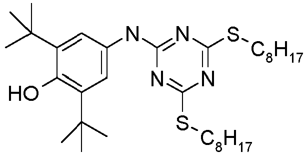 | 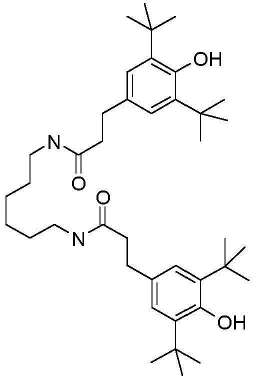 |
| 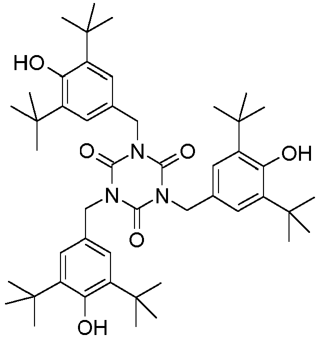 | 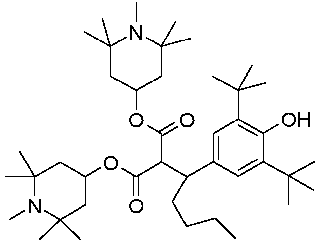 |
| 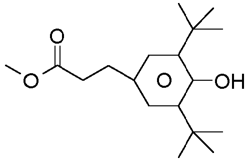 | 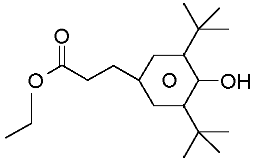 |
| 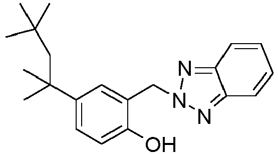 | 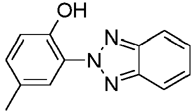 |
| 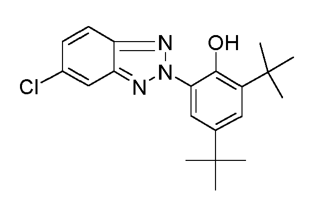 | 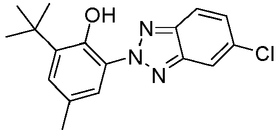 |
| 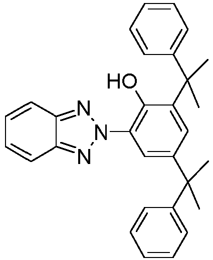 | 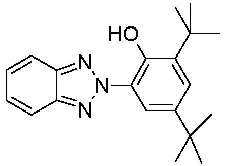 |
| 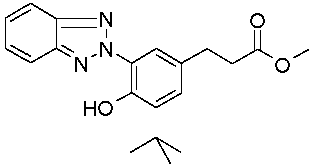 | 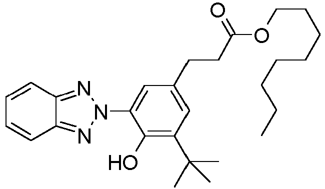 |
| 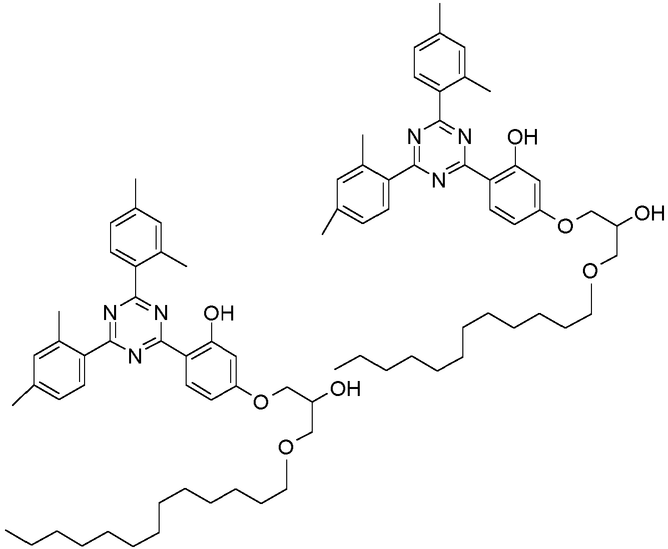 | |
| | 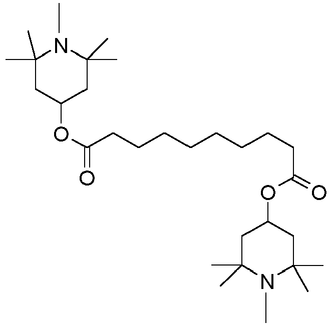 |
| 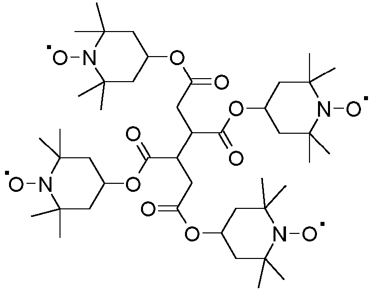 | |
| 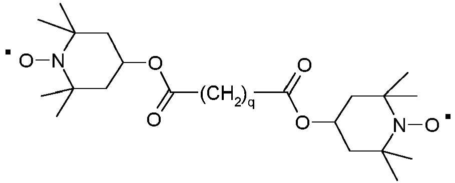 | |
| q = 1, 2, 3, 4, 5, 6, 7, 8, 9 or 10 | |

**Table E**

| Table E shows illustrative reactive mesogenic compounds (RMs) which can be used in the LC media in accordance with the present invention. | |
|---|---|
| 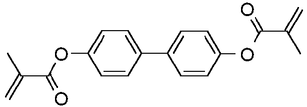 | RM-1 |
| 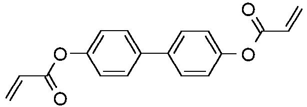 | RM-2 |
| 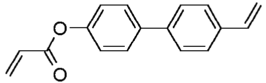 | RM-3 |
| 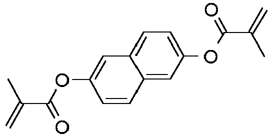 | RM-4 |
| 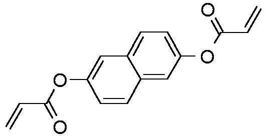 | RM-5 |
| 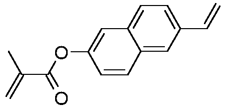 | RM-6 |
| 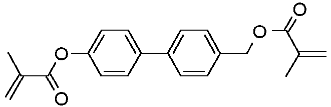 | RM-7 |
| 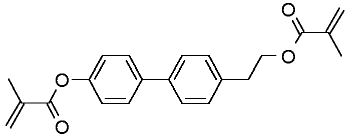 | RM-8 |
| 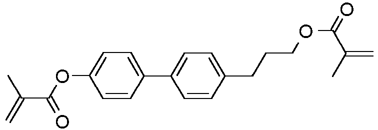 | RM-9 |
| 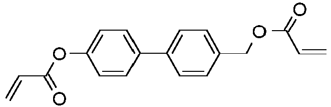 | RM-10 |
| 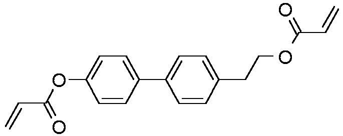 | RM-11 |
| 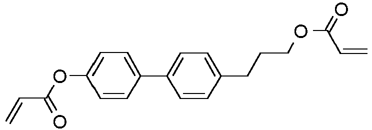 | RM-12 |
| 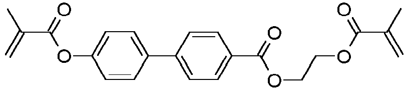 | RM-13 |
| 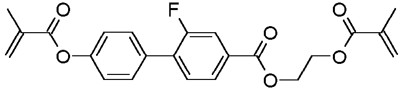 | RM-14 |
| 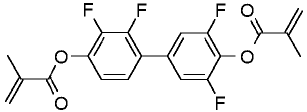 | RM-15 |
| 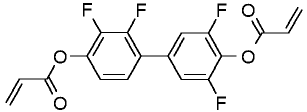 | RM-16 |
| 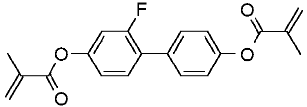 | RM-17 |
| 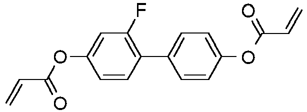 | RM-18 |
| 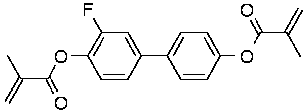 | RM-19 |
| 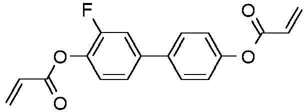 | RM-20 |
| 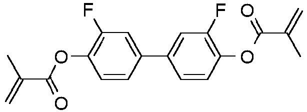 | RM-21 |
| 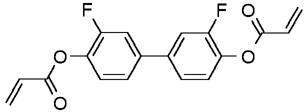 | RM-22 |
| 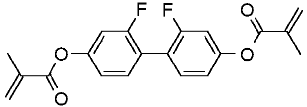 | RM-23 |
| 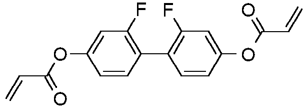 | RM-24 |
| 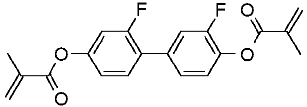 | RM-25 |
| 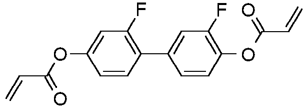 | RM-26 |
| 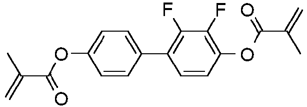 | RM-27 |
| 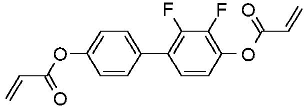 | RM-28 |
| 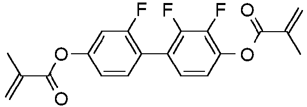 | RM-29 |
| 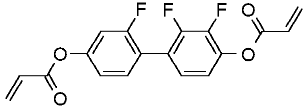 | RM-30 |
| 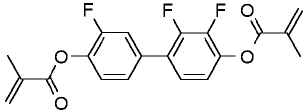 | RM-31 |
| 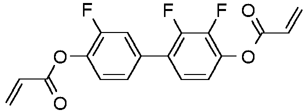 | RM-32 |
| 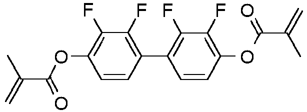 | RM-33 |
| 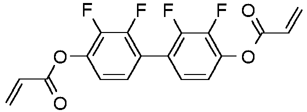 | RM-34 |
| 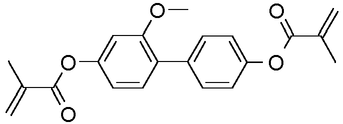 | RM-35 |
| 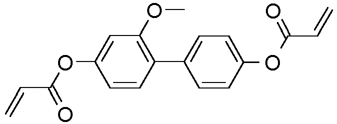 | RM-36 |
| 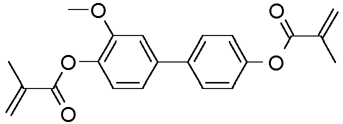 | RM-37 |
| 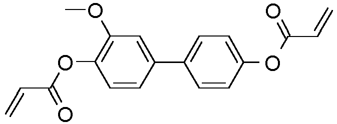 | RM-38 |
| 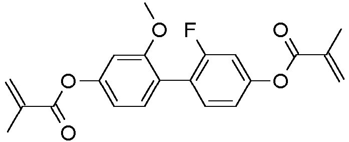 | RM-39 |
| 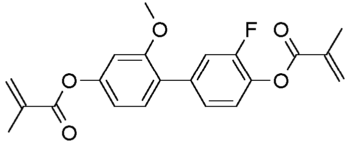 | RM-40 |
| 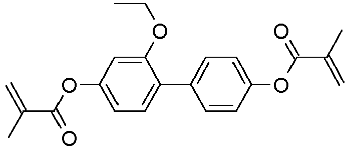 | RM-41 |
| 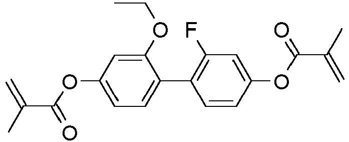 | RM-42 |
| 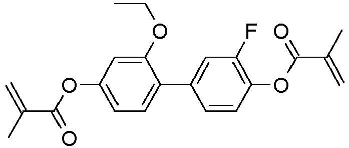 | RM-43 |
| 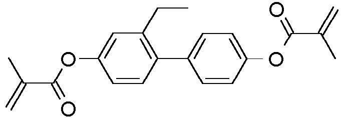 | RM-45 |
| 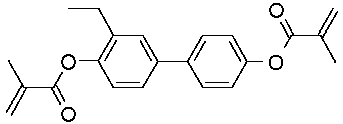 | RM-45 |
| 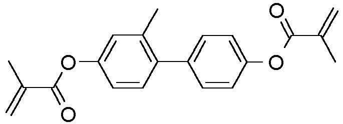 | RM-46 |
| 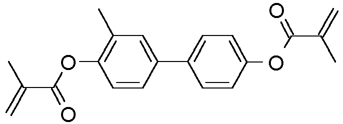 | RM-47 |
| 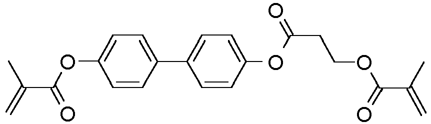 | RM-48 |
| 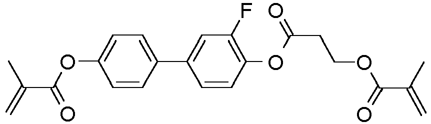 | RM-49 |
| 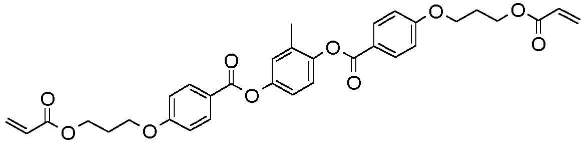 | RM-50 |
| 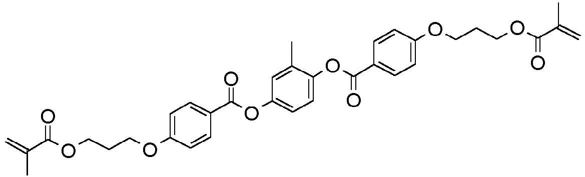 | RM-51 |
| 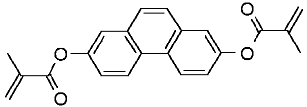 | RM-52 |
| 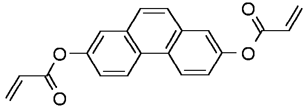 | RM-53 |
| 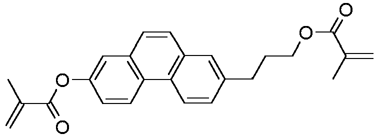 | RM-54 |
| 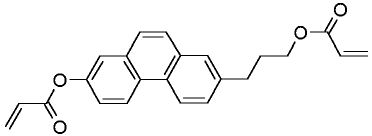 | RM-55 |
| 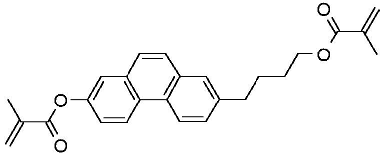 | RM-56 |
| 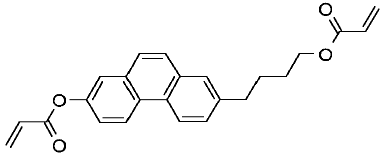 | RM-57 |
| 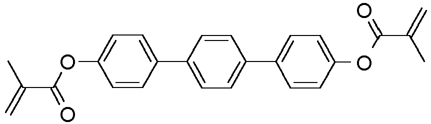 | RM-58 |
| 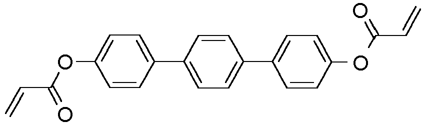 | RM-59 |
| 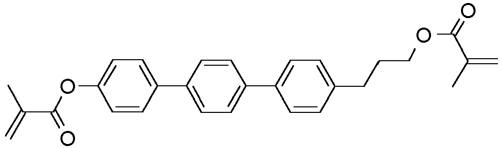 | RM-60 |
| 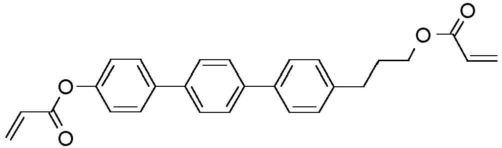 | RM-61 |
| 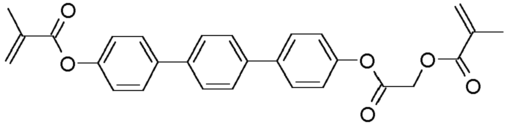 | RM-62 |
| 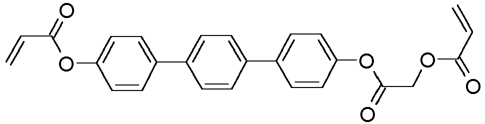 | RM-63 |
| 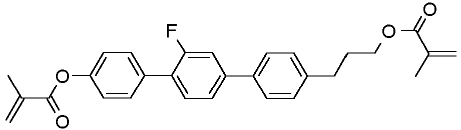 | RM-64 |
| 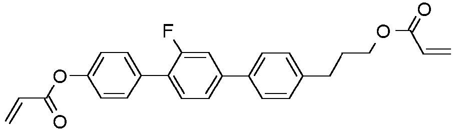 | RM-65 |
| 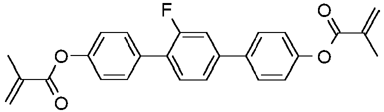 | RM-66 |
| 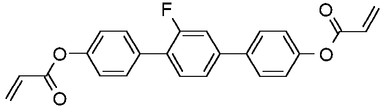 | RM-67 |
| 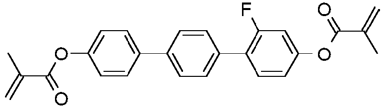 | RM-68 |
| 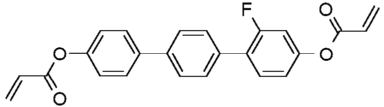 | RM-69 |
| 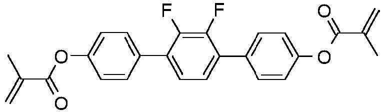 | RM-70 |
| 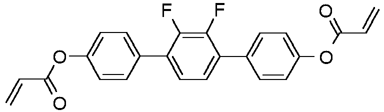 | RM-71 |
| 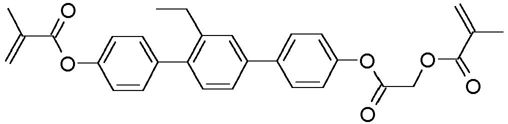 | RM-72 |
| 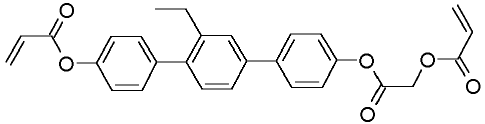 | RM-73 |
| 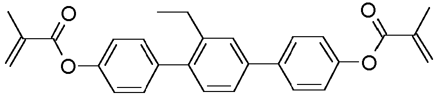 | RM-74 |
| 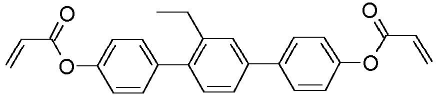 | RM-75 |
| 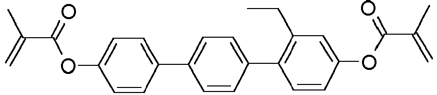 | RM-76 |
| 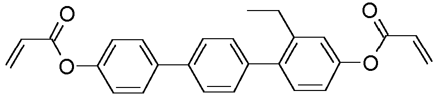 | RM-77 |
| 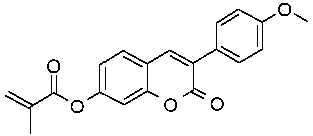 | RM-78 |
| 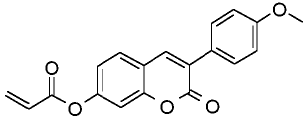 | RM-79 |
| 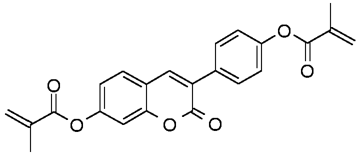 | RM-80 |
| 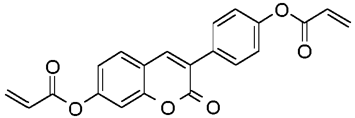 | RM-81 |
| 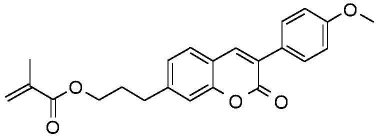 | RM-82 |
| 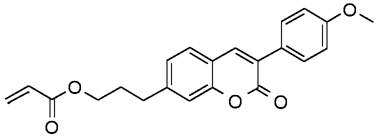 | RM-83 |
| 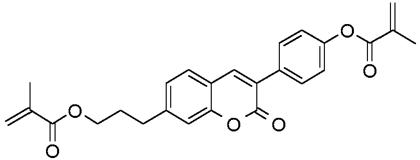 | RM-84 |
| 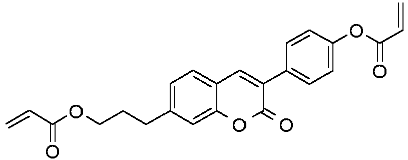 | RM-85 |
| 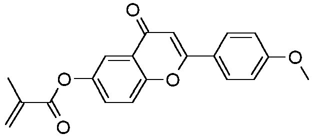 | RM-86 |
| 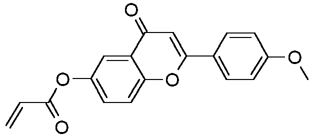 | RM-87 |
| 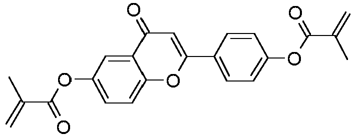 | RM-88 |
| 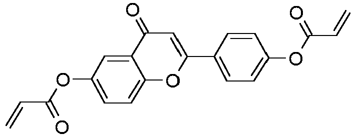 | RM-89 |
| 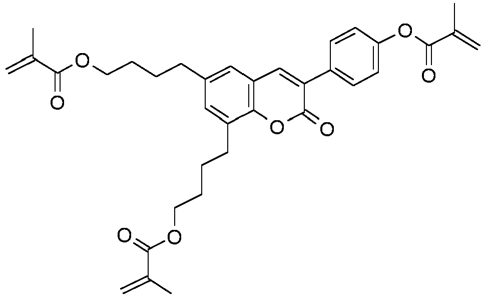 | RM-90 |
| 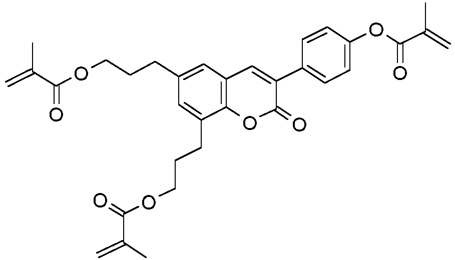 | RM-91 |
| 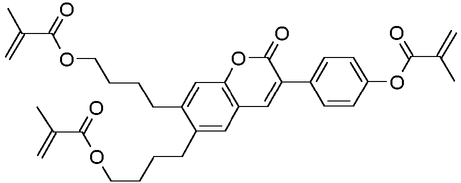 | RM-92 |
| 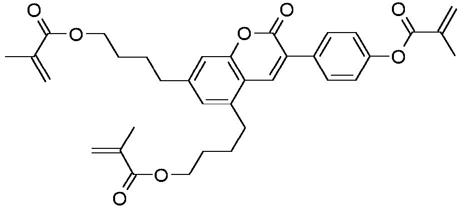 | RM-93 |
| 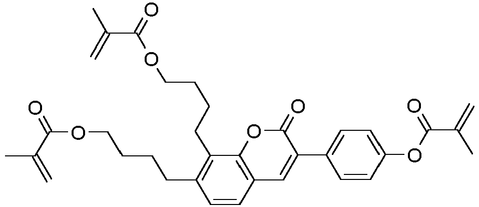 | RM-94 |
| 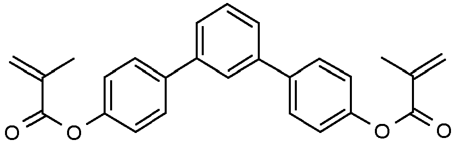 | RM-95 |
| 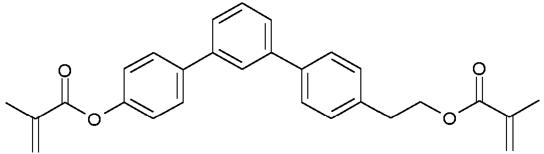 | RM-96 |
| 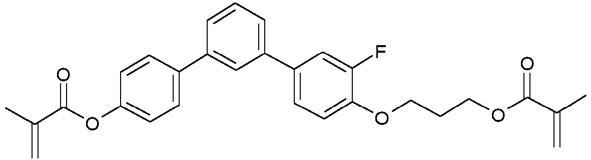 | RM-97 |
| 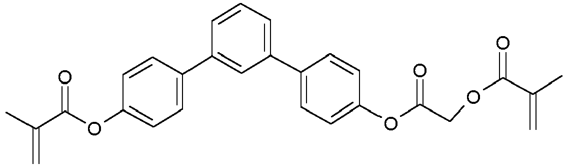 | RM-98 |
| 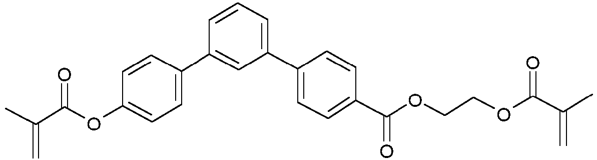 | RM-99 |
| 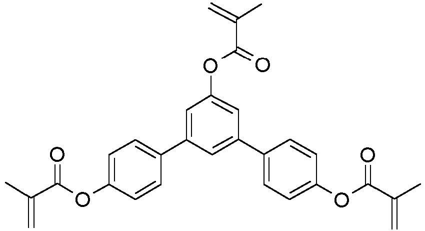 | RM-100 |
| 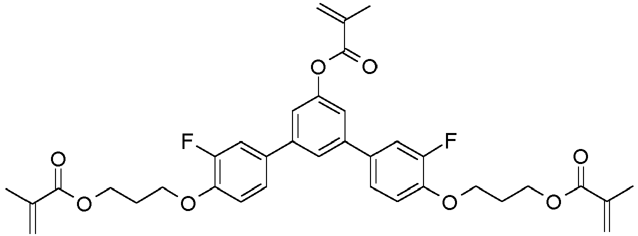 | RM-101 |
| 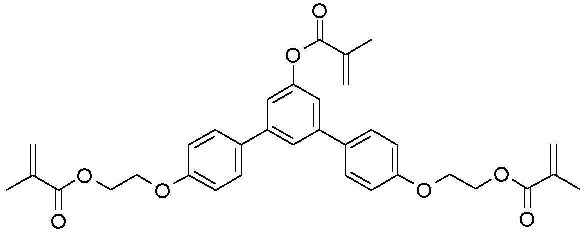 | RM-102 |
| 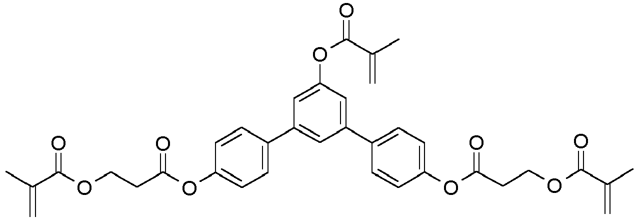 | RM-103 |
| 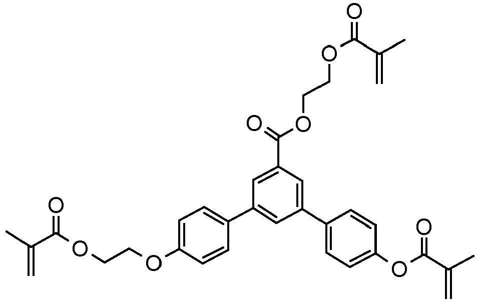 | RM-104 |
| 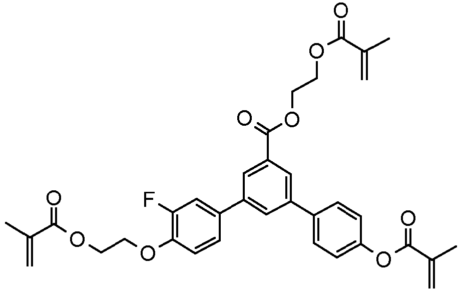 | RM-105 |
| 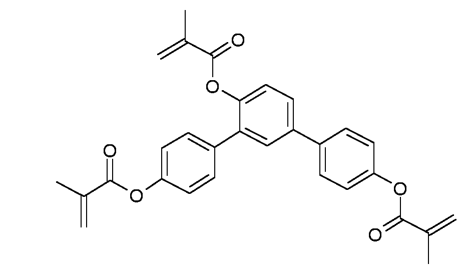 | RM-106 |
| 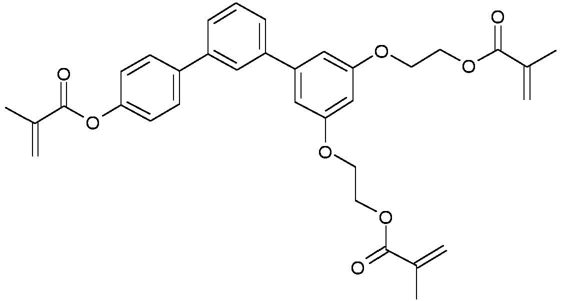 | RM-107 |
| 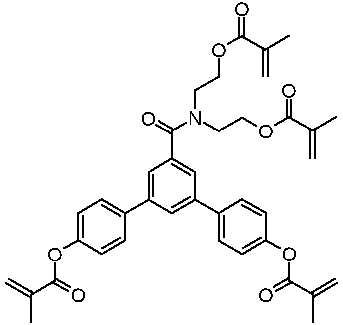 | RM-108 |
| 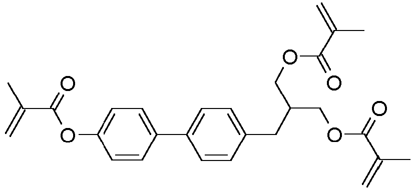 | RM-109 |
| 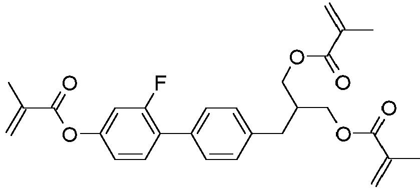 | RM-110 |
| 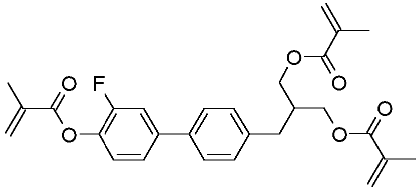 | RM-111 |
| 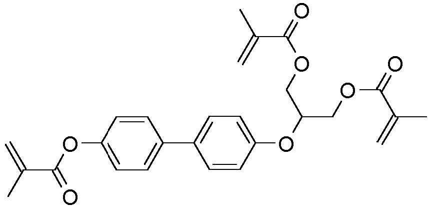 | RM-112 |
| 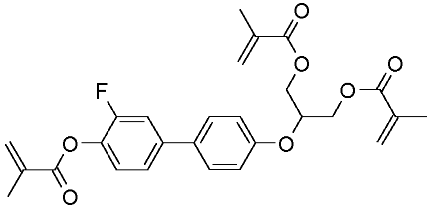 | RM-113 |
| 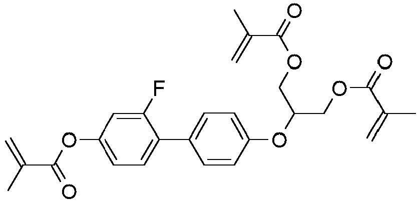 | RM-114 |
| 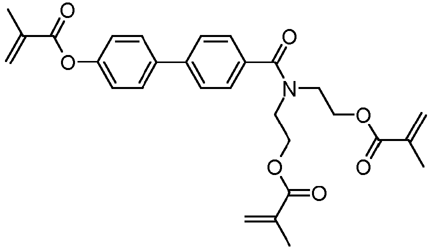 | RM-115 |
| 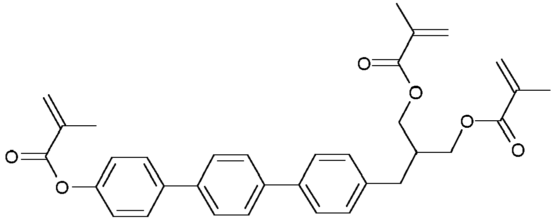 | RM-116 |
| 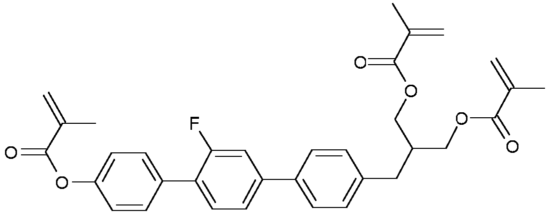 | RM-117 |
| 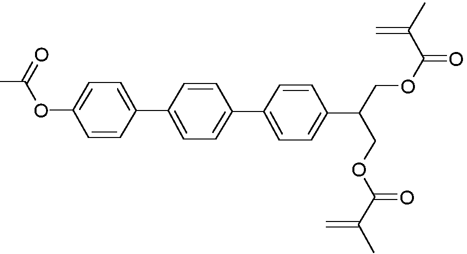 | RM-118 |
| 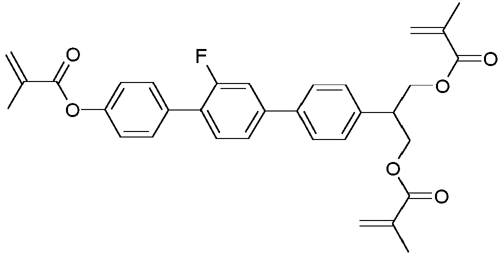 | RM-119 |
| 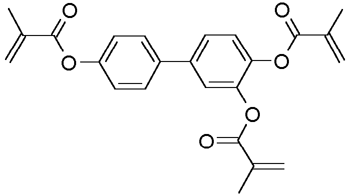 | RM-120 |
| 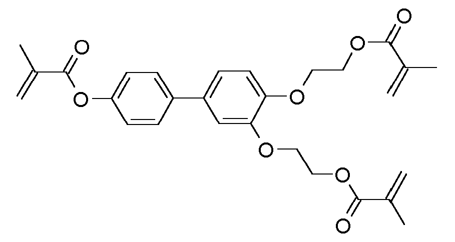 | RM-121 |
| 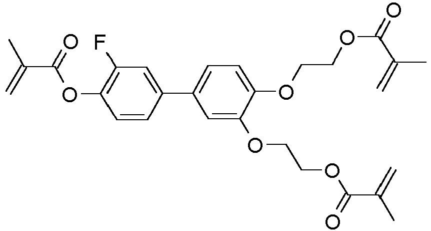 | RM-122 |
| 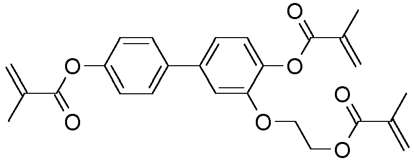 | RM-123 |
| 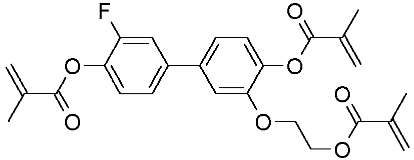 | RM-124 |
| 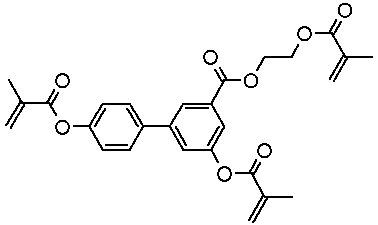 | RM-125 |
| 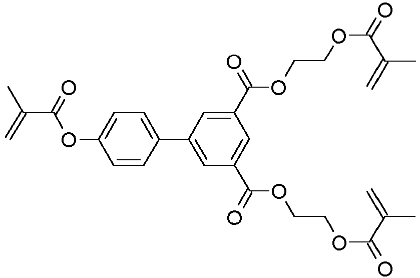 | RM-126 |
| 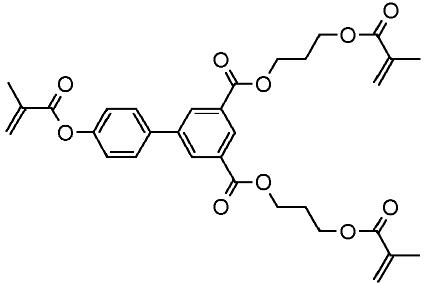 | RM-127 |
| 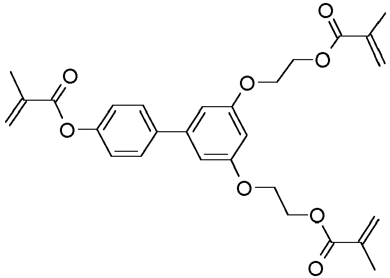 | RM-128 |
| 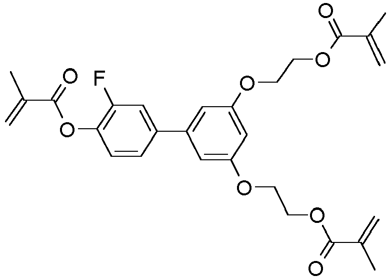 | RM-129 |
| 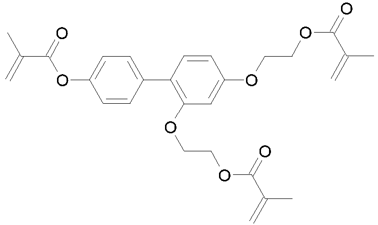 | RM-130 |
| 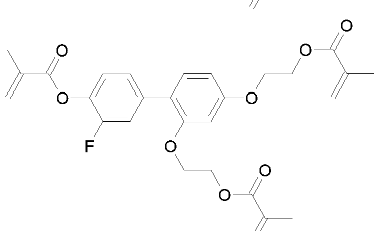 | RM-131 |
| 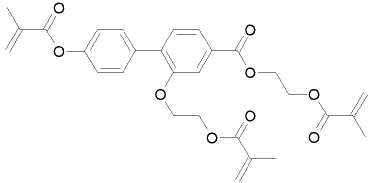 | RM-132 |
| 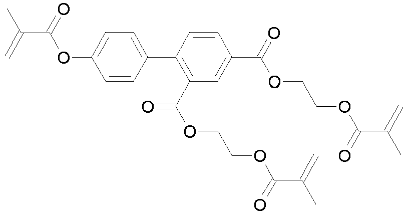 | RM-133 |
| 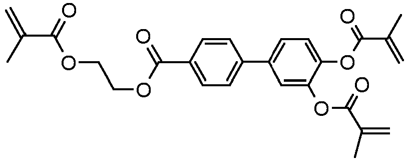 | RM-134 |
| 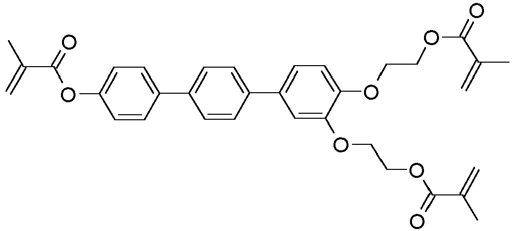 | RM-135 |
| 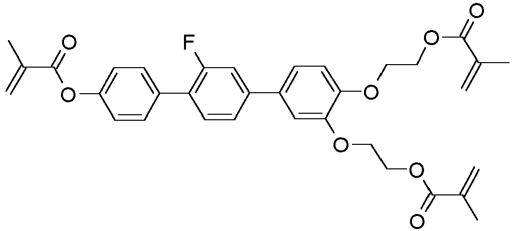 | RM-136 |
| 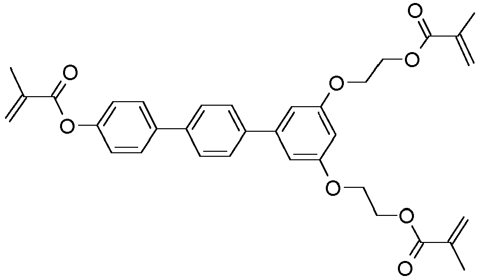 | RM-137 |
| 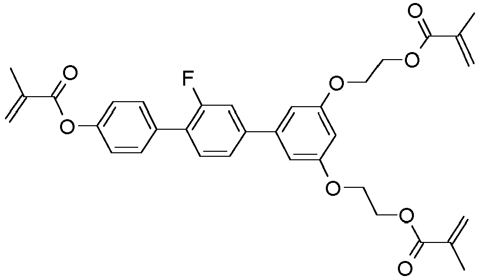 | RM-138 |
| 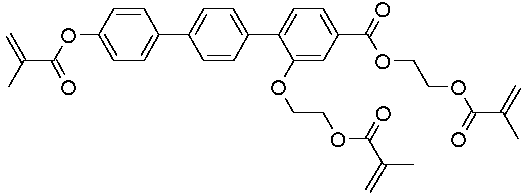 | RM-139 |
| 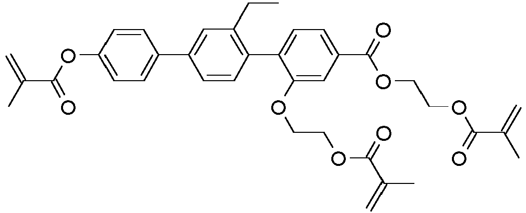 | RM-140 |
| 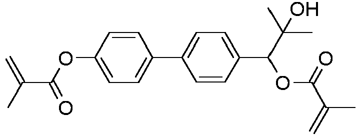 | RM-141 |
| 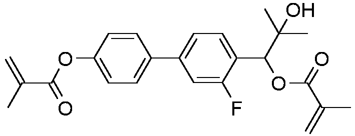 | RM-142 |
| 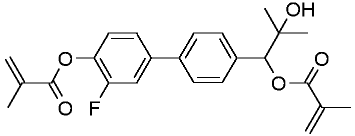 | RM-143 |

In a preferred embodiment, the LC media according to the invention comprise one or more polymerisable compounds, preferably selected from the polymerisable compounds of the formulae RM-1 to RM-143. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121 and RM-122 are particularly preferred.

**Table E**

| Table E shows self-alignment additives for vertical alignment which can be used in LC media according to the present invention together with the polymerizable compounds of formula I: |
|---|
| 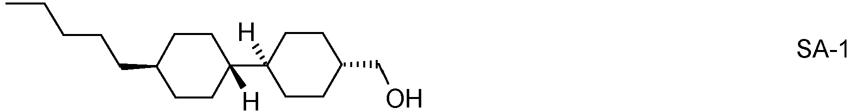 |
| 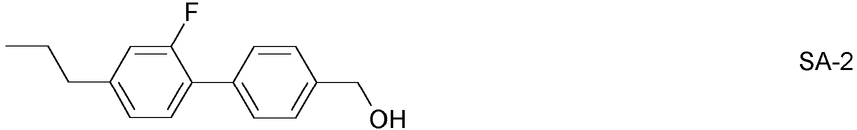 |
| 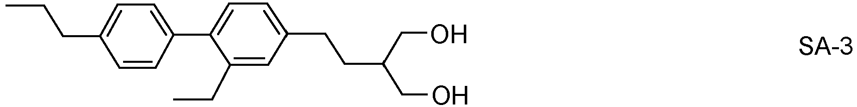 |
| 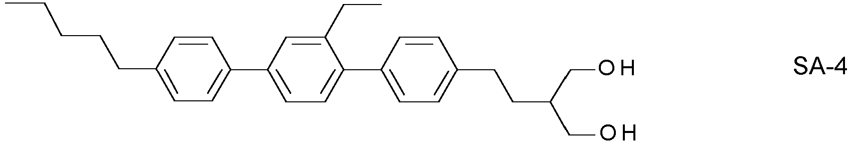 |
| 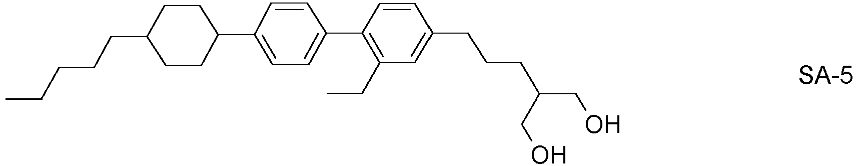 |
| 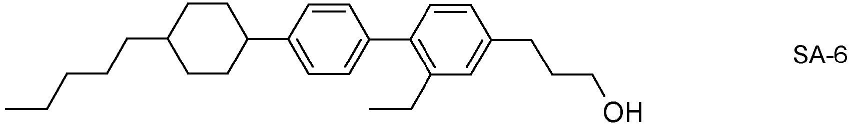 |
| 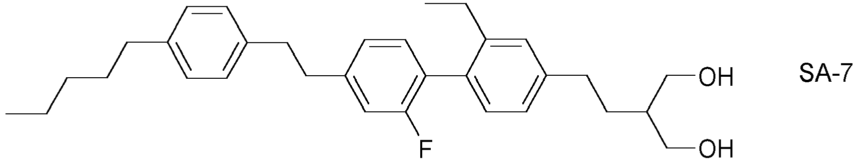 |
| 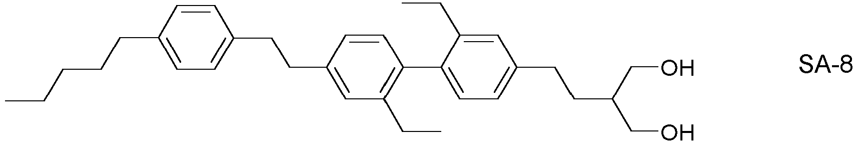 |
| 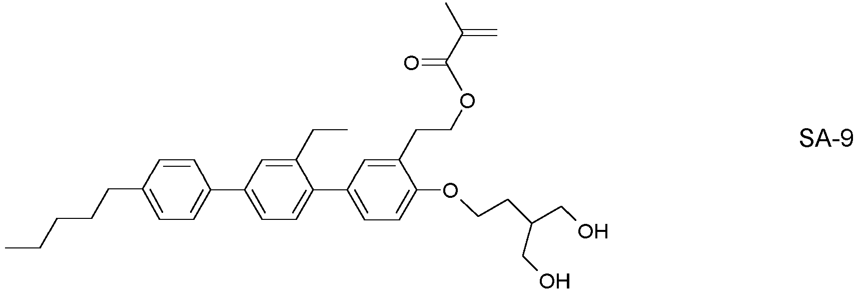 |
| 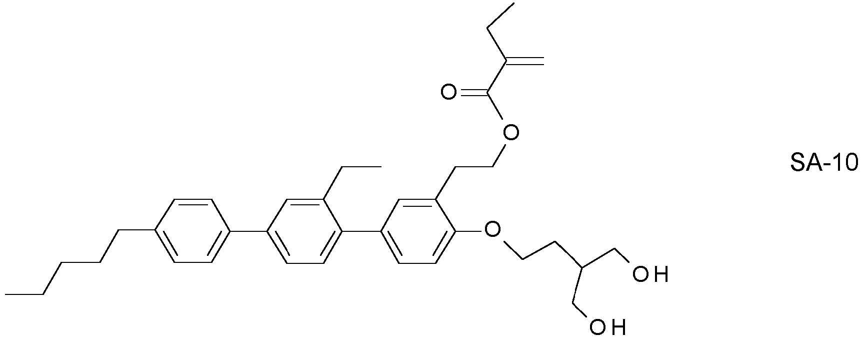 |
| 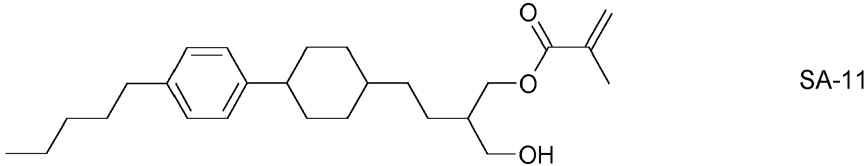 |
| 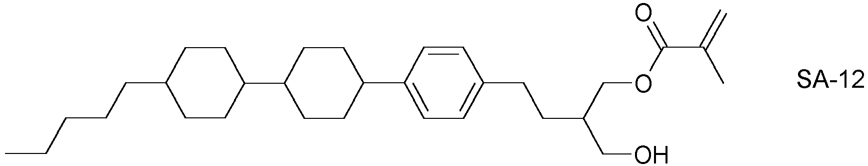 |
| 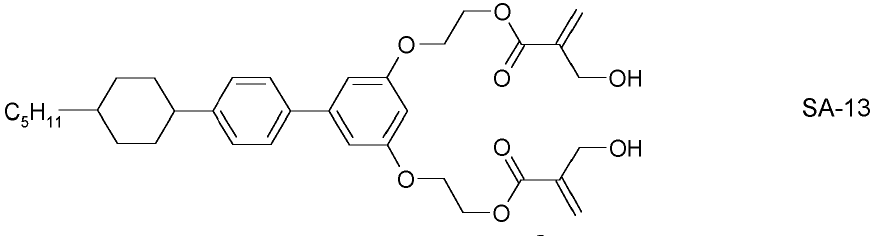 |
| 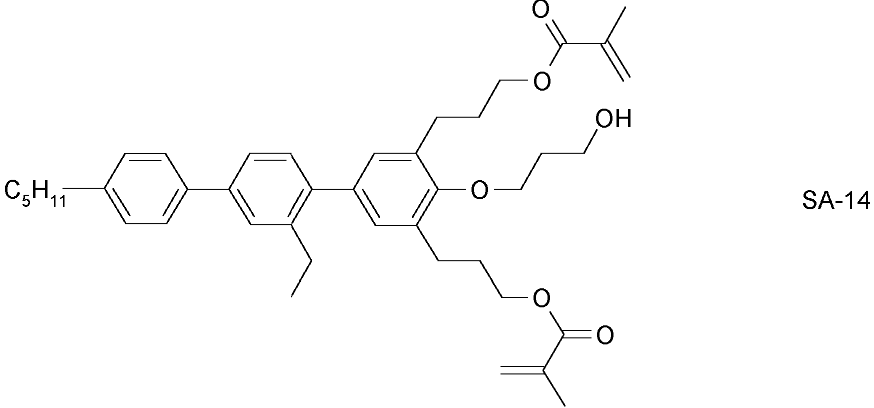 |
| 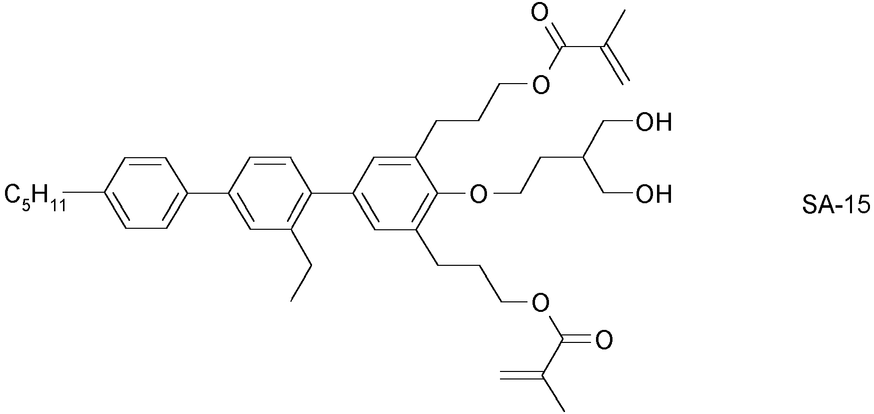 |
| 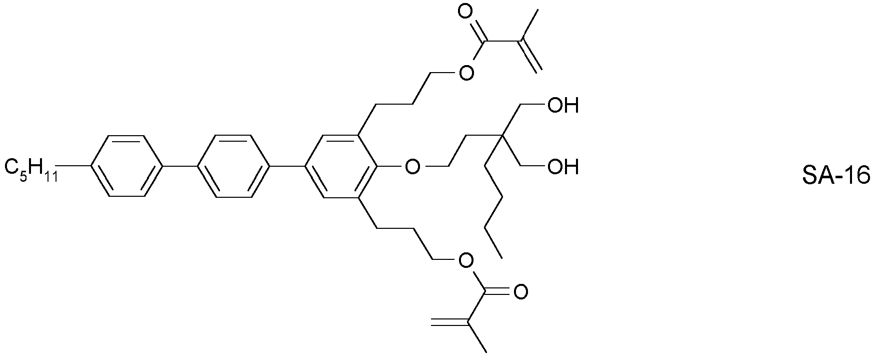 |
| 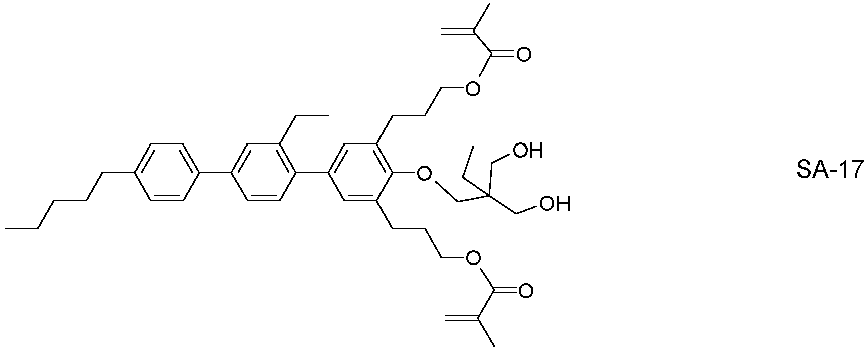 |
| 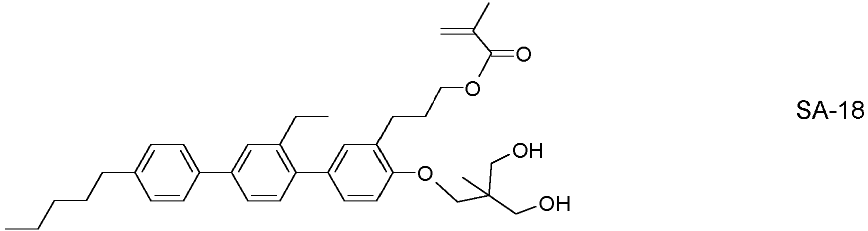 |
| 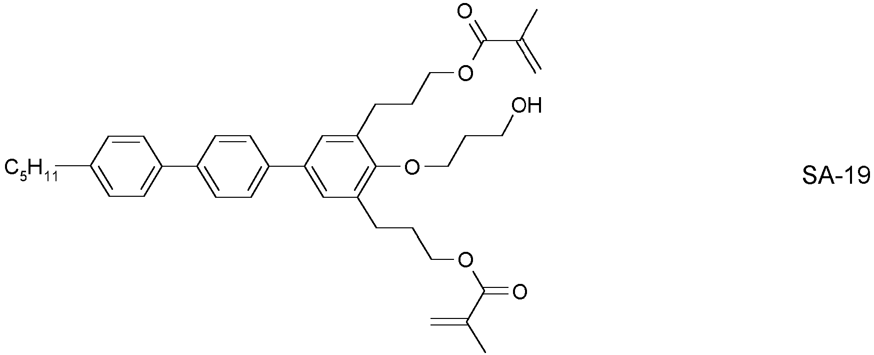 |
| 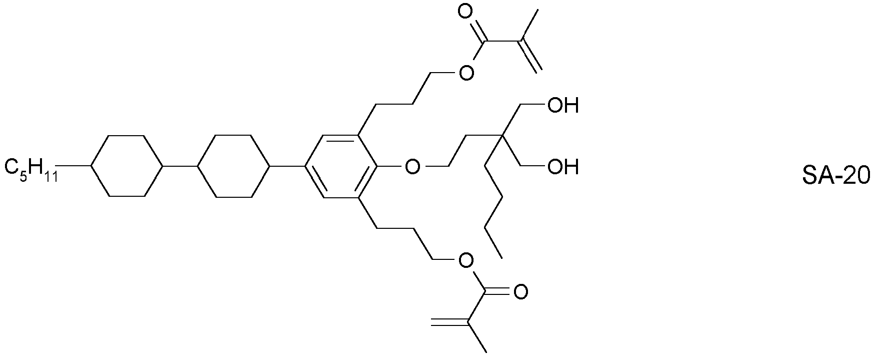 |
| 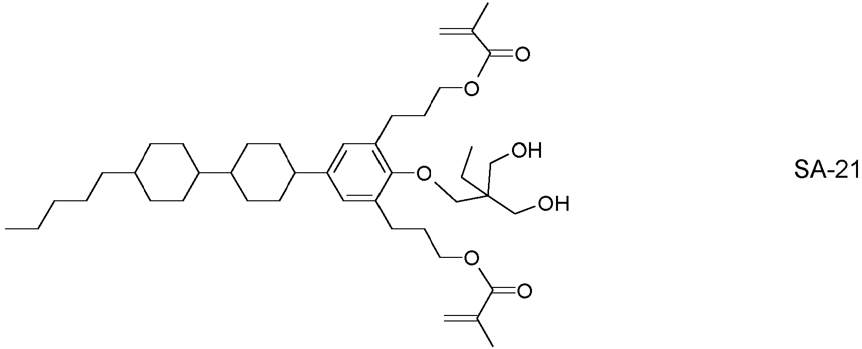 |
| 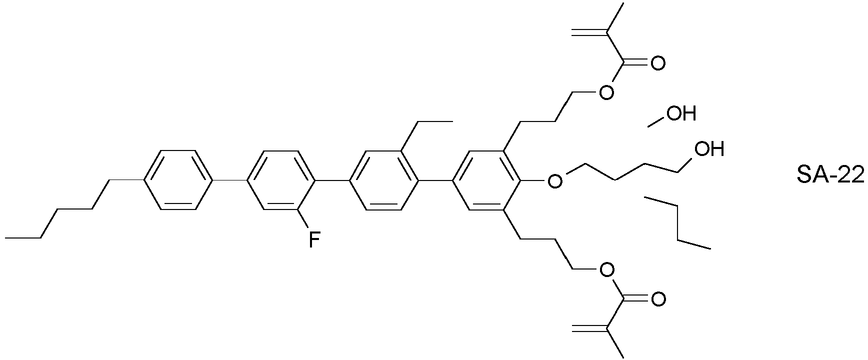 |
| 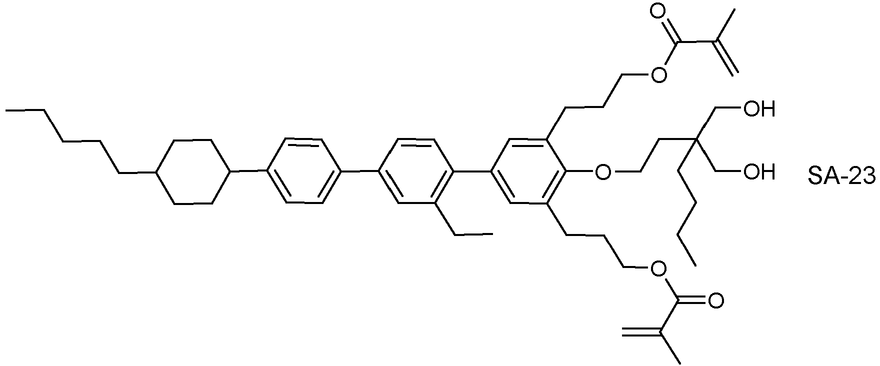 |
| 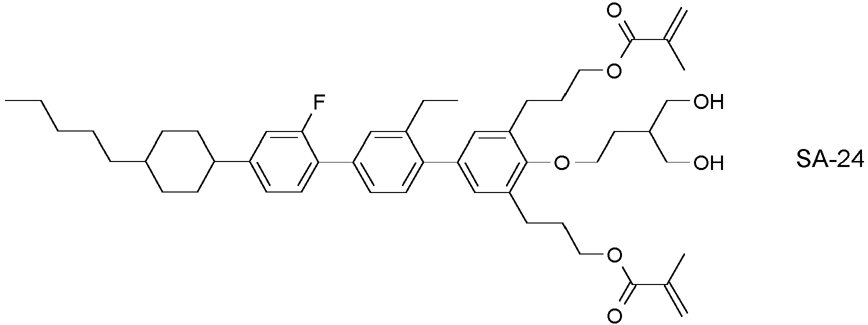 |
| 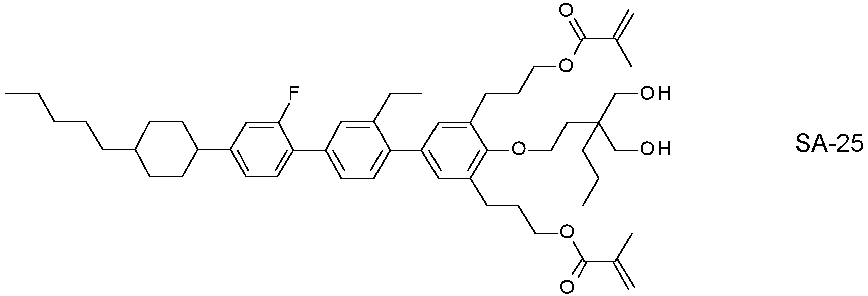 |
| 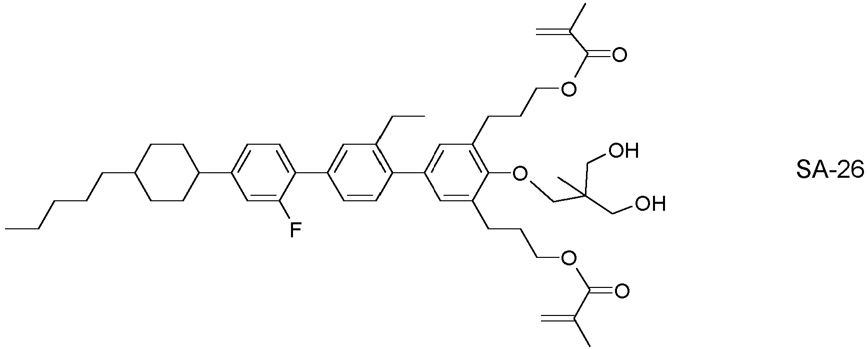 |
| 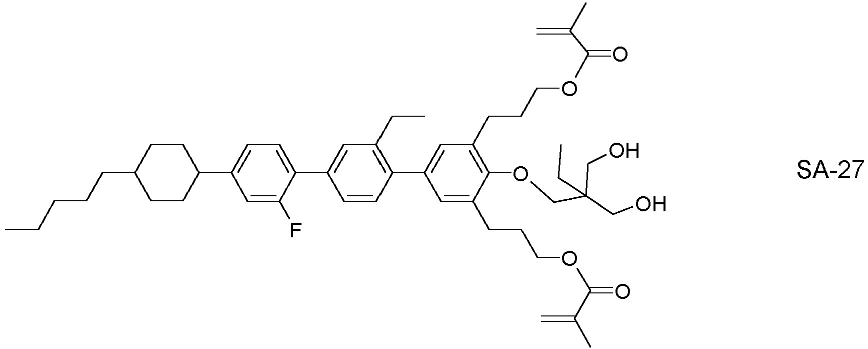 |
| 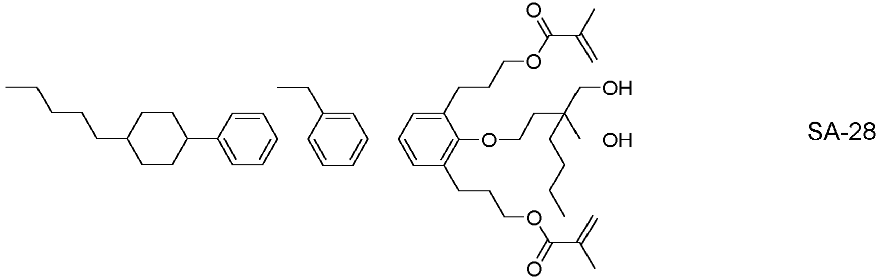 |
| 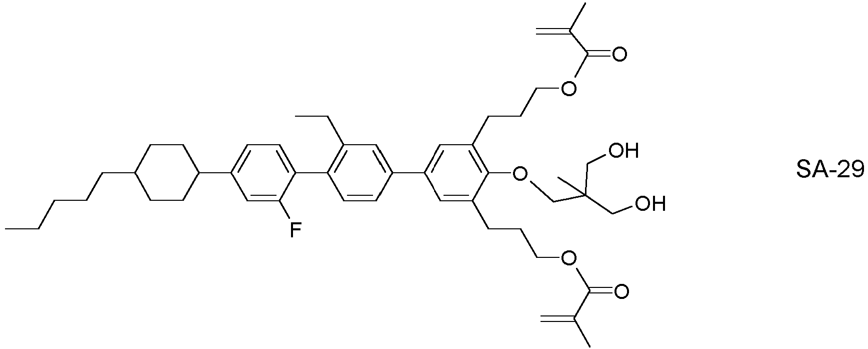 |
| 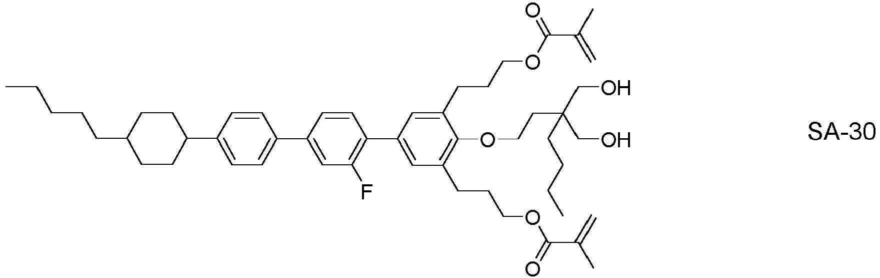 |
| 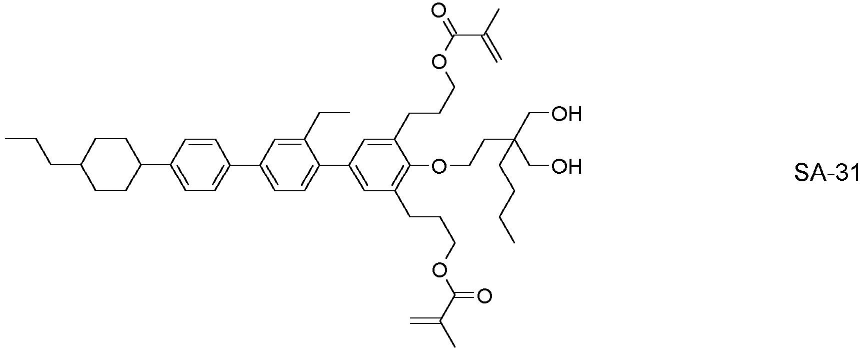 |
| 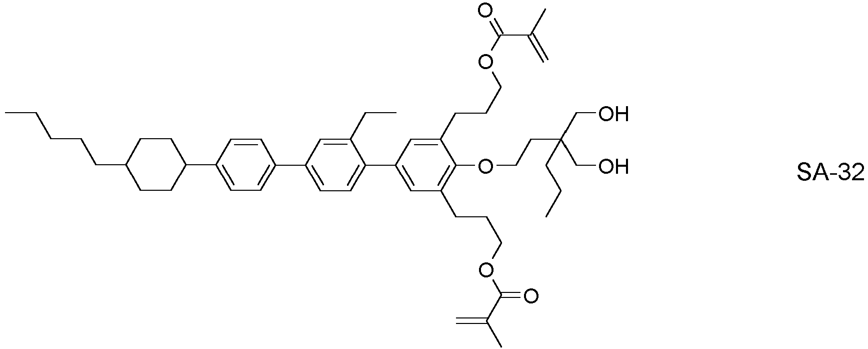 |
| 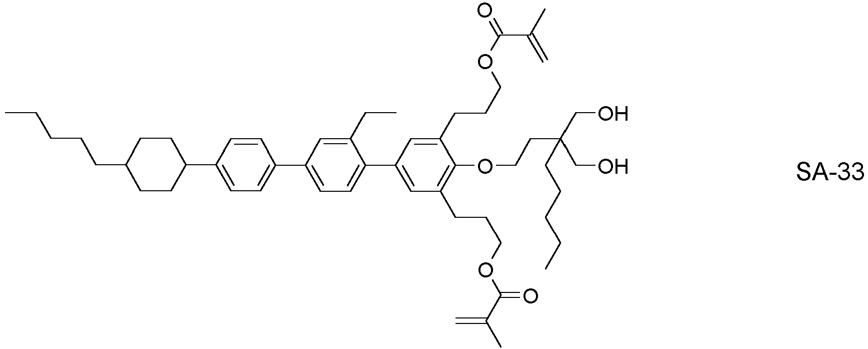 |
| 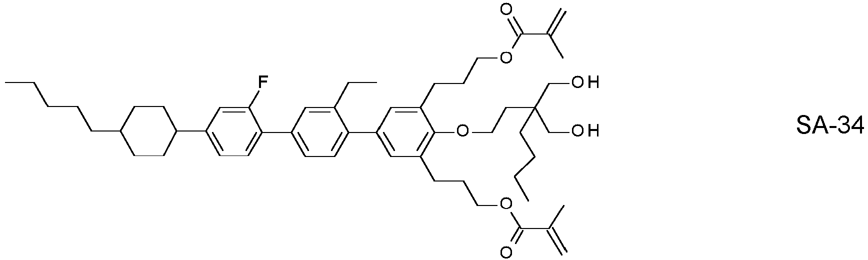 |
| 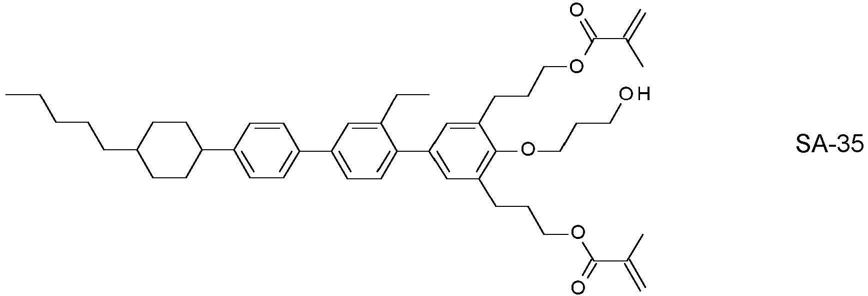 |
| 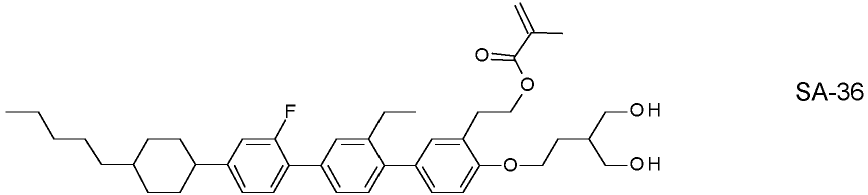 |
| 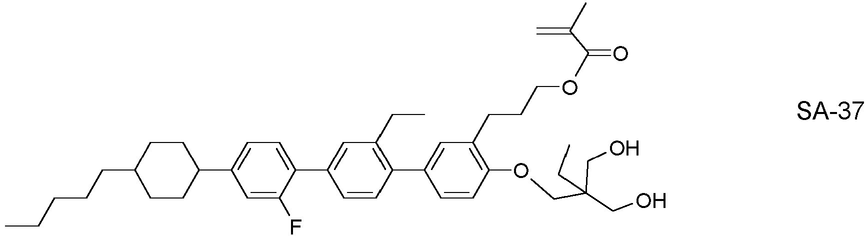 |
| 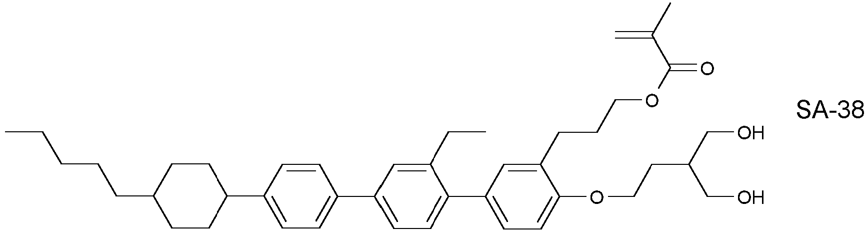 |
| 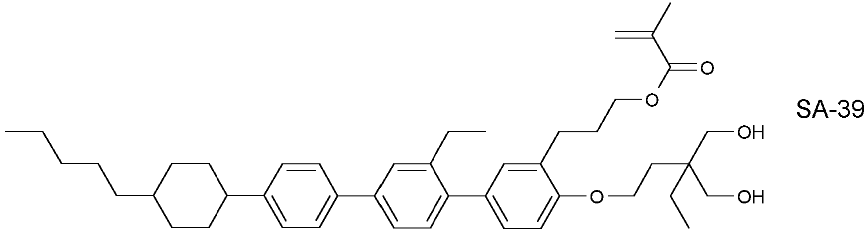 |
| 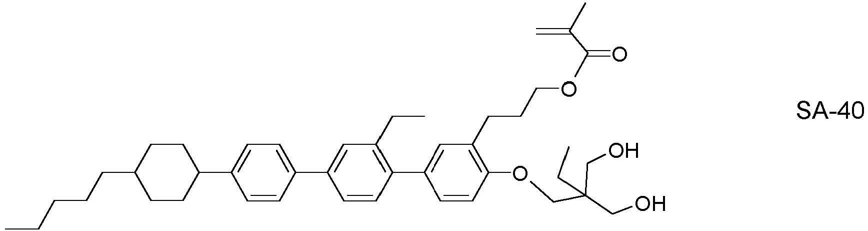 |
| 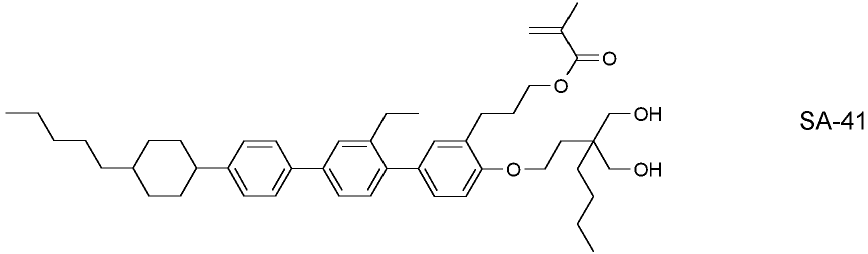 |
| 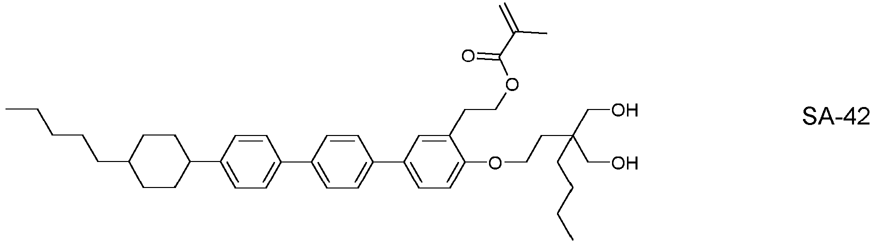 |
| 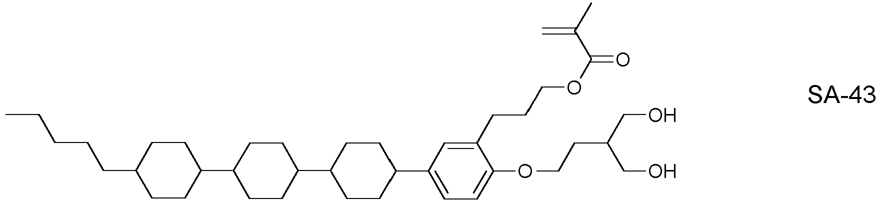 |
| 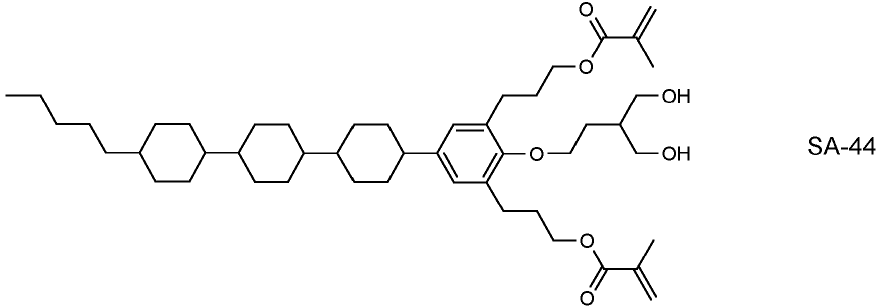 |
| 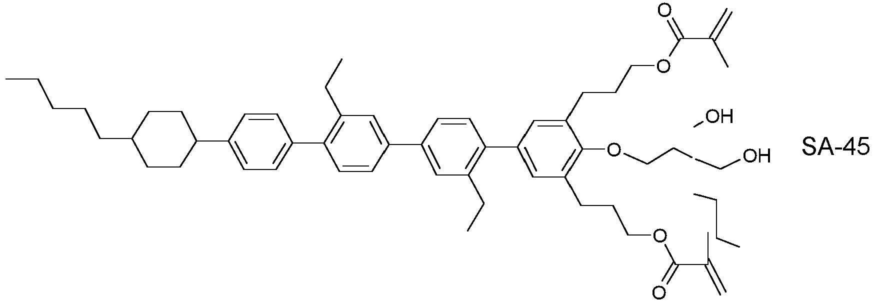 |
| 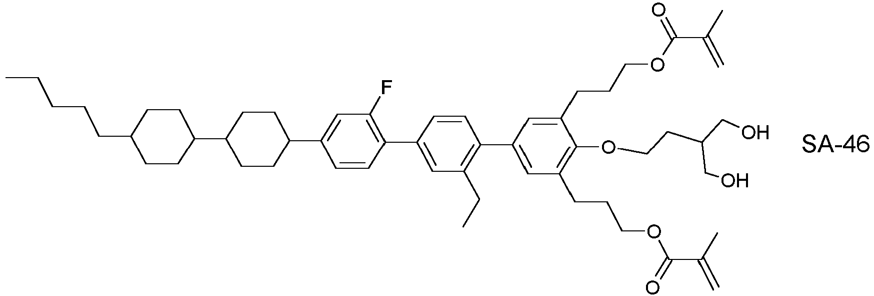 |
| 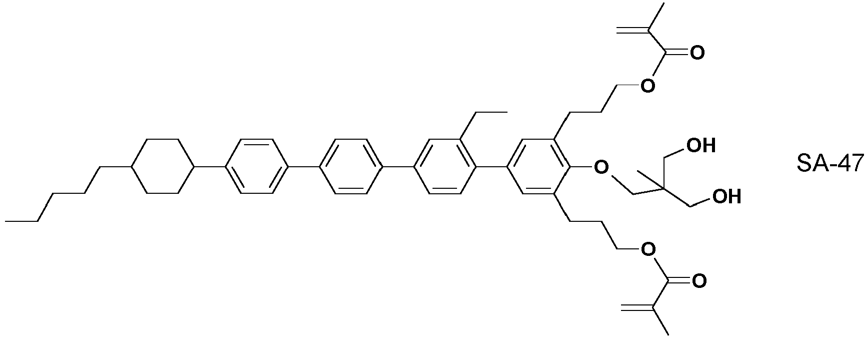 |
| 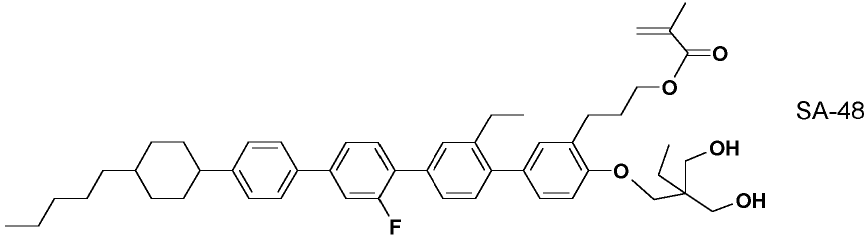 |

In a preferred embodiment, the LC media and displays according to the present invention comprise one or more SA additives selected from formulae SA-1 to SA-48, preferably from formulae SA-14 to SA-48, very preferably from formulae SA-20 to SA-34 and SA-48, preferably in combination with one or more RMs of formula M.

The following examples are intended to explain the invention without limiting it.

Above and below, unless explicitly noted otherwise, all percentage data denote per cent by weight, and relate to the corresponding mixture as a whole, comprising all solid or liquid-crystalline components, without solvents.

Furthermore, unless explicitly noted otherwise, all temperatures are indicated in in degrees Celsius (°C). m.p. denotes melting point, cl.p. = clearing point. Furthermore, C = crystalline state, N = nematic phase, S = smectic phase and I = isotropic phase. The data between these symbols represent the transition temperatures.

In addition, the following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε_{∥}: dielectric permittivity parallel to the director at 20°C and 1 kHz,
- Δε: dielectric anisotropy at 20°C and 1 kHz,
- cl.p., Tₙᵢ: clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

All physical properties are and have been determined in accordance with "Merck Liquid Crystals, Physical Properties of Liquid Crystals", Status Nov. 1997, Merck KGaA, Germany, and apply for a temperature of 20°C unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

### Comparison Example 1

The LC mixture C1 is formulated as follows:

| | | | |
|---|---|---|---|
| CDUQU-3-F | 6.0% | cl.p. | 110.1°C |
| DPGU-4-F | 3.0% | Δn | 0.1108 |
| PGUQU-4-F | 7.0% | Δε | +5.8 |
| CCP-30CF3 | 8.0% | ε_{∥} | 8.9 |
| CCP-40CF3 | 4.0% | K₁ | 17.7 |
| CCP-50CF3 | 3.0% | K₃ | 18.7 |
| CCP-V-1 | 18.0% | K₃/K₁ | 1.06 |
| CCP-V2-1 | 9.0% | V₀ | 1.84 V |
| CLP-3-T | 4.5% | γ₁ | 112 mPas |
| PGP-2-2V | 6.5% | LTS -20°C | 1000 h |
| CC-3-V1 | 8.0% | | |
| CCH-301 | 10.0% | | |
| CCH-303 | 3.0% | | |
| PCH-301 | 10.0% | | |

To 99.95% of the mixture C1 are added 0.05% of the stabiliser S2-1:

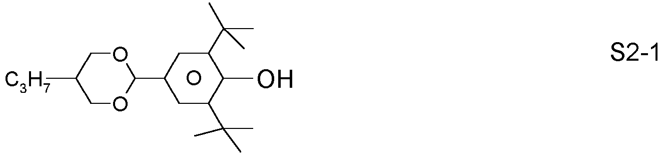

To 99.85% of the resulting LC mixture are added 0.05% of the stabiliser S2-1 and 0.1% of the stabiliser S3-1 to give the mixture C11.

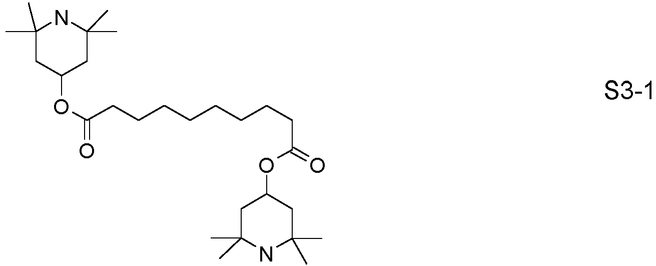

### Example 1

The LC mixture N1 is formulated as follows:

| | | | |
|---|---|---|---|
| CPGP-5-2 | 1.0% | cl.p. | 110.5°C |
| CPGU-3-OT | 1.5% | Δn | 0.1105 |
| CCG-V-F | 8.5% | Δε | +5.8 |
| CCP-3-1 | 5.0% | ε_{∥} | 8.9 |
| CCP-3F.F.F | 10.0% | K₁ | 17.2 |
| CCP-V-1 | 16.0% | K₃ | 19.7 |
| CCP-V2-1 | 9.0% | K₃/K₁ | 1.14 |
| CCQU-2-F | 5.0% | V₀ | 1.82 V |
| CCQU-3-F | 10.0% | | |
| CDU-2-F | 10.0% | LTS -20°C | 1000 h |
| PGP-2-2V | 5.5% | | |
| CC-3-V1 | 10.0% | | |
| PP-1-2V1 | 7.0% | | |
| PP-1-3 | 1.5% | | |

The mixture contains 1.0% of the compound CPGP-5-2 of formula I.

To 99.9% of the mixture N1 are added 0.1% of the stabiliser S3-1 to give the mixture N11.

### Example 2

The LC mixture N2 is formulated as follows:

| | | | |
|---|---|---|---|
| CPGP-5-2 | 1.0% | cl.p. | 109.7°C |
| CPGU-3-OT | 2.5% | Δn | 0.1115 |
| DGUQU-4-F | 3.0% | Δε | +5.8 |
| CCG-V-F | 9.0% | ε_{∥} | 8.8 |
| CCP-3-1 | 6.0% | K₁ | 17.2 |
| CCP-2F.F.F | 5.0% | K₃ | 19.4 |
| CCP-3F.F.F | 10.0% | K₃/K₁ | 1.13 |
| CCP-5F.F.F | 8.0% | V₀ | 1.81 V |
| CCP-V-1 | 16.0% | | |
| CCP-V2-1 | 4.5% | LTS -20°C | 1000 h |
| CCQU-3-F | 10.0% | | |
| PGP-2-2V | 4.5% | | |
| CC-3-V1 | 11.0% | | |
| PP-1-2V1 | 4.5% | | |
| PP-1-3 | 5.0% | | |

The mixture contains 1.0% of the compound CPGP-5-2 of formula I.

To 99.9% of the mixture N2 are added 0.1% of the stabiliser S3-1 to give the mixture N22.

### VHR values

The VHR values of mixtures C11, N11 and N22 are measured at 100C, 3Hz and 1V in VHR test cell before and after light exposure using a LED lamp.

The results are shown in Table 1.

**Table 1 - VHR values before and after BL load, 3Hz/100°C**

| | C11 | N11 | N22 |
|---|---|---|---|
| | VHR / % | | |
| Initial | 61.5 | 74.9 | 79.6 |
| After BL 144h | 75.4 | 78.9 | 82.7 |

From Table 1 it can be seen that the mixtures N11 and N22 according to the present invention, which contain a compound of formula I, show significantly higher VHR values that mixture C11, both before and after backlight stress.

### Comparison Example 2

The LC mixture C2 is formulated as follows:

| | | | |
|---|---|---|---|
| CPGU-3-OT | 2.0% | cl.p. | 109.9°C |
| DGUQU-4-F | 2.5% | Δn | 0.1116 |
| CCG-V-F | 11.0% | Δε | +5.6 |
| CCP-3-1 | 5.0% | ε_{∥} | 8.6 |
| CCP-3F.F.F | 10.0% | K₁ | 17.5 |
| CCP-5F.F.F | 8.0% | K₃ | 19.2 |
| CCP-V-1 | 12.0% | K₃/K₁ | 1.10 |
| CCP-V2-1 | 6.0% | V₀ | 1.85 V |
| CCQU-2-F | 5.0% | | |
| CCQU-3-F | 10.0% | | |
| PGP-2-2V | 8.0% | | |
| CC-3-2V1 | 2.5% | | |
| CC-3-V1 | 11.0% | | |
| PP-1-2V1 | 2.5% | | |
| PP-1-3 | 4.5% | | |

The mixture does not show satisfying LTS.

### Example 3

The LC mixture N3 is formulated as follows:

| | | | |
|---|---|---|---|
| CPGP-5-2 | 0.5% | cl.p. | 110.0°C |
| CPGU-3-OT | 2.0% | Δn | 0.1107 |
| DGUQU-4-F | 3.0% | Δε | +5.7 |
| CCG-V-F | 9.5% | ε_{∥} | 8.7 |
| CCP-3-1 | 5.0% | K₁ | 17.6 |
| CCP-3F.F.F | 10.0% | K₃ | 19.2 |
| CCP-5F.F.F | 6.5% | K₃/K₁ | 1.09 |
| CCP-V-1 | 14.0% | V₀ | |
| CCP-V2-1 | 5.5% | | |
| CCQU-2-F | 6.0% | | |
| CCQU-3-F | 10.0% | | |
| PGP-2-2V | 6.5% | | |
| CC-3-2V1 | 3.0% | | |
| CC-3-V1 | 11.0% | | |
| PP-1-2V1 | 2.5% | | |
| PP-1-3 | 5.0% | | |

The mixture contains 0.5% of the compound CPGP-5-2 of formula I.

### Example 4

The LC mixture N4 is formulated as follows:

| | | | |
|---|---|---|---|
| CPGP-5-2 | 1.0% | cl.p. | 109.4°C |
| CPGU-3-OT | 2.0% | Δn | 0.1109 |
| DGUQU-4-F | 3.0% | Δε | +5.8 |
| CCG-V-F | 10.0% | ε_{∥} | 8.7 |
| CCP-3-1 | 5.0% | K₁ | 17.5 |
| CCP-3F.F.F | 10.0% | K₃ | 19.4 |
| CCP-5F.F.F | 8.0% | K₃/K₁ | 1.11 |
| CCP-V-1 | 12.5% | V₀ | 1.83 V |
| CCP-V2-1 | 5.5% | LTS -20°C | 1000 h |
| CCQU-2-F | 5.0% | | |
| CCQU-3-F | 10.0% | | |
| PGP-2-2V | 6.0% | | |
| CC-3-2V1 | 3.0% | | |
| CC-3-V1 | 11.0% | | |
| PP-1-2V1 | 3.0% | | |
| PP-1-3 | 5.0% | | |

The mixture contains 1.0% of the compound CPGP-5-2 of formula I, and shows good LTS at -20°C.

### Example 5

The LC mixture N5 is formulated as follows:

| | | | |
|---|---|---|---|
| CPGP-5-2 | 2.0% | cl.p. | 109.3°C |
| CPGU-3-OT | 1.5% | Δn | 0.1104 |
| DGUQU-4-F | 3.0% | Δε | +5.7 |
| CCG-V-F | 9.5% | ε_{∥} | 8.7 |
| CCP-3-1 | 5.0% | K₁ | 17.5 |
| CCP-3F.F.F | 10.0% | K₃ | 19.3 |
| CCP-5F.F.F | 7.5% | K₃/K₁ | 1.10 |
| CCP-V-1 | 14.0% | V₀ | 1.84 V |
| CCP-V2-1 | 4.0% | LTS -20°C | 1000 h |
| CCQU-2-F | 6.0% | | |
| CCQU-3-F | 10.0% | | |
| PGP-2-2V | 5.0% | | |
| CC-3-2V1 | 3.0% | | |
| CC-3-V1 | 11.0% | | |
| PP-1-2V1 | 3.5% | | |
| PP-1-3 | 5.0% | | |

The mixture contains 2.0% of the compound CPGP-5-2 of formula I, and shows good LTS at -20°C.

### Example 6

The LC mixture N6 is formulated as follows:

| | | | |
|---|---|---|---|
| CPGP-5-2 | 4.0% | cl.p. | 109.3°C |
| CPGU-3-OT | 1.5% | Δn | 0.1100 |
| DGUQU-4-F | 3.0% | Δε | +5.7 |
| CCG-V-F | 9.5% | ε_{∥} | 8.7 |
| CCP-3-1 | 5.0% | K₁ | 17.5 |
| CCP-3F.F.F | 10.0% | K₃ | 19.6 |
| CCP-5F.F.F | 8.0% | K₃/K₁ | 1.12 |
| CCP-V-1 | 14.0% | V₀ | 1.83 V |
| CCP-V2-1 | 2.5% | LTS -20°C | 1000 h |
| CCQU-2-F | 6.0% | LTS -30°C | 1000 h |
| CCQU-3-F | 10.0% | | |
| PGP-2-2V | 2.5% | | |
| CC-3-2V1 | 3.0% | | |
| CC-3-V1 | 11.0% | | |
| PP-1-2V1 | 5.0% | | |
| PP-1-3 | 5.0% | | |

The mixture contains 4.0% of the compound CPGP-5-2 of formula I, and shows good LTS at -20°C and -30°C.

### Example 7

The LC mixture N7 is formulated as follows:

| | | | |
|---|---|---|---|
| CPGP-5-2 | 6.0% | cl.p. | 110.0°C |
| CPGU-3-OT | 1.5% | Δn | 0.1094 |
| DGUQU-4-F | 2.0% | Δε | +5.8 |
| CCG-V-F | 10.0% | ε_{∥} | 8.8 |
| CCP-3-1 | 4.5% | K₁ | 17.5 |
| CCP-3F.F.F | 10.0% | K₃ | 19.6 |
| CCP-5F.F.F | 9.5% | K₃/K₁ | 1.12 |
| CCP-V-1 | 6.0% | V₀ | 1.83 V |
| CCP-V2-1 | 6.5% | LTS -20°C | 1000 h |
| CCQU-2-F | 8.0% | LTS -30°C | 1000 h |
| CCQU-3-F | 10.0% | LTS -40°C | 1000 h |
| PGP-2-2V | 1.5% | | |
| CC-3-2V1 | 4.0% | | |
| CC-3-V1 | 10.5% | | |
| PP-1-2V1 | 5.0% | | |
| PP-1-3 | 5.0% | | |

The mixture contains 6.0% of the compound CPGP-5-2 of formula I, and shows good LTS at -20°C, -30°C and -40°C.

### VHR values

The VHR values of mixtures C2, N4, N5, N6 and N7 are measured at at 60C, 60Hz/3Hz and 1V in VHR test cell before and after light exposure for varying using a LED lamp.

The results are shown in Tables 2 and 3.

**Table 2 - VHR values before and after BL load, 60Hz/60°C**

| | C2 | N4 | N5 | N6 | N7 |
|---|---|---|---|---|---|
| | VHR / % | | | | |
| Initial | 99.2 | 99.1 | 99.3 | 99.3 | 99.4 |
| After BL 24h | 93.8 | 94.0 | 94.1 | 94.3 | 94.5 |
| After BL 120h | 76.7 | 76.6 | 76.7 | 77.5 | 78.8 |

**Table 3 - VHR values before and after BL load, 3Hz/60°C**

| | C2 | N4 | N5 | N6 | N7 |
|---|---|---|---|---|---|
| | VHR / % | | | | |
| Initial | 93.0 | 93.6 | 94.5 | 94.4 | 94.8 |
| After BL 24h | 70.7 | 71.0 | 72.3 | 73.6 | 74.8 |
| After BL 120h | 21.6 | 21.7 | 22.0 | 23.0 | 24.5 |

From Tables 2 and 3 it can be seen that the mixtures N4-N7 according to the present invention, which contain a compound of formula I, show higher VHR values than mixture C2 after backlight stress.

### Example 8

To 99.95% of the LC mixture of Example 7 are added 0.05% of stabiliser S1-1.

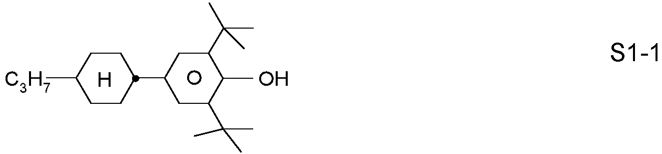

### Example 9

To 99.65% of the LC mixture of Example 7 are added 0.05% of stabiliser S1-1 and 0.3% of the monomer RM-1.

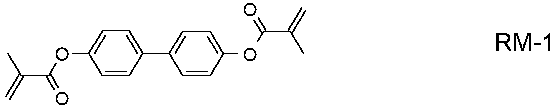

### Example 10

To 99.7% of the LC mixture of Example 7 are added 0.3% of the monomer RM-35.

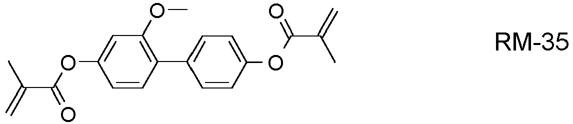

### Example 11

To 99.65% of the LC mixture of Example 7 are added 0.05% of stabiliser S2-1 and 0.3% of the monomer RM-64.

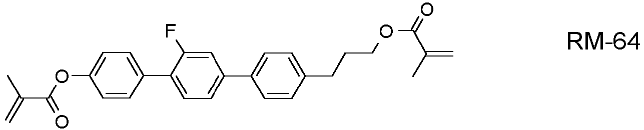

### Example 12

To 99.7% of the LC mixture of Example 6 are added 0.3% of the monomer RM-120.

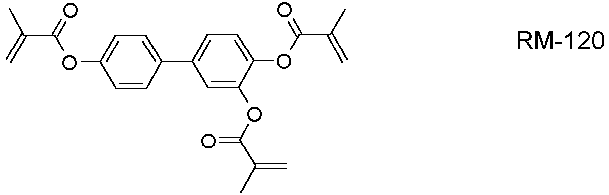

### Example 13

To 99.699% of the LC mixture of Example 5 are added 0.3% of the monomer RM-19 and 0.001% of Irgacure 651^{®}.

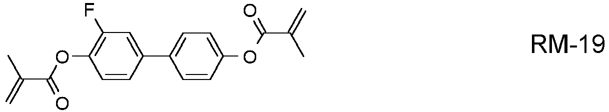

### Example 14

To 99.7% of the LC mixture of Example 4 are added 0.3% of the monomer RM-121.

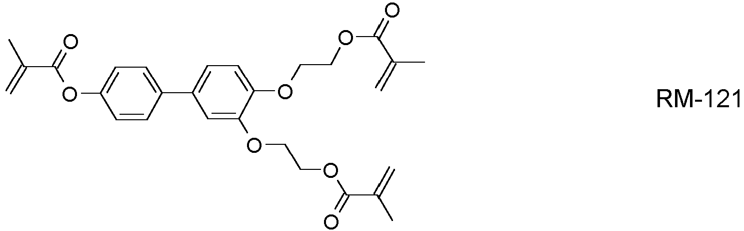

### Example 15

To 99.7% of the LC mixture of Example 6 are added 0.3% of the monomer RM-122.

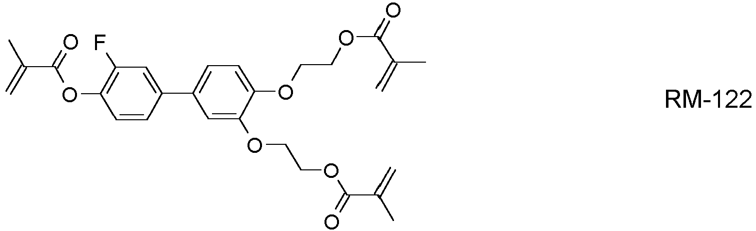

### Example 16

To 99.7% of the LC mixture of Example 7 are added 0.3% of the monomer RM-91.

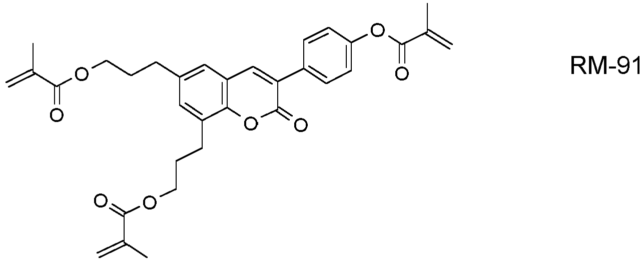

### Example 17

To 99.98% of the LC mixture of Example 7 are added 0.02% of stabiliser S1-1.

### Example 18

To 99.99% of the LC mixture of Example 7 are added 0.01% of stabiliser S2-1.

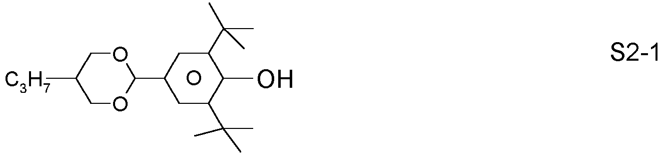

### Example 19

To 99.98% of the LC mixture of Example 3 are added 0.02% of stabiliser stabiliser S3-1.

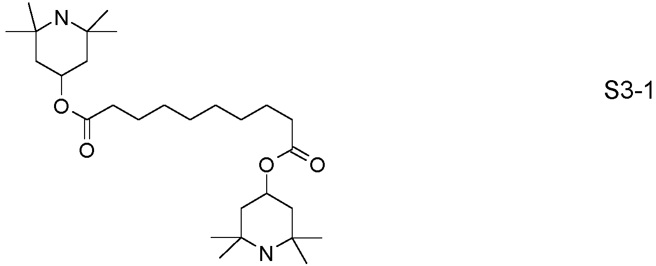

### Example 20

To 99.95% of the LC mixture of Example 6 are added 0.05% of stabiliser S3-2.

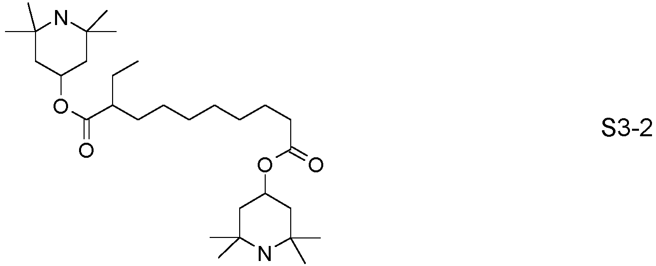

### Example 21

To 99.98% of the LC mixture of Example 7 are added 0.02% of stabiliser S3-3.

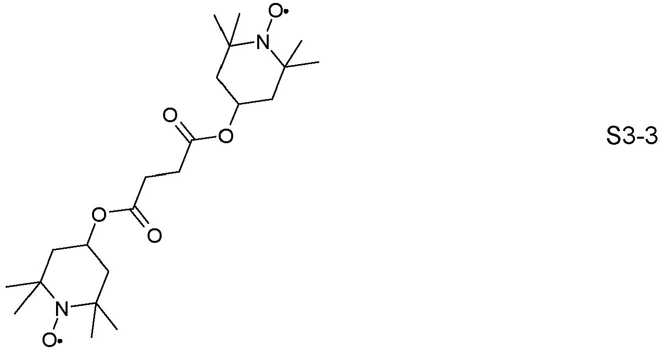

### Example 22

To 99.7% of the LC mixture of Example 4 are added 0.3% of the monomer RM-39.

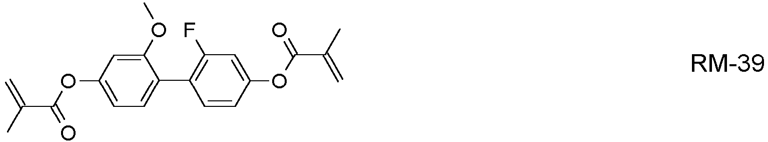

## Claims

1. An LC medium with positive dielectric anisotropy, **characterized in that** it contains one or more compounds of formula I in a concentration of >0 and ≤ 10% 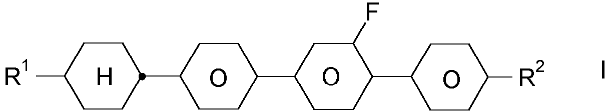
in which R¹ and R² independently of each other denote alkyl having 1 to 6 C atoms,
and at least one compound of formula XII: 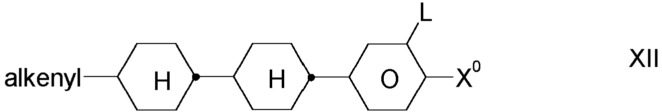
in which
X⁰ denote F, Cl, CN, SF₅, SCN, NCS, a halogenated alkyl radical, a halogenated alkenyl radical, a halogenated alkoxy radical or a halogenated alkenyloxy radical having up to 6 C atoms,
"alkenyl" denote C₂₋₆-alkenyl,
L denotes H or F,
and further **characterised in that** it does not contain any compounds of the following formulae: 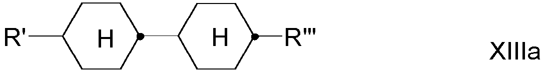 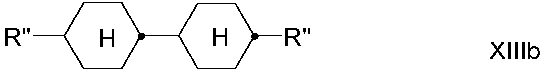 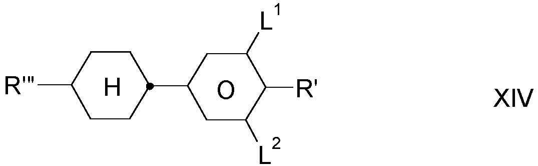
in which L¹ and L² denote independently of one another H or F, R' denotes on each occurrence identically or differently alkyl,or alkoxy with 1 to 12 C atoms, R" denotes on each occurrence identically or differently alkenyl with 2 to 7 C atoms which contains a terminal vinyl group, and R‴ denotes R' or R".

2. The LC medium according to Claim 1, **characterized in that** it has a birefringence <0.15.

3. The LC medium according to Claim 1 or 2, **characterized in that** it comprises one or more compounds of the formula I selected from the following subformulae.

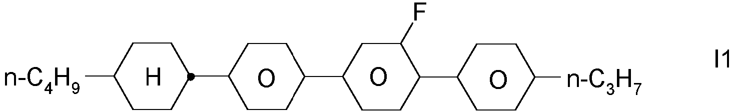

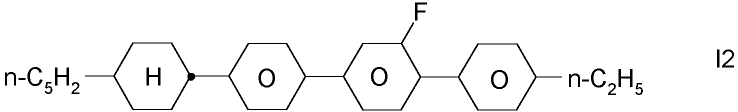

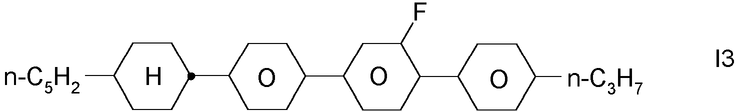

4. The LC medium according to one or more of Claims 1 to 3, **characterized in that** the concentration of the compounds of formula I or its subformulae in the LC medium is from 1.0 to 10%.

5. The LC medium according to one or more of Claims 1 to 4, **characterised in that** it additionally comprises one or more compounds selected from the following formulae 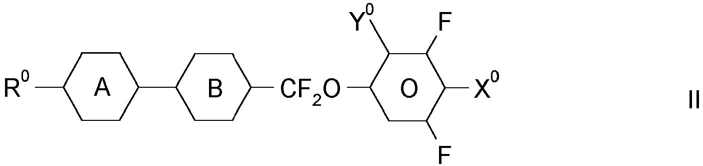 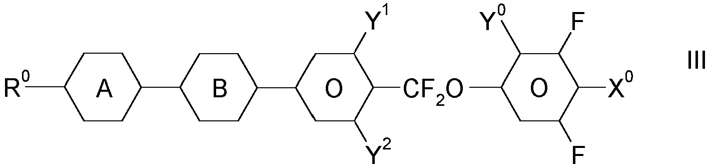 wherein the individual radicals, independently of each other and on each occurrence identically or differently, have the following meanings 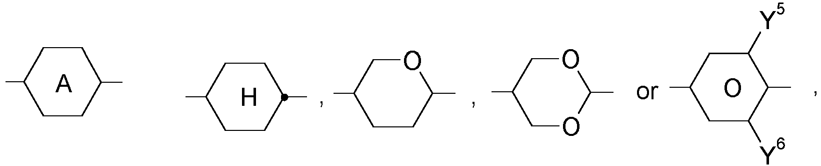 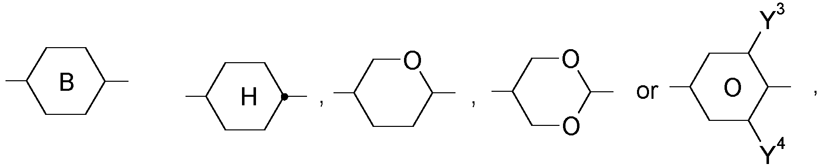
R⁰ an unsubstituted or halogenated alkyl or alkoxy radical having 1 to 15 C atoms, where, in addition, one or more CH₂ groups in these radicals may each be replaced, independently of one another, by -C≡C-, -CF₂O-, -CH=CH-, 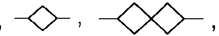 -O-, -CO-O- or -O-CO- in such a way that O atoms are not linked directly to one another, or denotes 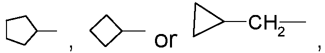
X⁰ F, Cl, CN, SF₅, SCN, NCS, a halogenated alkyl radical, a halogenated alkenyl radical, a halogenated alkoxy radical or a halogenated alkenyloxy radical having up to 6 C atoms, and
Y⁰ H or CH₃,
Y¹⁻⁶ H or F.

6. The LC medium according to one or more of Claims 1 to 5, **characterized in that** it comprises one or more compounds selected from the group consisting of the following subformulae 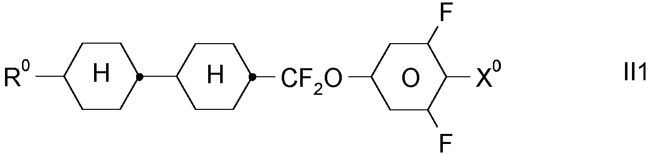 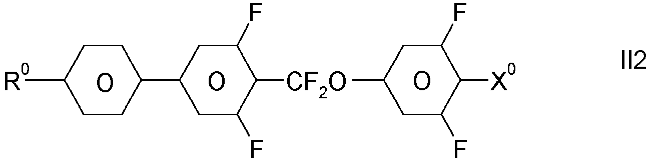 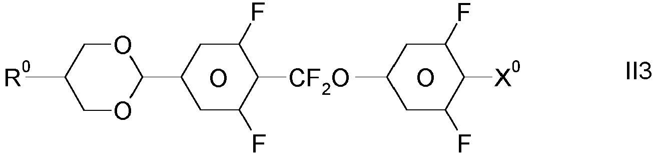 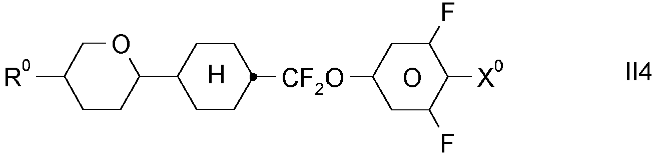 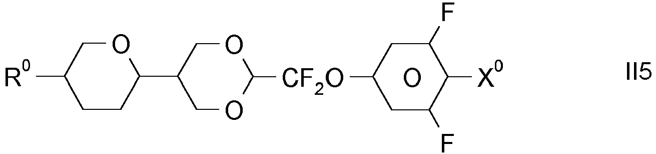 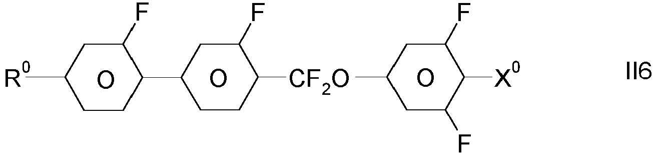 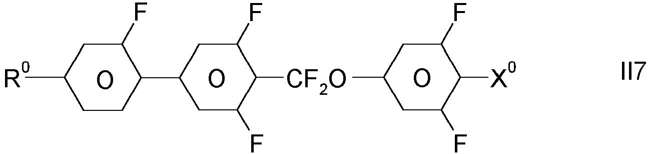 in which R⁰ and X⁰ have the meanings given in Claim 5.

7. The LC medium according to one or more of Claims 1 to 6, **characterized in that** it comprises one or more compounds selected from the group consisting of the following subformulae 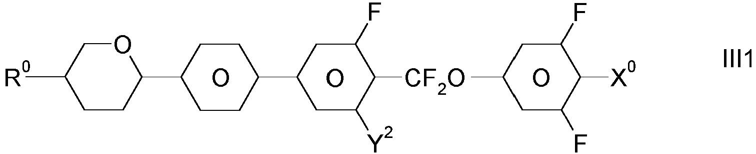 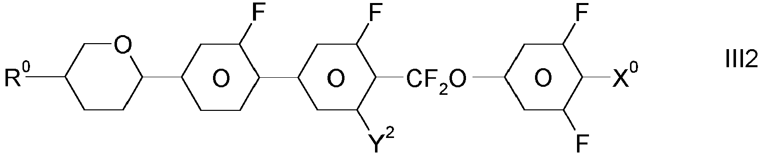 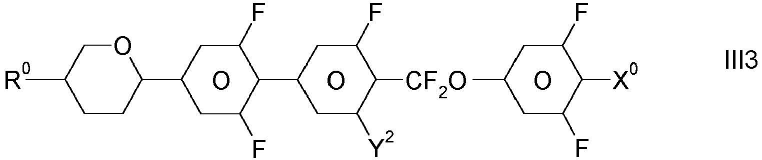 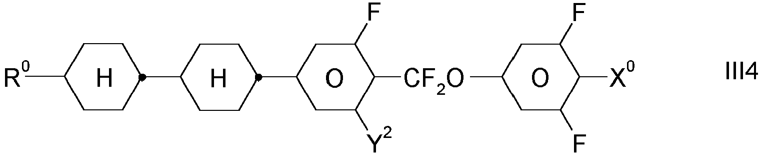 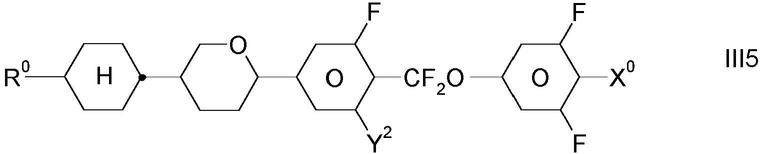 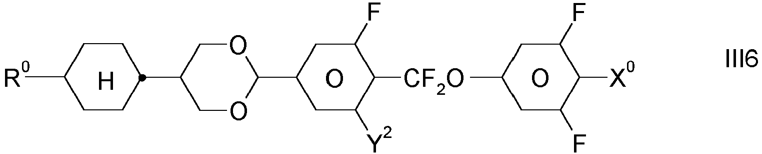 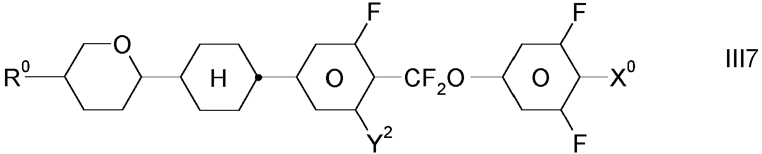 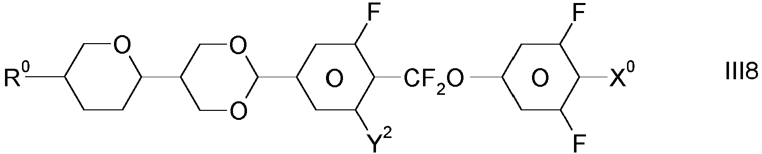 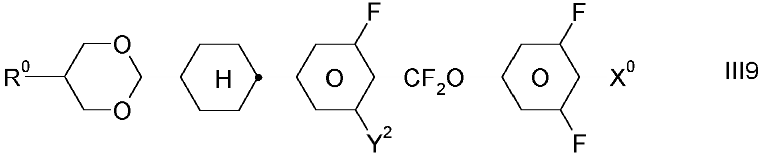 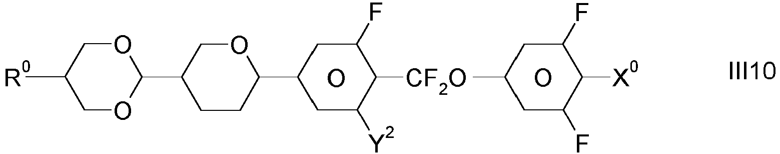 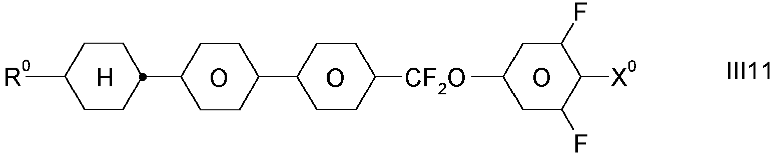 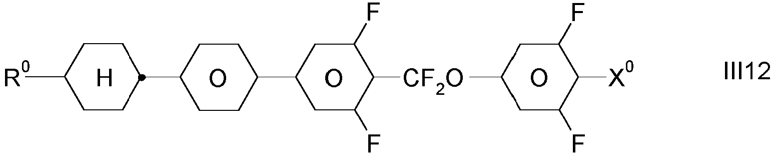 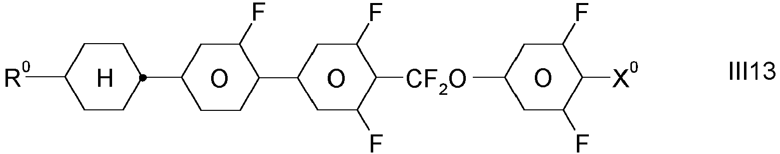 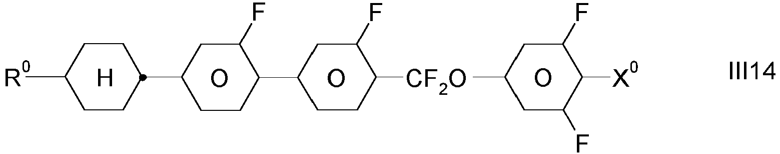 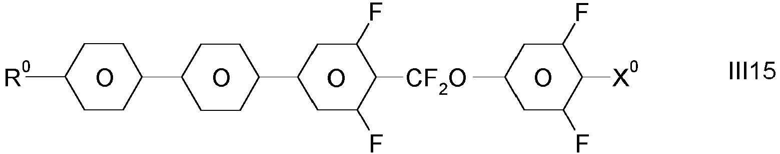 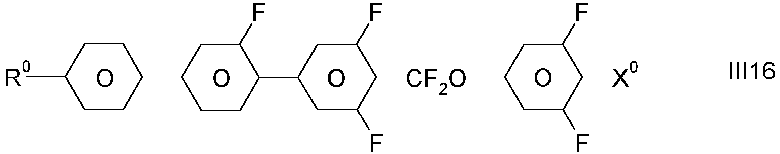 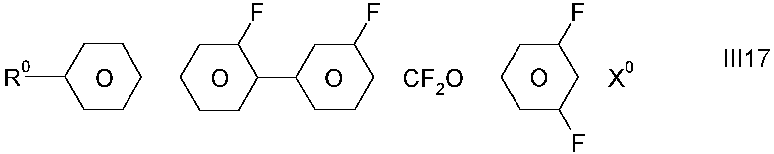 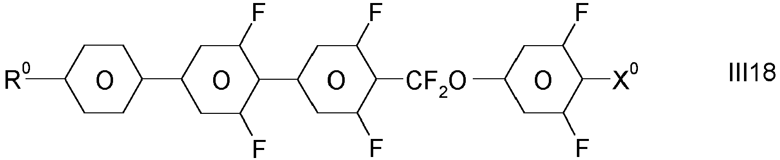 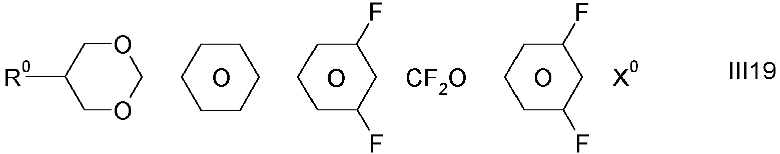 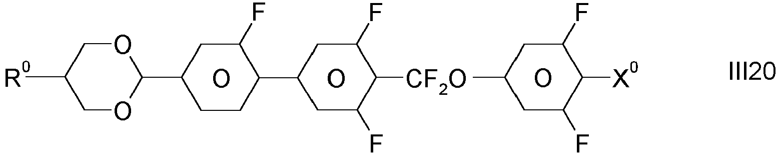 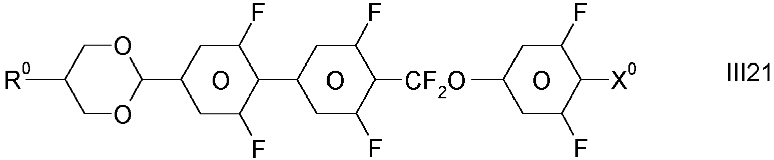 in which R⁰ and X⁰ have the meanings given in Claim 5.

8. The LC medium according to one or more of Claims 1 to 7, **characterized in that** it additionally comprises one or more compounds selected from the group consisting of the following formulae 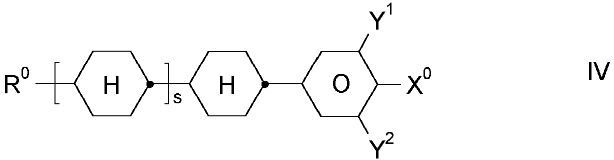 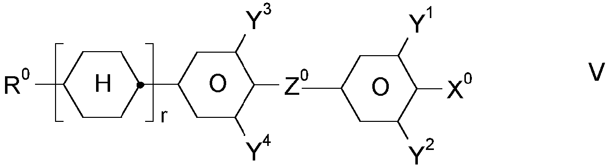 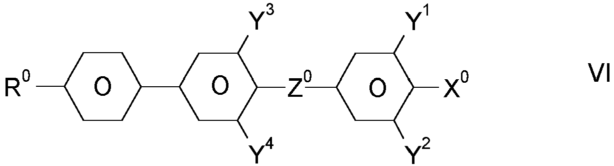 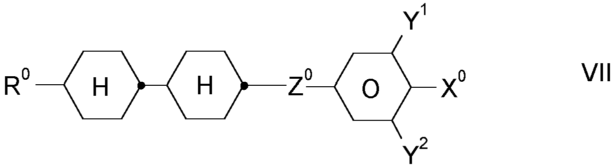 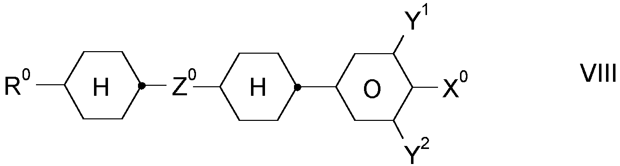 in which R⁰, X⁰ and Y¹⁻⁴ have the meanings given in Claim 5,
Z⁰ denotes -C₂H₄-, -(CH₂)₄-, -CH=CH-, -CF=CF-, -C₂F₄-, -CH₂CF₂-, - CF₂CH₂-, -CH₂O-, -OCH₂-, -COO- or -OCF₂-, in formulae V and VI also a single bond, in formulae V and VIII also -CF₂O-,
r denotes 0 or 1, and
s denotes 0 or 1.

9. The LC medium according to one or more of Claims 1 to 8, **characterised in that** it comprises one or more compounds selected from group consisting of the following formulae 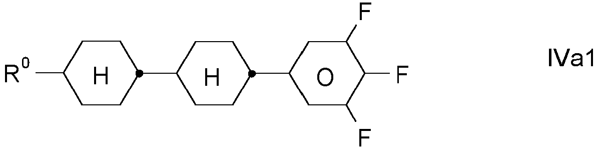 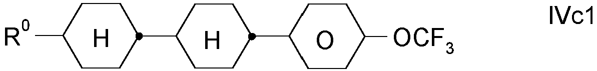 in which R⁰ has the meanings given in Claim 5.

10. The LC medium according to one or more of Claims 1 to 9, **characterised in that** it additionally comprises one or more compounds selected from the following formulae: 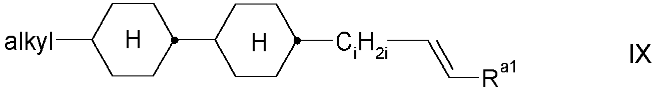 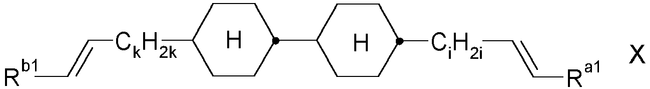 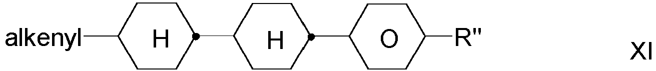 in which
"alkyl" denotes C₁₋₆-alkyl,
"alkenyl" denote C₂₋₆-alkenyl,
R" denotes C₁₋₆-alkyl, C₁₋₆-alkoxy or C₂₋₆-alkenyl,
R^{a1}, R^{b1} denote independently of each other CH₃ or C₂H₅,
i, k are independently of each other 0, 1, 2 or 3.

11. The LC medium according to one or more of Claims 1 to 10, **characterised in that** it comprises one or more compounds selected from the following subformulae: 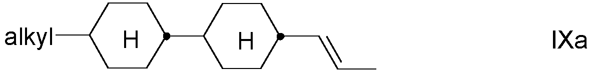 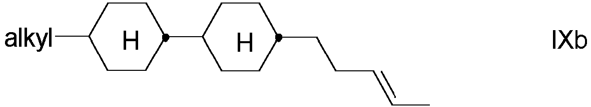 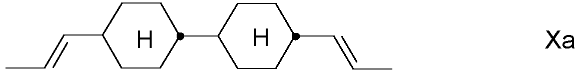 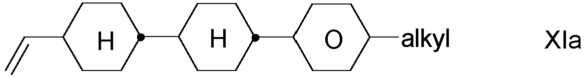 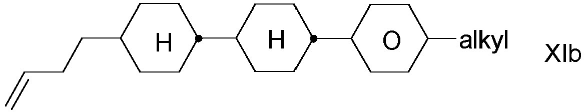 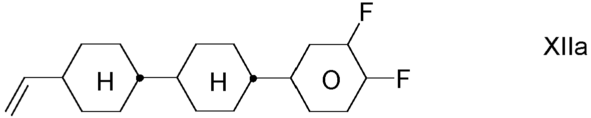 wherein "alkyl" has the meaning given in Claim 10.

12. The LC medium according to one or more of Claims 1 to 10, **characterized in that** it comprises one or more compounds of the following formula 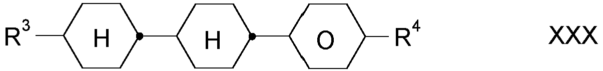 in which R³ and R⁴ each, independently of one another, denote n-alkyl, alkoxy, oxaalkyl, fluoroalkyl or alkenyl, each having up to 6 C atoms, and preferably each, independently of one another, denote alkyl having 1 to 6 C atoms or alkenyl having 2 to 6 C atoms.

13. The LC medium according to one or more of Claims 1 to 12, **characterised in that** it additionally comprises one or more compounds selected from the following formulae: 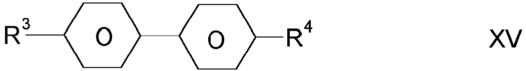 in which R³ and R⁴ each, independently of one another, denote n-alkyl, alkoxy, oxaalkyl, fluoroalkyl or alkenyl, each having up to 6 C atoms, and preferably each, independently of one another, denote alkyl having 1 to 6 C atoms or alkenyl having 2 to 6 C atoms.

14. The LC medium according to one or more of Claims 1 to 13, **characterised in that** it additionally comprises one or more compounds selected from the following subformulae: 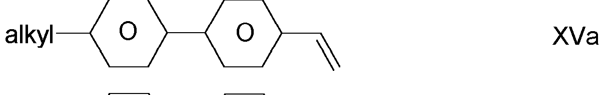 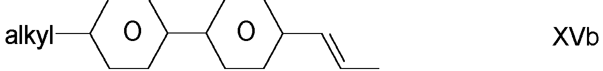 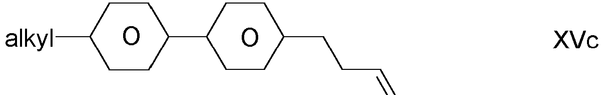 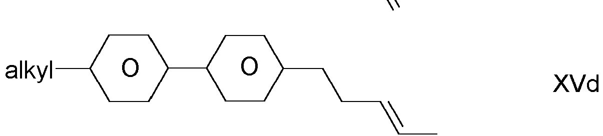 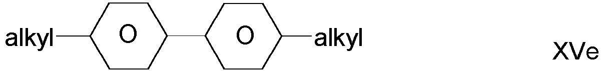 in which "alkyl" has the meaning given in Claim 10.

15. The LC medium according to one or more of Claims 1 to 14, **characterised in that** it comprises one or more compounds of the formula XVI 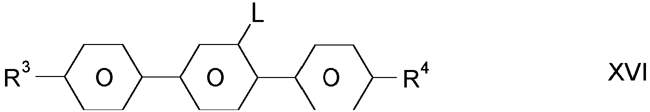 in which R³ and R⁴ have the meanings given in Claim 12, and L denotes H or F.

16. The LC medium according to one or more of Claims 1 to 15, **characterised in that** it comprises a compound of formula XVIc2

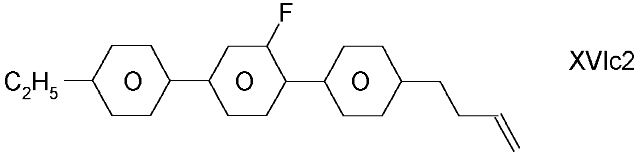

17. The LC medium according to one or more of Claims 1 to 16, **characterised in that** it comprises one or more compounds of formula IA1 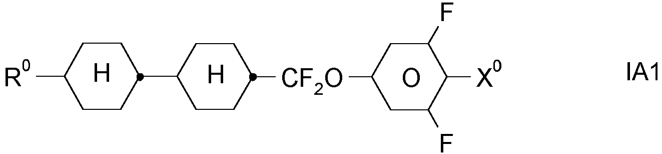 in which R⁰ is ethyl or propyl and X⁰ is F.

18. The LC medium according to one or more of Claims 1 to 17, **characterised in that** it comprises one or more compounds selected from the group consisting of the compounds of the following formulae 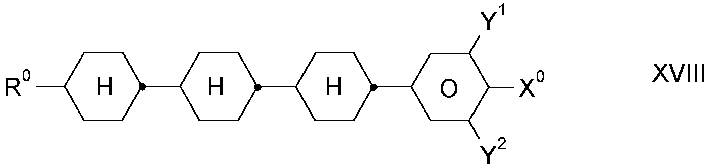 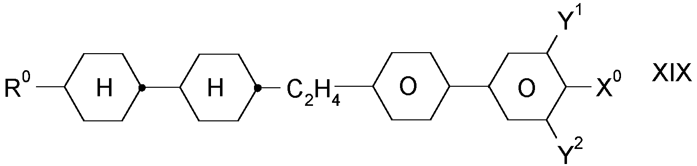 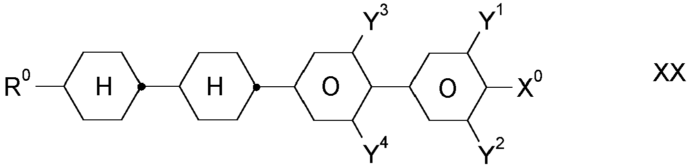 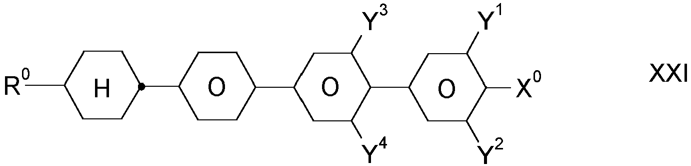 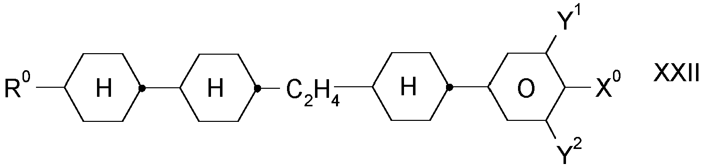 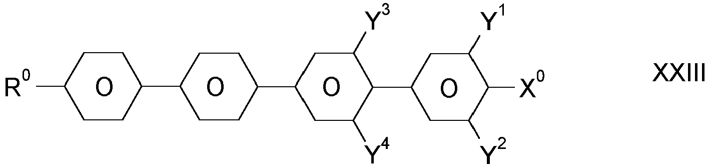 in which R^{a}, X⁰ and Y¹⁻⁴ each, independently of one another, have one of the meanings given in Claim 5.

19. The LC medium according to one or more of Claims 1 to 18, **characterised in that** it comprises one or more compounds of the formula XXIa 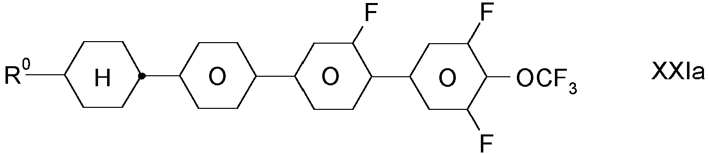 in which R⁰ denotes ethyl, n-propyl, n-butyl or n-pentyl.

20. The LC medium according to one or more of Claims 1 to 19, **characterised in that** it comprises one or more compounds selected from the group of the compounds of the following formulae 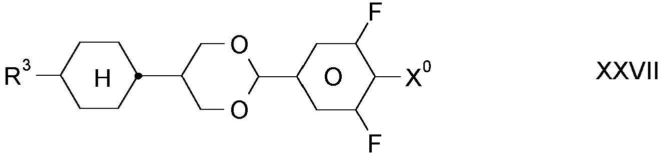 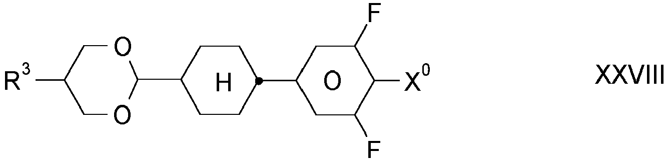 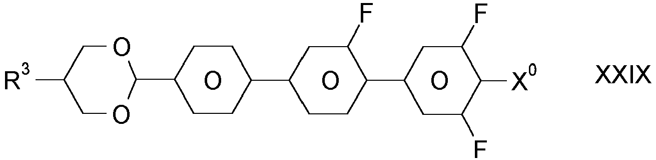 in which R³ has the meaning indicated in Claim 12, and X⁰ has the meaning indicated in Claim 5.

21. The LC medium according to one or more of Claims 1 to 20, **characterised in that** it comprises one or more compounds of the formula XXIXa 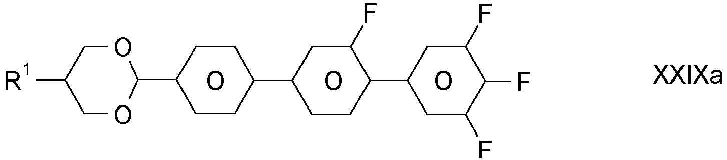 in which R³ denotes ethyl, n-propyl, n-butyl or n-pentyl.

22. A process for the preparation of an LC medium according to one or more of Claims 1 to 21, **characterised in that** one or more compounds of the formula I or its subformulae as defined in Claim 1 or 3 are mixed with one or more compounds according to one or more of Claims 4 to 21 or with further LC compounds.

23. Use of an LC medium according to one or more of Claims 1 to 21 for electro-optical purposes.

24. The use according to Claim 23, where the use is in shutter glasses, for 3D applications, or in IPS, PS-IPS, FFS, PS-FFS, HB-FFS, U-IPS, TN, PS-TN, STN or TN-TFT displays.

25. An LC display containing an LC medium according to one or more of Claims 1 to 21.

26. The LC display according to Claim 25, **characterized in that** it is an IPS, PS-IPS, FFS, PS-FFS, HB-FFS, U-IPS, TN, PS-TN, STN or TN-TFT display.

## Patentansprüche

1. FK-Medium mit positiver dielektrischer Anisotropie, **dadurch gekennzeichnet, dass** es eine oder mehrere Verbindungen der Formel I in einer Konzentration von >0 und ≤ 10%, 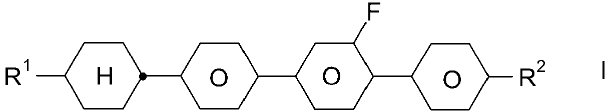
worin R¹ und R² unabhängig voneinander Alkyl mit 1 bis 6 C-Atomen bedeuten,
und mindestens eine Verbindung der Formel XII: 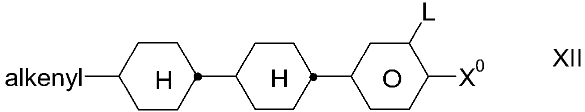
worin
X⁰ F, Cl, CN, SF₅, SCN, NCS, einen halogenierten Alkylrest, einen halogenierten Alkenylrest, einen halogenierten Alkoxyrest oder einen halogenierten Alkenyloxyrest mit bis zu 6 C-Atomen bedeutet,
"alkenyl" C₂₋₆-Alkenyl bedeutet,
L H oder F bedeutet,
enthält,
und ferner **dadurch gekennzeichnet, dass** es keine Verbindungen der folgenden Formeln enthält: 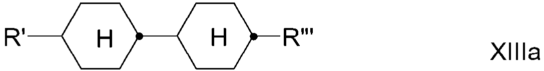 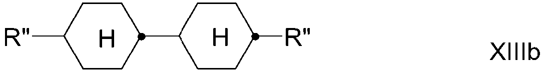 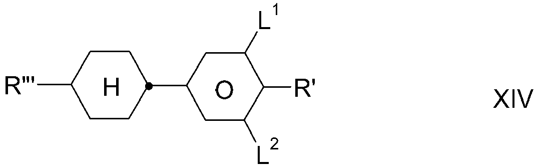
worin L¹ und L² unabhängig voneinander H oder F bedeuten, R' bei jedem Auftreten gleich oder verschieden Alkyl, oder Alkoxy mit 1 bis 12 C-Atomen bedeutet, R" bei jedem Auftreten gleich oder verschieden Alkenyl mit 2 bis 7 C-Atomen bedeutet, das eine endständige Vinylgruppe enthält, und R"' R' oder R" bedeutet.

2. FK-Medium nach Anspruch 1, **dadurch gekennzeichnet, dass** es eine Doppelbrechung von <0,15 aufweist.

3. FK-Medium nach Anspruch 1 oder 2, **dadurch gekennzeichnet, dass** es eine oder mehrere Verbindungen der Formel I enthält, die ausgewählt sind aus den folgenden Unterformeln:

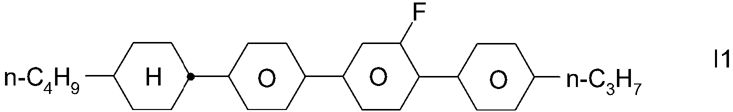

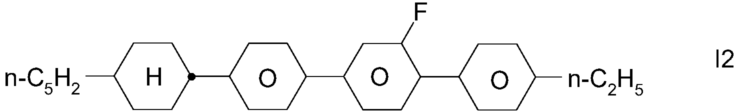

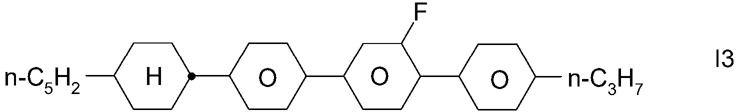

4. FK-Medium nach einem oder mehreren der Ansprüche 1 bis 3, **dadurch gekennzeichnet, dass** die Konzentration der Verbindungen der Formel I oder ihrer Unterformeln in dem FK-Medium 1,0 bis 10% beträgt.

5. FK-Medium nach einem oder mehreren der Ansprüche 1 bis 4, **dadurch gekennzeichnet, dass** es zusätzlich eine oder mehrere Verbindungen enthält, die ausgewählt sind aus den folgenden Formeln, 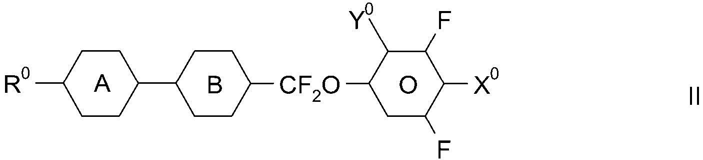 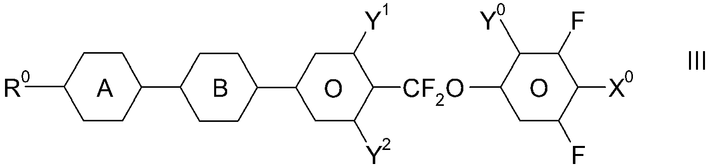 bei denen die einzelnen Reste, unabhängig voneinander und bei jedem Auftreten gleich oder verschieden, die folgenden Bedeutungen besitzen 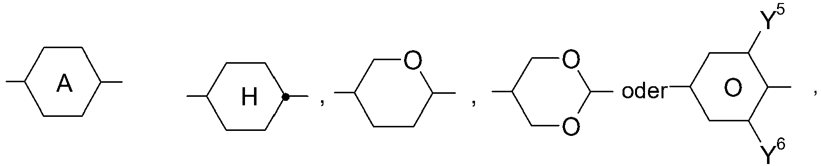 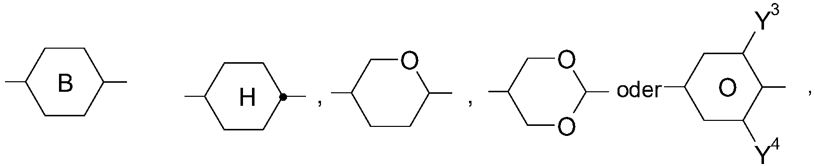
R⁰ ein unsubstituierter oder halogenierter Alkyl- oder Alkoxyrest mit 1 bis 15 C-Atomen, wobei in diesen Resten zusätzlich eine oder mehrere CH₂-Gruppen jeweils unabhängig voneinander so durch -C≡C-, - CF₂O-, -CH=CH-, 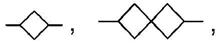 -O-, -CO-O- oder -O-COersetzt sein können, dass O-Atome nicht direkt miteinander verknüpft sind, oder bedeutet 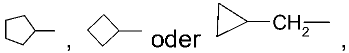
X⁰ F, Cl, CN, SF₅, SCN, NCS, ein halogenierter Alkylrest, ein halogenierter Alkenylrest, ein halogenierter Alkoxyrest oder ein halogenierter Alkenyloxyrest mit bis zu 6 C-Atomen, und
Y⁰ H oder CH₃,
Y¹⁻⁶ H oder F.

6. FK-Medium nach einem oder mehreren der Ansprüche 1 bis 5, **dadurch gekennzeichnet, dass** es eine oder mehrere Verbindungen enthält, die ausgewählt sind aus der Gruppe bestehend aus den folgenden Unterformeln, 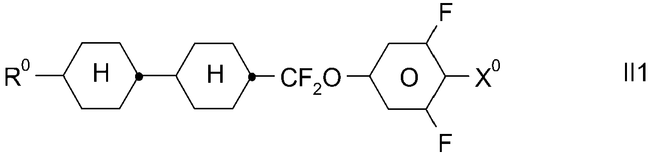 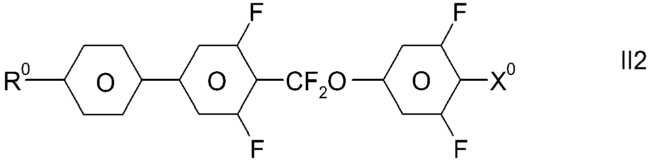 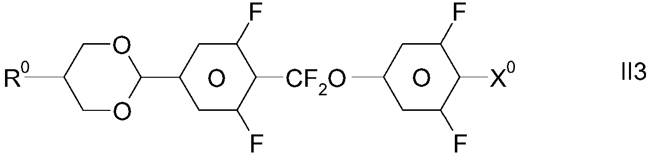 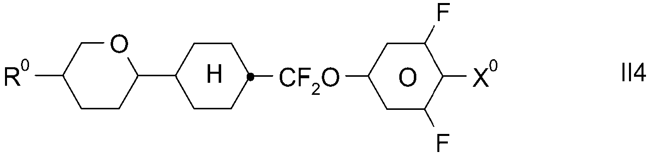 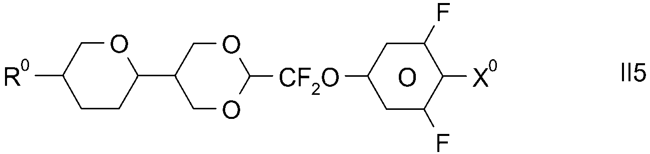 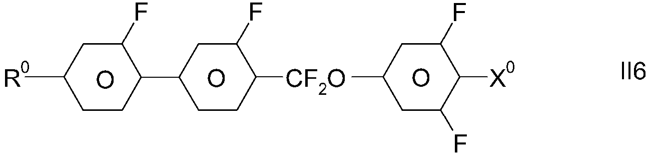 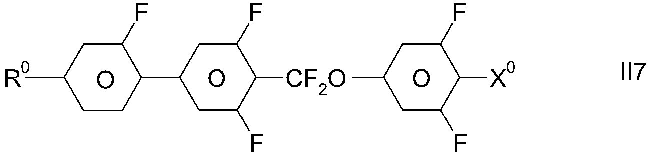 worin R⁰ und X⁰ die in Anspruch 5 genannten Bedeutungen besitzen.

7. FK-Medium nach einem oder mehreren der Ansprüche 1 bis 6, **dadurch gekennzeichnet, dass** es eine oder mehrere Verbindungen enthält, die ausgewählt sind aus der Gruppe bestehend aus den folgenden Unterformeln, 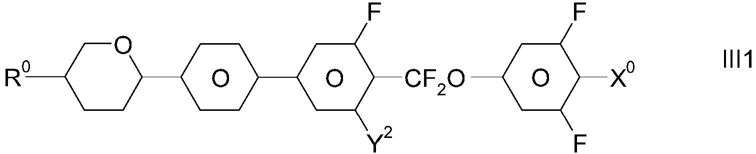 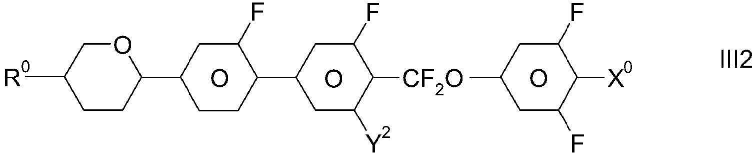 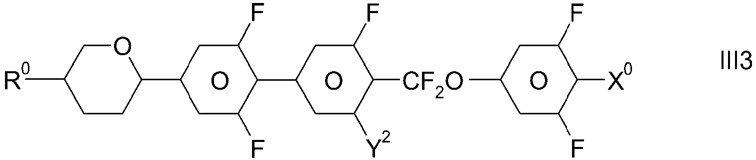 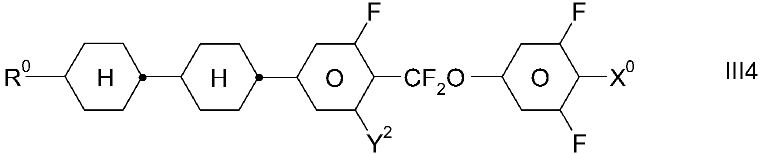 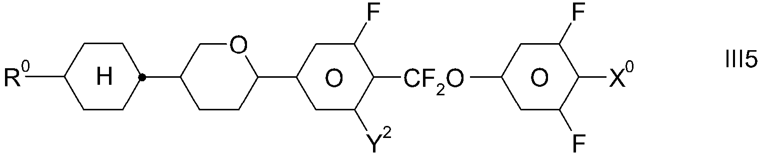 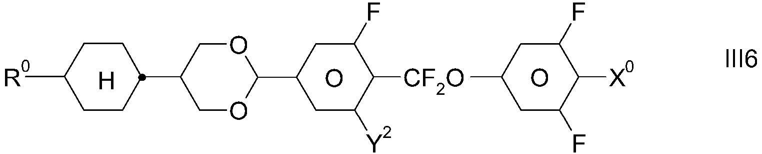 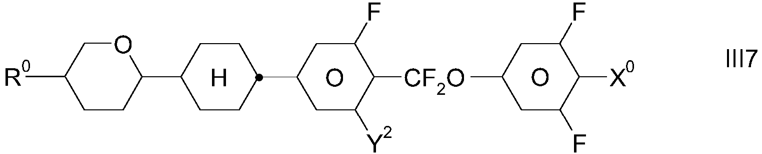 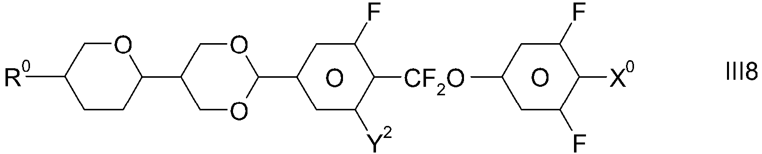 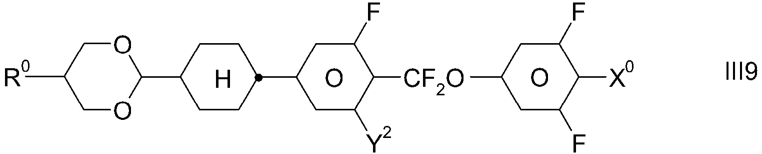 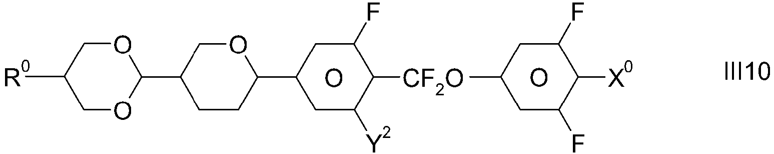 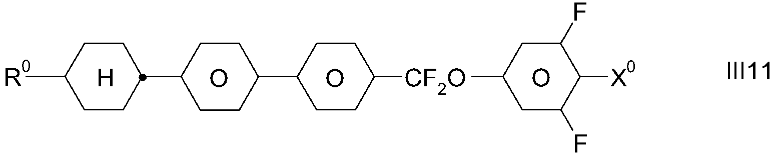 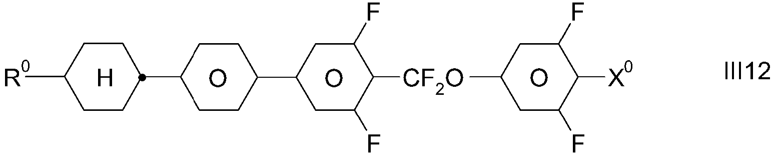 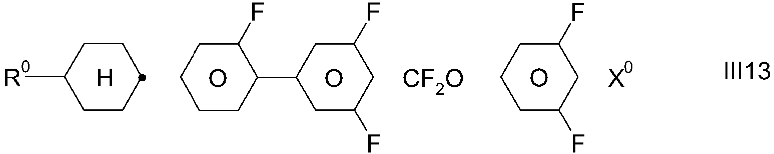 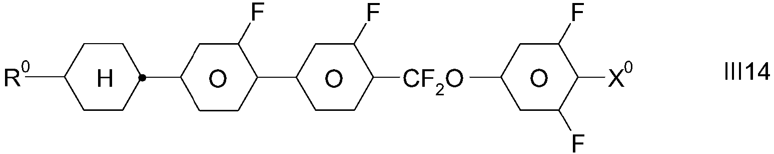 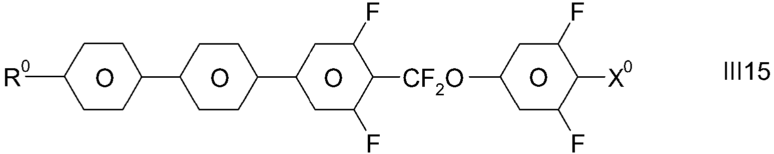 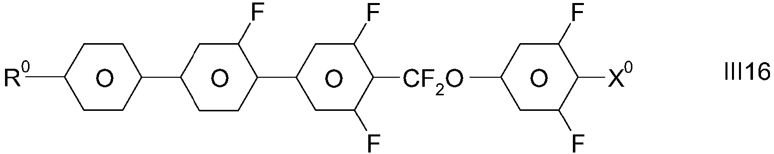 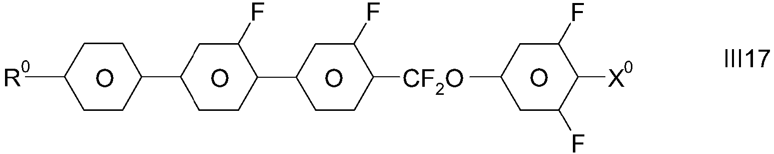 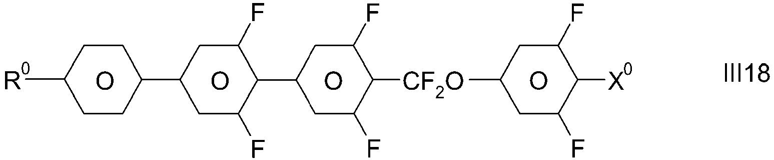 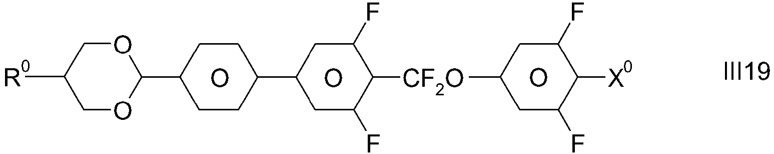 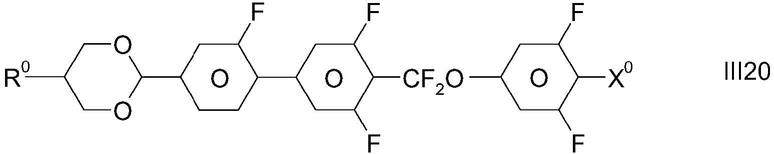 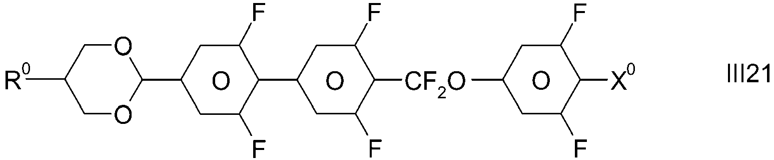 worin R⁰ und X⁰ die in Anspruch 5 genannten Bedeutungen besitzen.

8. FK-Medium nach einem oder mehreren der Ansprüche 1 bis 7, **dadurch gekennzeichnet, dass** es zusätzlich eine oder mehrere Verbindungen enthält, die ausgewählt sind aus der Gruppe bestehend aus den folgenden Formeln, 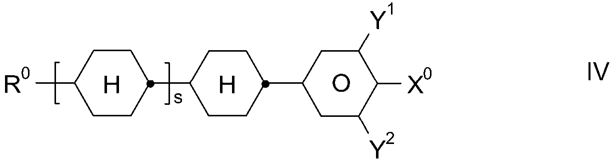 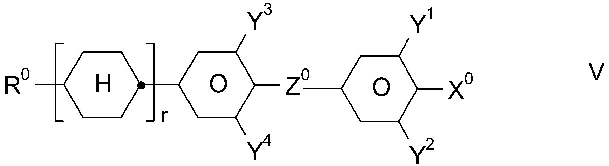 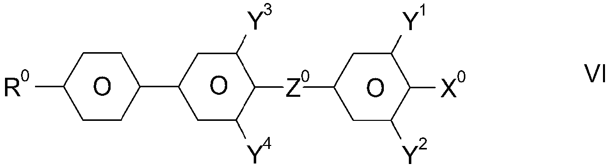 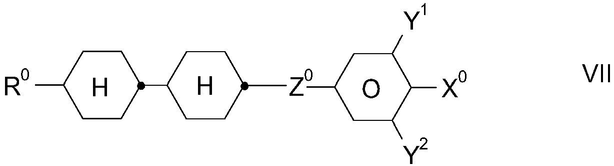 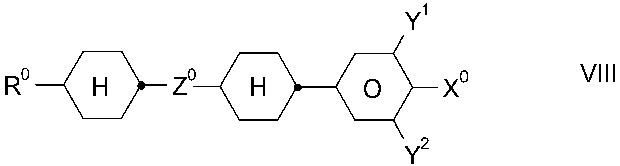 worin R⁰, X⁰ und Y¹⁻⁴ die in Anspruch 5 genannten Bedeutungen besitzen,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in den Formeln V und VI auch eine Einfachbindung, in den Formeln V und VIII auch -CF₂O- bedeutet,
r 0 oder 1 bedeutet, und
s 0 oder 1 bedeutet.

9. FK-Medium nach einem oder mehreren der Ansprüche 1 bis 8, **dadurch gekennzeichnet, dass** es eine oder mehrere Verbindungen enthält, die ausgewählt sind aus der Gruppe bestehend aus den folgenden Formeln, 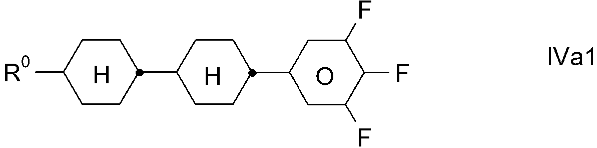 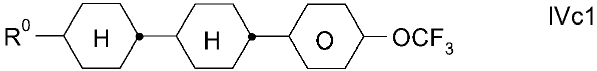 worin R⁰ die in Anspruch 5 genannten Bedeutungen besitzt.

10. FK-Medium nach einem oder mehreren der Ansprüche 1 bis 9, **dadurch gekennzeichnet, dass** es zusätzlich eine oder mehrere Verbindungen enthält, die ausgewählt sind aus den folgenden Formeln: 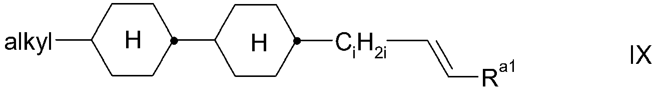 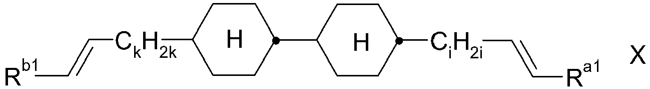 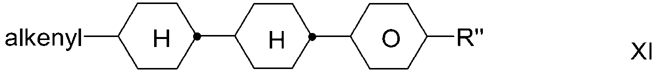 worin
"alkyl" C₁₋₆-Alkyl bedeutet,
"alkenyl" C₂₋₆-Alkenyl bedeutet,
R" C₁₋₆-Alkyl, C₁₋₆-Alkoxy oder C₂₋₆-Alkenyl bedeutet,
R^{a1}, R^{b1} unabhängig voneinander CH₃ oder C₂H₅ bedeuten,
i, k unabhängig voneinander 0, 1, 2 oder 3 sind.

11. FK-Medium nach einem oder mehreren der Ansprüche 1 bis 10, **dadurch gekennzeichnet, dass** es eine oder mehrere Verbindungen enthält, die ausgewählt sind aus den folgenden Unterformeln: 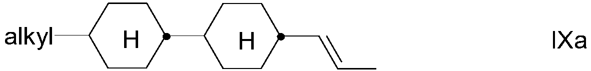 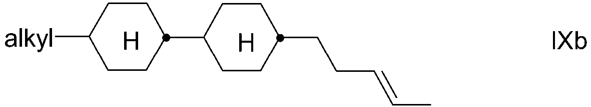 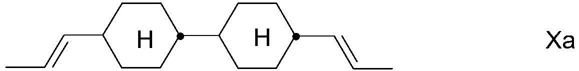 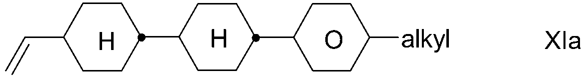 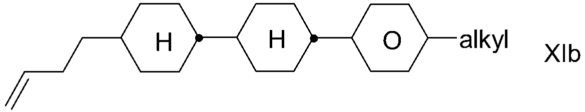 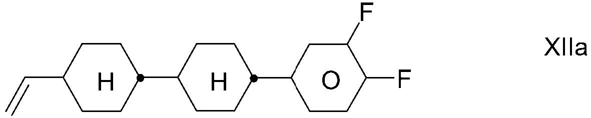 bei denen "alkyl" die in Anspruch 10 genannte Bedeutung besitzt.

12. FK-Medium nach einem oder mehreren der Ansprüche 1 bis 10, **dadurch gekennzeichnet, dass** es eine oder mehrere Verbindungen der folgenden Formel 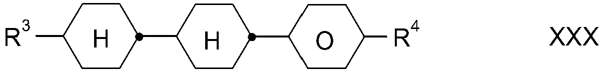 enthält, worin R³ und R⁴ jeweils unabhängig voneinander n-Alkyl, Alkoxy, Oxaalkyl, Fluoralkyl oder Alkenyl bedeuten, jeweils mit bis zu 6 C-Atomen, und vorzugsweise jeweils unabhängig voneinander Alkyl mit 1 bis 6 C-Atomen oder Alkenyl mit 2 bis 6 C-Atomen bedeuten.

13. FK-Medium nach einem oder mehreren der Ansprüche 1 bis 12, **dadurch gekennzeichnet, dass** es zusätzlich eine oder mehrere Verbindungen enthält, die ausgewählt sind aus den folgenden Formel: 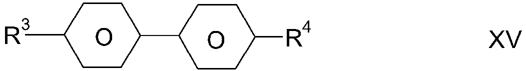 worin R³ und R⁴ jeweils unabhängig voneinander n-Alkyl, Alkoxy, Oxaalkyl, Fluoralkyl oder Alkenyl bedeuten, jeweils mit bis zu 6 C-Atomen, und vorzugsweise jeweils unabhängig voneinander Alkyl mit 1 bis 6 C-Atomen oder Alkenyl mit 2 bis 6 C-Atomen bedeuten.

14. FK-Medium nach einem oder mehreren der Ansprüche 1 bis 13, **dadurch gekennzeichnet, dass** es zusätzlich eine oder mehrere Verbindungen enthält, die ausgewählt sind aus den folgenden Unterformeln: 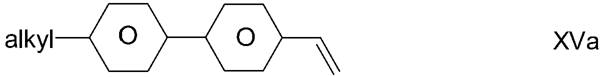 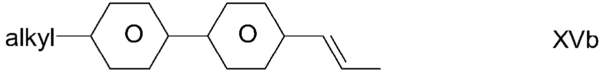 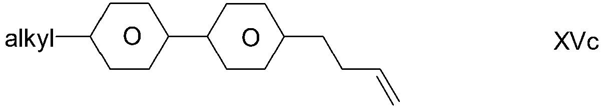 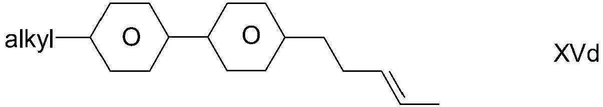 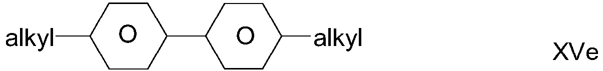 worin "alkyl" die in Anspruch 10 genannte Bedeutung besitzt.

15. FK-Medium nach einem oder mehreren der Ansprüche 1 bis 14, **dadurch gekennzeichnet, dass** es eine oder mehrere Verbindungen der Formel XVI 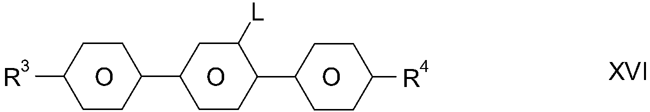 enthält, worin R³ und R⁴ die in Anspruch 12 genannten Bedeutungen besitzen und L H oder F bedeutet.

16. FK-Medium nach einem oder mehreren der Ansprüche 1 bis 15, **dadurch gekennzeichnet, dass** es eine Verbindung der Formel XVIc2 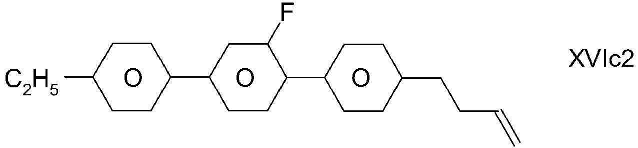 enthält.

17. FK-Medium nach einem oder mehreren der Ansprüche 1 bis 16, **dadurch gekennzeichnet, dass** es eine oder mehrere Verbindungen der Formel IA1 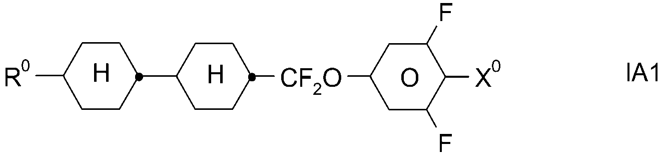 enthält, worin R⁰ Ethyl oder Propyl ist und X⁰ F ist.

18. FK-Medium nach einem oder mehreren der Ansprüche 1 bis 17, **dadurch gekennzeichnet, dass** es eine oder mehrere Verbindungen enthält, die ausgewählt sind aus der Gruppe bestehend aus den Verbindungen der folgenden Formeln, 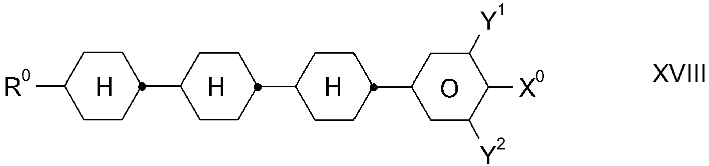 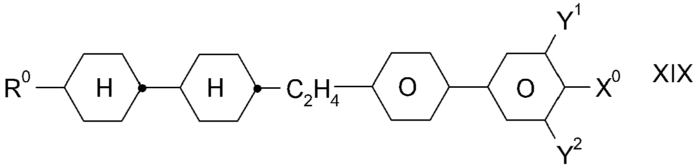 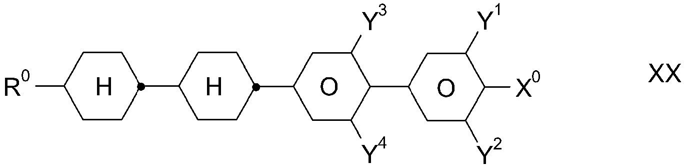 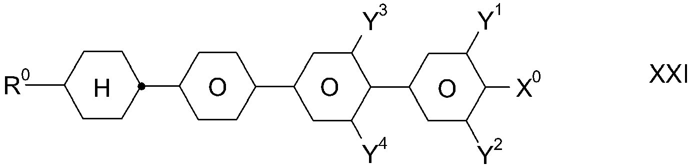 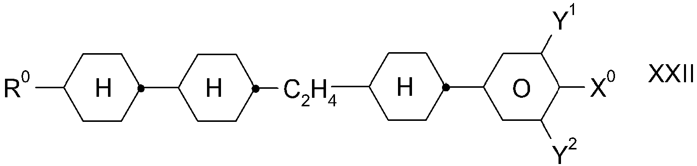 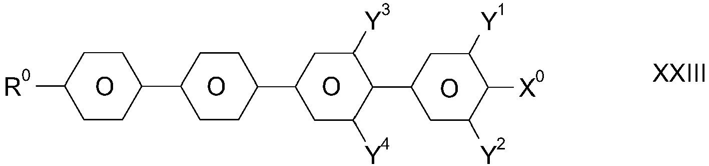 worin R⁰, X⁰ und Y¹⁻⁴ jeweils unabhängig voneinander eine der in Anspruch 5 genannten Bedeutungen besitzen.

19. FK-Medium nach einem oder mehreren der Ansprüche 1 bis 18, **dadurch gekennzeichnet, dass** es eine oder mehrere Verbindungen der Formel XXIa 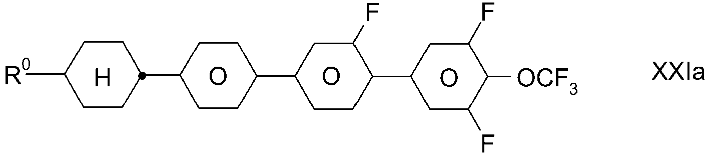 enthält, worin R⁰ Ethyl, n-Propyl, n-Butyl oder n-Pentyl bedeutet.

20. FK-Medium nach einem oder mehreren der Ansprüche 1 bis 19, **dadurch gekennzeichnet, dass** es eine oder mehrere Verbindungen enthält, die ausgewählt sind aus der Gruppe der Verbindungen der folgenden Formeln, 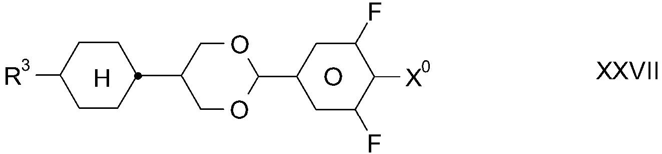 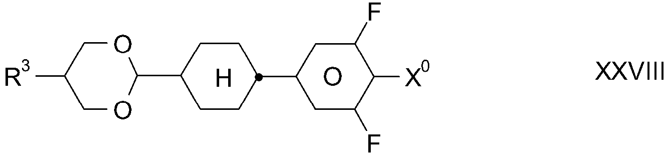 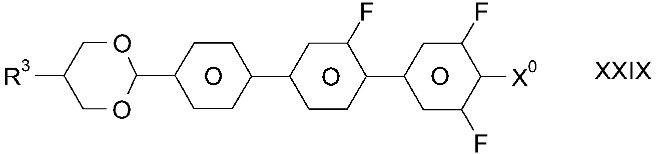 worin R³ die in Anspruch 12 angegebene Bedeutung besitzt und X⁰ die in Anspruch 5 angegebene Bedeutung besitzt.

21. FK-Medium nach einem oder mehreren der Ansprüche 1 bis 20, **dadurch gekennzeichnet, dass** es eine oder mehrere Verbindungen der Formel XXIXa 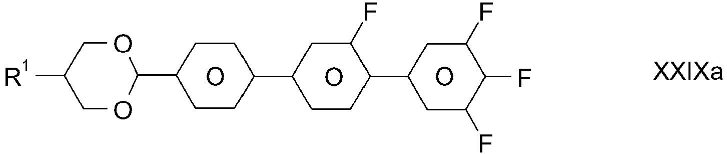 enthält, worin R³ Ethyl, n-Propyl, n-Butyl oder n-Pentyl bedeutet.

22. Verfahren zur Herstellung eines FK-Mediums nach einem oder mehreren der Ansprüche 1 bis 21, **dadurch gekennzeichnet, dass** man eine oder mehrere Verbindungen der Formel I oder ihrer Unterformeln wie in Anspruch 1 oder 3 definiert mit einer oder mehreren Verbindungen nach einem oder mehreren der Ansprüche 4 bis 21 oder mit weiteren FK-Verbindungen mischt.

23. Verwendung eines FK-Mediums nach einem oder mehreren der Ansprüche 1 bis 21 für elektrooptische Zwecke.

24. Verwendung nach Anspruch 23, wobei die Verwendung in Shutter-Brillen, für 3D-Anwendungen oder in IPS-, PS-IPS-, FFS-, PS-FFS-, HB-FFS-, U-IPS-, TN-, PS-TN-, STN- oder TN-TFT-Anzeigen erfolgt.

25. FK-Anzeige enthaltend ein FK-Medium nach einem oder mehreren der Ansprüche 1 bis 21.

26. FK-Anzeige nach Anspruch 25, **dadurch gekennzeichnet, dass** es sich um eine IPS-, PS-IPS-, FFS-, PS-FFS-, HB-FFS-, U-IPS-, TN-, PS-TN-, STN- oder TN-TFT-Anzeige handelt.

## Revendications

1. Milieu LC ayant une anisotropie diélectrique positive, **caractérisé en ce qu'**il contient un ou plusieurs composés de formule I selon une concentration comprise entre >0 et ≤10% 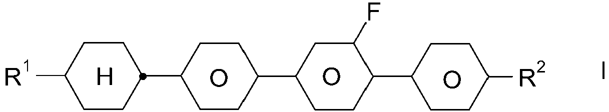
dans laquelle R¹ et R² indépendamment l'un de l'autre désignent alkyle ayant de 1 à 6 atomes de C,
et au moins un composé de formule XII : 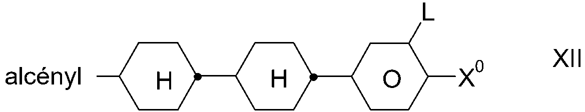
dans laquelle
X⁰ désigne F, CI, CN, SF₅, SCN, NCS, un radical alkyle halogéné, un radical alcényle halogéné, un radical alcoxy halogéné ou un radical alcényloxy halogéné ayant jusqu'à 6 atomes de C,
« alcényl » désigne C₂₋₆-alcényle,
L désigne H ou F,
et **caractérisé en outre en ce qu'**il ne contient aucun composé de formules suivantes : 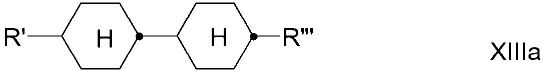 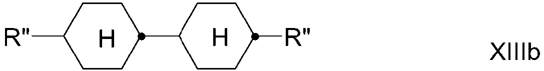 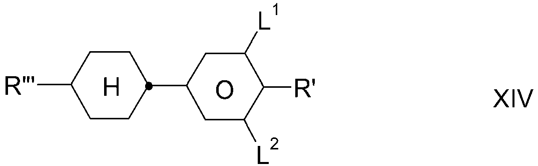
dans lesquelles L¹ et L² désignent indépendamment l'un de l'autre H ou F, R' désigne à chaque occurrence de manière identique ou différente alkyle, ou alcoxy ayant de 1 à 12 atomes de C, R" désigne à chaque occurrence de manière identique ou différente alcényle ayant de 2 à 7 atomes de C qui contient un groupement vinyle terminal, et R‴ désigne R' ou R".

2. Milieu LC selon la revendication 1, **caractérisé en ce qu'**il présente une biréfringence < 0,15.

3. Milieu LC selon la revendication 1 ou 2, **caractérisé en ce qu'**il comprend un ou plusieurs composés de formule I choisis parmi les sous-formules suivantes :

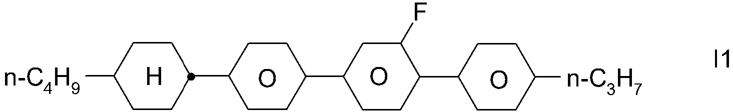

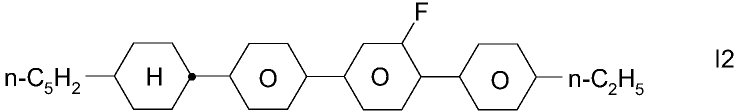

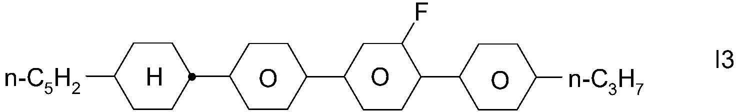

4. Milieu LC selon l'une ou plusieurs parmi les revendications 1 à 3, **caractérisé en ce que** la concentration en composés de formule I ou de ses sous-formules dans le milieu LC va de 1,0 à 10%.

5. Milieu LC selon l'une ou plusieurs parmi les revendications 1 à 4, **caractérisé en ce qu'**il comprend en outre un ou plusieurs composés choisis parmi les formules suivantes 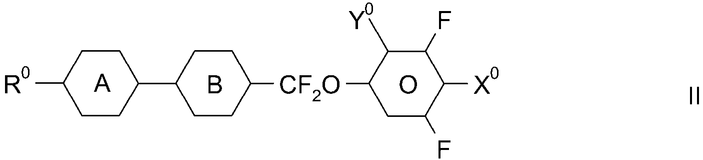 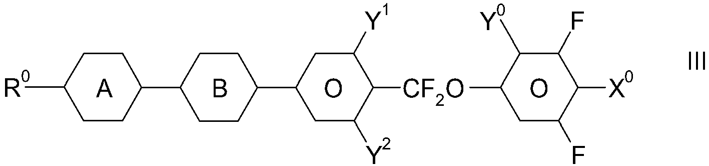 dans lesquelles les radicaux individuels, indépendamment les uns des autres et à chaque occurrence de manière identique ou différente, revêtent les significations suivantes 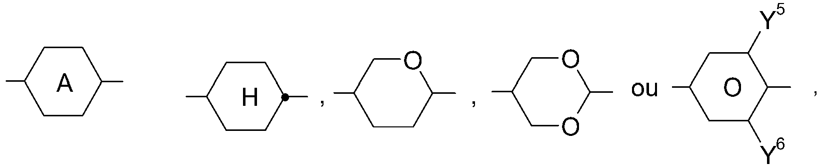 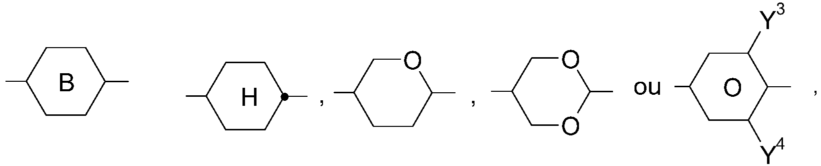
R⁰ un radical alkyle ou alcoxy non substitué ou halogéné ayant de 1 à 15 atomes de C, où, de plus, un ou plusieurs groupements CH₂ dans ces radicaux peuvent chacun être remplacés, indépendamment les uns des autres, par -C≡C-, -CF₂O-, -CH=CH-, 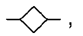 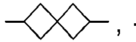 -O-, -CO-O- ou -O-CO- de telle sorte que les atomes de O ne soient pas liés directement les uns aux autres, ou désigne 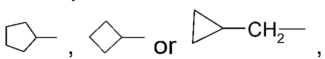
X⁰ F, CI, CN, SF₅, SCN, NCS, un radical alkyle halogéné, un radical alcényle halogéné, un radical alcoxy halogéné ou un radical alcényloxy halogéné ayant jusqu'à 6 atomes de C, et
Y⁰ H ou CH₃,
Y¹⁻⁶ H ou F.

6. Milieu LC selon l'une ou plusieurs parmi les revendications 1 à 5, **caractérisé en ce qu'**il comprend un ou plusieurs composés choisis dans le groupe constitué par les sous-formules suivantes 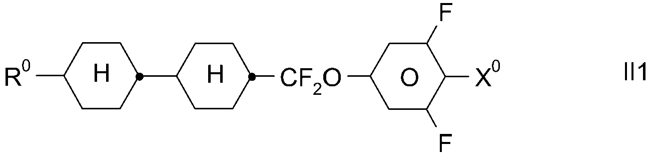 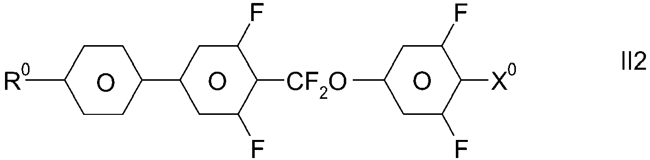 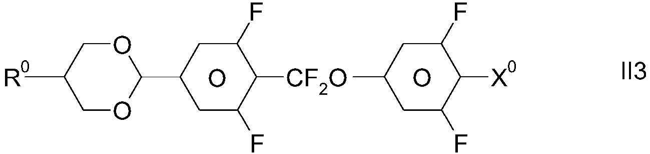 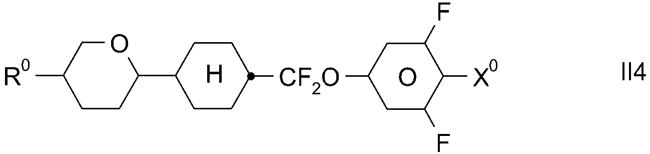 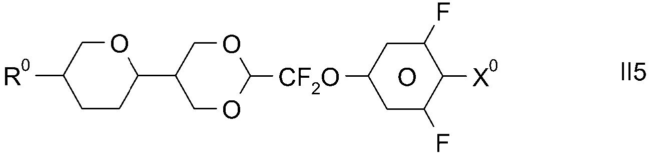 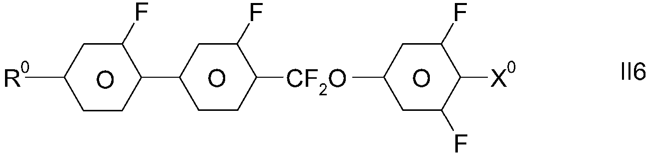 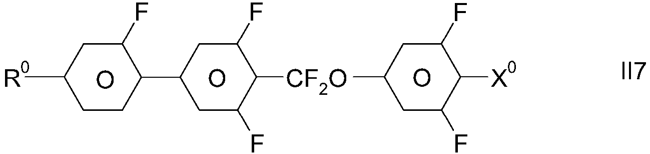 dans lesquelles R⁰ et X⁰ revêtent les significations données selon la revendication 5.

7. Milieu LC selon l'une ou plusieurs parmi les revendications 1 à 6, **caractérisé en ce qu'**il comprend un ou plusieurs composés choisis dans le groupe constitué par les sous-formules suivantes 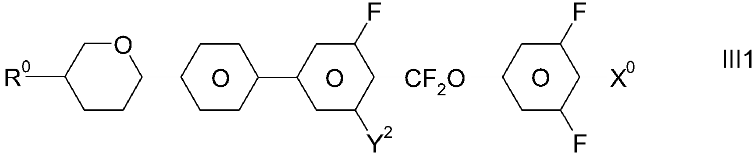 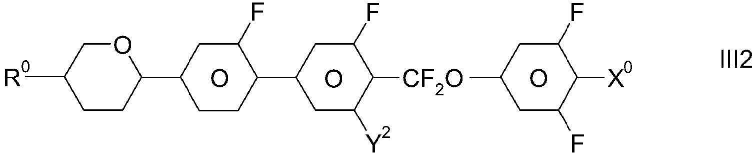 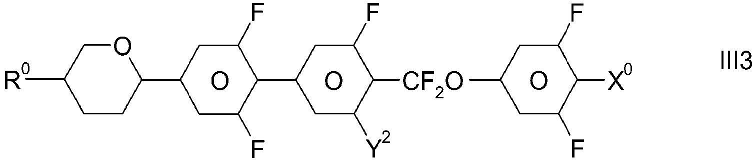 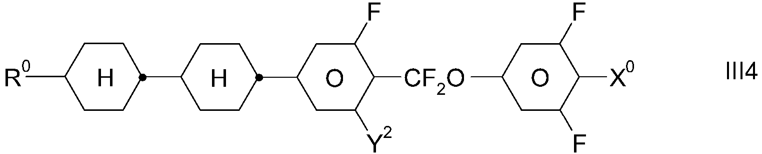 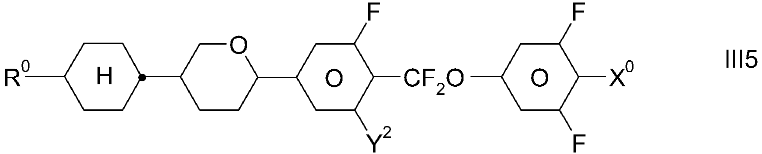 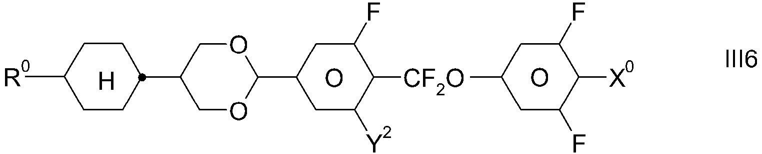 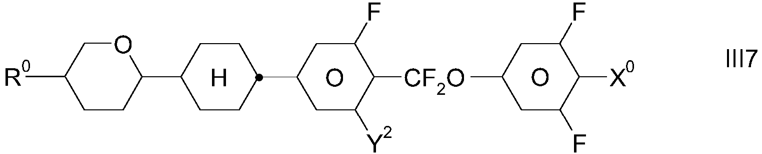 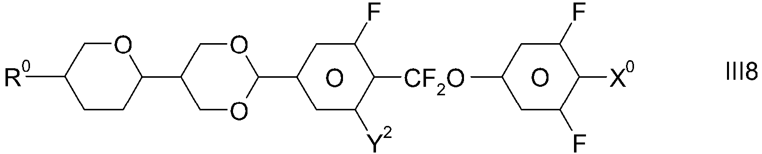 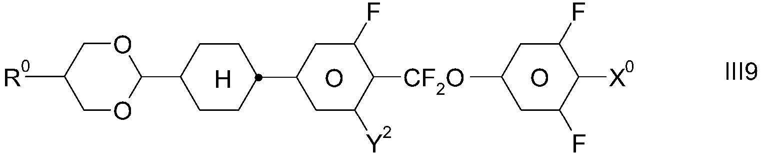 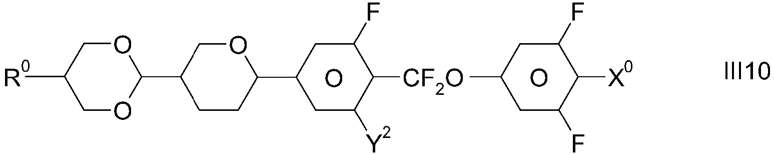 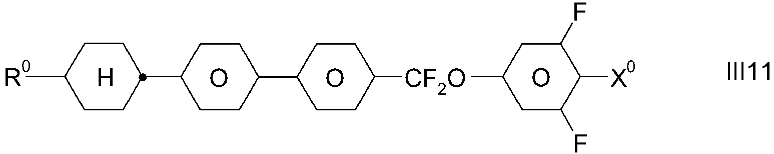 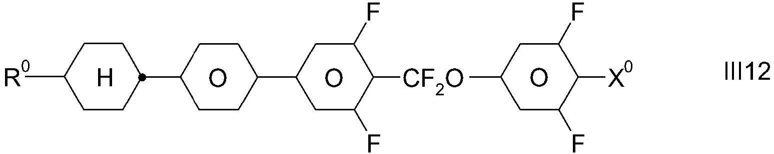 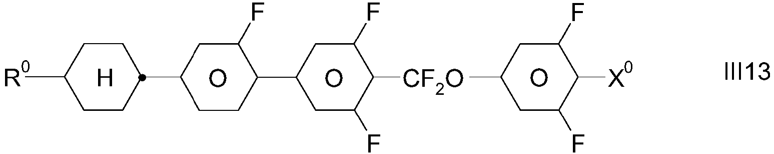 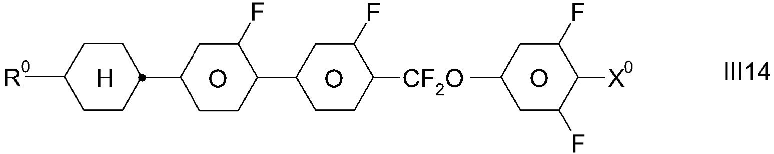 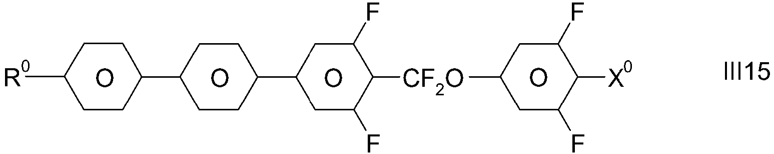 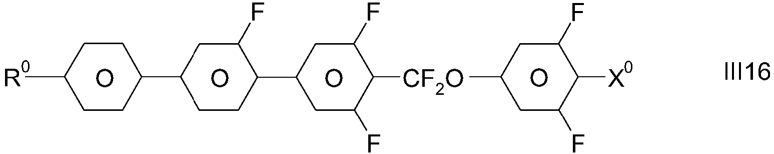 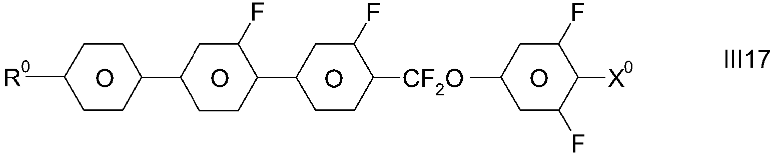 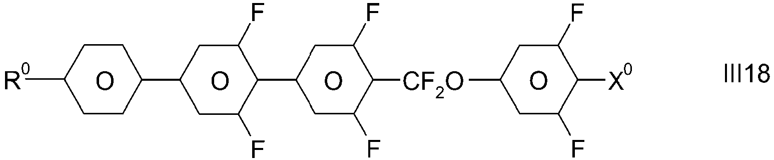 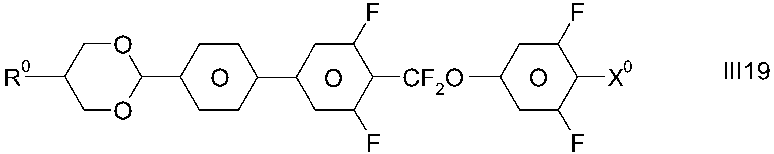 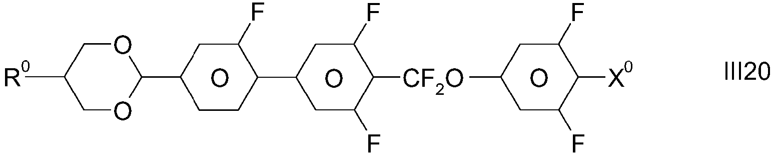 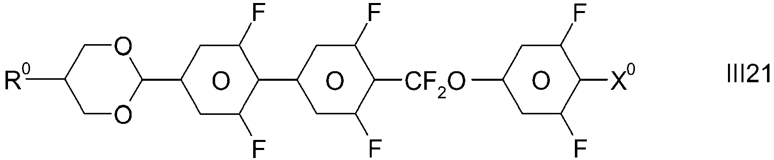 dans lesquelles R⁰ et X⁰ revêtent les significations données selon la revendication 5.

8. Milieu LC selon l'une ou plusieurs parmi les revendications 1 à 7, **caractérisé en ce qu'**il comprend en outre un ou plusieurs composés choisis dans le groupe constitué par les formules suivantes 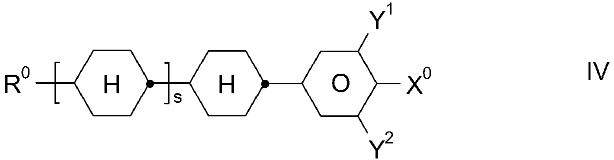 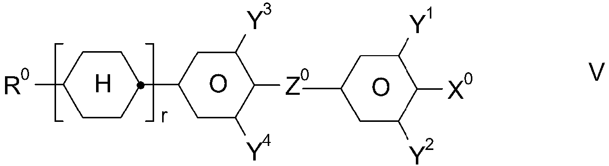 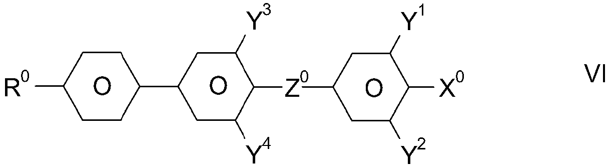 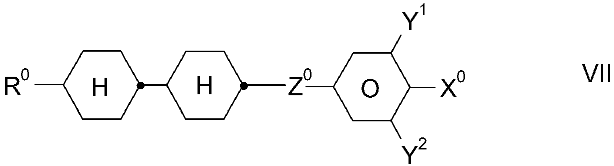 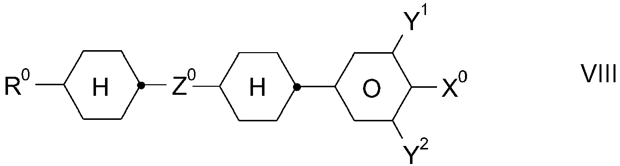 dans lesquelles R⁰, X⁰ et Y¹⁻⁴ revêtent les significations données selon la revendication 5,
Z⁰ désigne -C₂H₄-, -(CH₂)₄-, -CH=CH-, -CF=CF-, -C₂F₄-, -CH₂CF₂-, -CF₂CH₂-, -CH₂O-, -OCH₂-, -COO- ou -OCF₂-, dans les formules V et VI de même une liaison simple, dans les formules V et VIII de même -CF₂O-,
r désigne 0 ou 1, et
s désigne 0 ou 1.

9. Milieu LC selon l'une ou plusieurs parmi les revendications 1 à 8, **caractérisé en ce qu'**il comprend un ou plusieurs composés choisis dans le groupe constitué par les formules suivantes 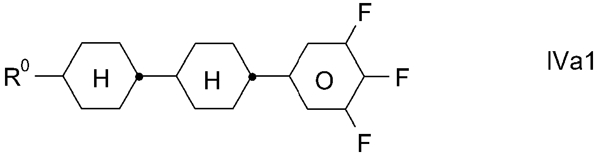 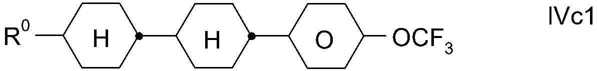 dans lesquelles R⁰ revêt les significations données selon la revendication 5.

10. Milieu LC selon l'une ou plusieurs parmi les revendications 1 à 9, **caractérisé en ce qu'**il comprend en outre un ou plusieurs composés choisis parmi les formules suivantes : 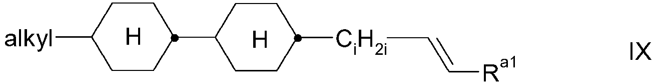 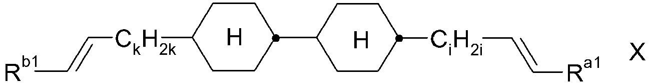 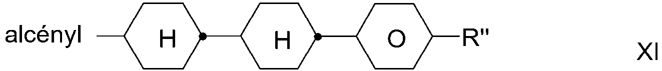 dans lesquelles
« alkyl » désigne C₁₋₆-alkyle,
« alcényl » désigne C₂₋₆-alcényle,
R" désigne C₁₋₆-alkyle, C₁₋₆-alcoxy ou C₂₋₆-alcényle,
R^{a1}, R^{b1} désignent indépendamment l'un de l'autre CH₃ ou C₂H₅,
i, k valent indépendamment l'un de l'autre 0, 1, 2 ou 3.

11. Milieu LC selon l'une ou plusieurs parmi les revendications 1 à 10, **caractérisé en ce qu'**il comprend un ou plusieurs composés choisis parmi les sous-formules suivantes : 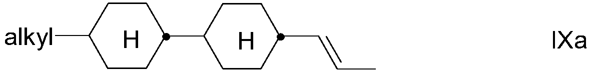 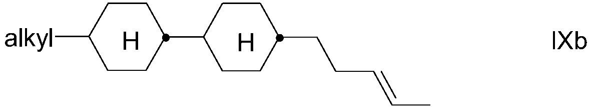 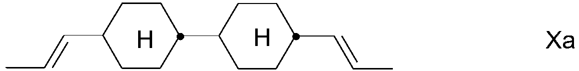 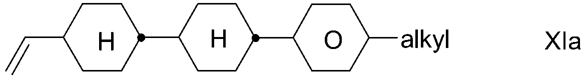 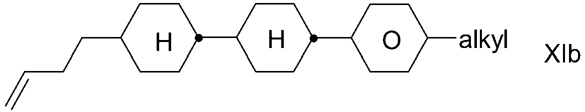 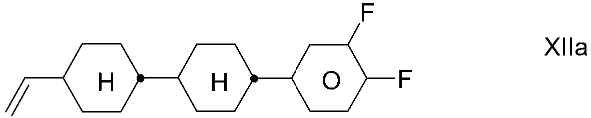 dans lesquelles « alkyl » revêt la signification donnée selon la revendication 10.

12. Milieu LC selon l'une ou plusieurs parmi les revendications 1 à 10, **caractérisé en ce qu'**il comprend un ou plusieurs composés de formule suivante 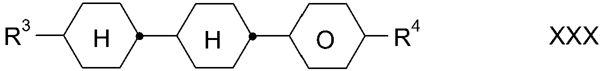 dans laquelle R³ et R⁴ chacun, indépendamment l'un de l'autre, désignent n-alkyle, alcoxy, oxaalkyle, fluoroalkyle ou alcényle, ayant chacun jusqu'à 6 atomes de C, et préférablement chacun, indépendamment l'un de l'autre, désignent alkyle ayant de 1 à 6 atomes de C ou alcényle ayant de 2 à 6 atomes de C.

13. Milieu LC selon l'une ou plusieurs parmi les revendications 1 à 12, **caractérisé en ce qu'**il comprend en outre un ou plusieurs composés choisis parmi la formule suivante : 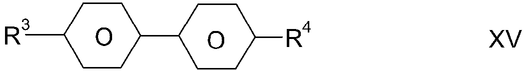 dans laquelle R³ et R⁴ chacun, indépendamment l'un de l'autre, désignent n-alkyle, alcoxy, oxaalkyle, fluoroalkyle ou alcényle, ayant chacun jusqu'à 6 atomes de C, et préférablement chacun, indépendamment l'un de l'autre, désignent alkyle ayant de 1 à 6 atomes de C ou alcényle ayant de 2 à 6 atomes de C.

14. Milieu LC selon l'une ou plusieurs parmi les revendications 1 à 13, **caractérisé en ce qu'**il comprend en outre un ou plusieurs composés choisis parmi les sous-formules suivantes : 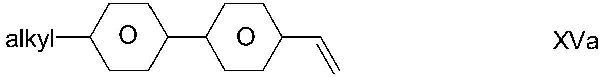 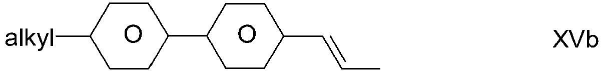 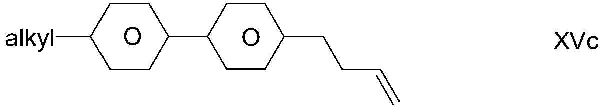 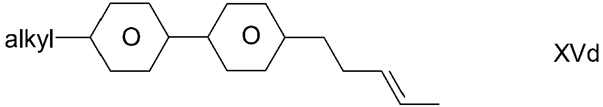 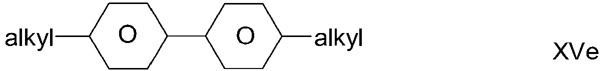 dans lesquelles « alkyl » revêt la signification donnée selon la revendication 10.

15. Milieu LC selon l'une ou plusieurs parmi les revendications 1 à 14, **caractérisé en ce qu'**il comprend un ou plusieurs composés de formule XVI 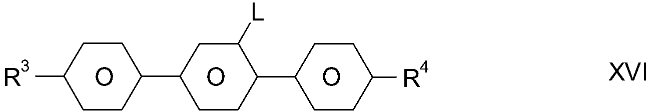 dans laquelle R³ et R⁴ revêtent les significations données selon la revendication 12, et L désigne H ou F.

16. Milieu LC selon l'une ou plusieurs parmi les revendications 1 à 15, **caractérisé en ce qu'**il comprend un composé de formule XVIc2

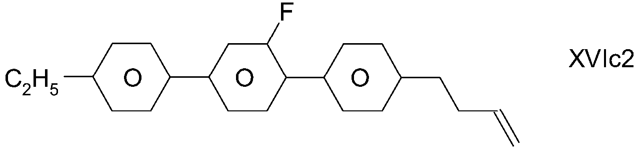

17. Milieu LC selon l'une ou plusieurs parmi les revendications 1 à 16, **caractérisé en ce qu'**il comprend un ou plusieurs composés de formule IA1 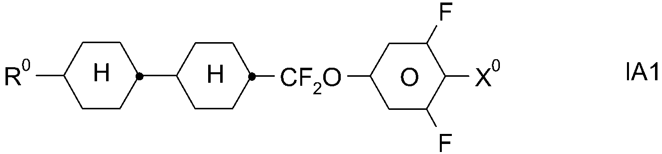 dans laquelle R⁰ est éthyle ou propyle et X⁰ est F.

18. Milieu LC selon l'une ou plusieurs parmi les revendications 1 à 17, **caractérisé en ce qu'**il comprend un ou plusieurs composés choisis dans le groupe constitué par les composés de formules suivantes 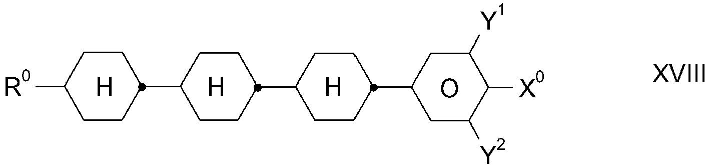 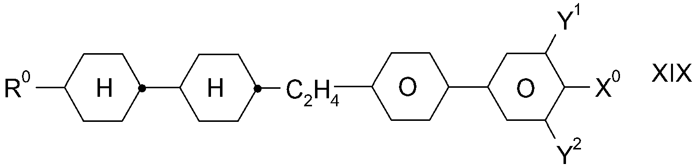 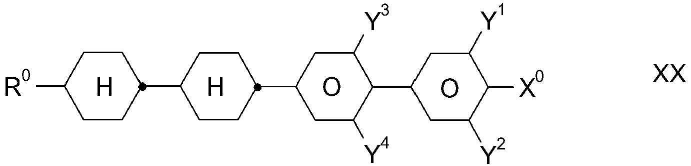 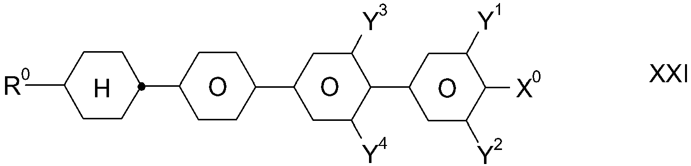 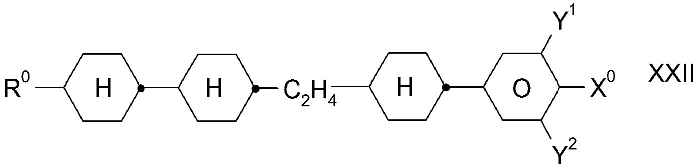 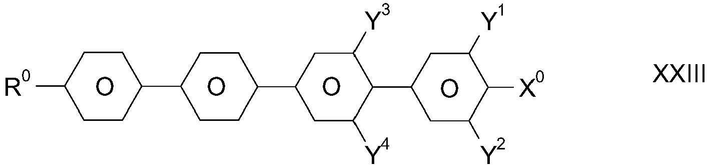 dans lesquelles R⁰, X⁰ et Y¹⁻⁴ chacun, indépendamment les uns des autres, revêtent l'une des significations données selon la revendication 5.

19. Milieu LC selon l'une ou plusieurs parmi les revendications 1 à 18, **caractérisé en ce qu'**il comprend un ou plusieurs composés de formule XXIa 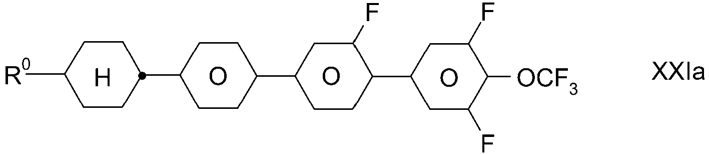 dans laquelle R⁰ désigne éthyle, n-propyle, n-butyle ou n-pentyle.

20. Milieu LC selon l'une ou plusieurs parmi les revendications 1 à 19, **caractérisé en ce qu'**il comprend un ou plusieurs composés choisis dans le groupe constitué par les composés de formules suivantes 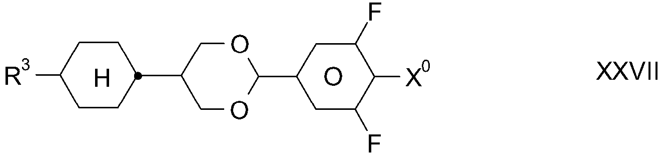 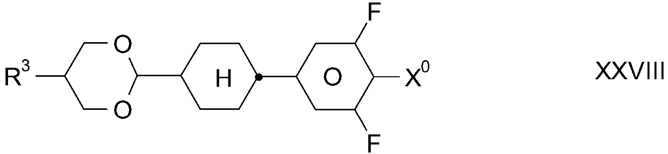 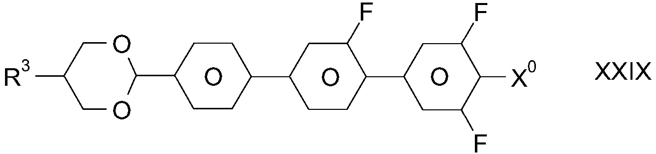 dans lesquelles R³ revêt la signification indiquée selon la revendication 12, et X⁰ revêt la signification indiquée selon la revendication 5.

21. Milieu LC selon l'une ou plusieurs parmi les revendications 1 à 20, **caractérisé en ce qu'**il comprend un ou plusieurs composés de formule XXIXa 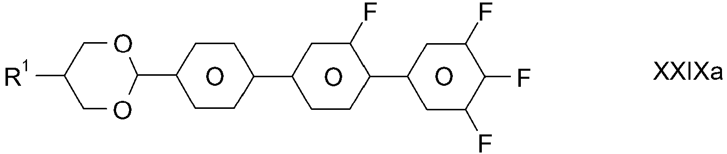 dans laquelle R³ désigne éthyle, n-propyle, n-butyle ou n-pentyle.

22. Procédé de préparation d'un milieu LC selon l'une ou plusieurs parmi les revendications 1 à 21, **caractérisé en ce qu'**un ou plusieurs composés de formule I ou de ses sous-formules, tels que définis selon la revendication 1 ou 3 sont mélangés avec un ou plusieurs composés selon l'une ou plusieurs parmi les revendications 4 à 21 ou avec d'autres composés cristallins liquides.

23. Utilisation d'un milieu LC selon l'une ou plusieurs parmi les revendications 1 à 21 à des fins électro-optiques.

24. Utilisation selon la revendication 23, l'utilisation étant destinée à des verres à obturateur, des applications 3D, ou dans des affichages IPS, PS-IPS, FFS, PS-FFS, HB-FFS, U-IPS, TN, PS-TN, STN ou TN-TFT.

25. Affichage LC comprenant un milieu LC selon l'une ou plusieurs parmi les revendications 1 à 21.

26. Affichage LC selon la revendication 25, **caractérisé en ce qu'**il s'agit d'un affichage IPS, PS-IPS, FFS, PS-FFS, HB-FFS, U-IPS, TN, PS-TN, STN ou TN-TFT.
